# EUROPEAN PATENT APPLICATION

(11) **EP 1 261 164 A1**
(43) Date of publication of application: **27.11.2002**
(21) Application number: 02014215.4
(22) Date of filing: 05.09.1997
(51) Int. Cl.: H04L 7/08, H04N 5/222

(54) **Transmitter, receiver, transmission system, sending method, receiving method, and transmitting method**

(30) Priority: 05.09.1996 JP 23485896; 28.02.1997 JP 4560397; 15.07.1997 JP 18940097
(62) Divisional of application: 97939204.0
(71) Applicant: MATSUSHITA ELECTRIC INDUSTRIAL CO., LTD., Kadoma-shi, Osaka-fu (JP)
(72) Inventor: Yoshida, Takayasu, Toyono-gun, Osaka 563-02 (JP); Tanaka, Masatoshi, Ikoma-shi, Nara 630-02 (JP); Nishioka, Minoru, Kobe-shi Hyogo 658 (JP); Bannai, Tatsushi, Osaka 588 (JP); Nishino, Masakazu, Kashiwara-shi, Osaka 582 (JP)
(74) Representative: Eisenführ, Speiser & Partner

(57) **Abstract**

In the transmission apparatus of the present invention, the information amount of an input information signal is compressed by a compressing means 4 and output for every constant information unit. Plural units of the output signals of the compressing means 4 are collected, and one synchronizing signal is added thereto by a synchronizing signal adding means 5. The output signal of the synchronizing signal adding means 5 is transmitted to a transmission line 6.

In the receiving apparatus of the present invention, one synchronizing signal and plural units of compressed information signals are received as one set information unit, and the synchronizing signal is eliminated from the received signal by a synchronizing signal eliminating means 7. Compressed video signals among the output signals of the synchronizing signal eliminating means 7 are decompressed for every unit.

With the above-mentioned system, plural information signals can be included in one set information unit, whereby information signals can be transmitted efficiently.

## Description

### TECHNICAL FIELD

The present invention relates to a transmission apparatus and a receiving apparatus dealing with digital signals to transmit digital video/audio signals and the like, and to a transmission system comprising these.

### BACKGROUND ART

Hitherto, a transmission apparatus and a receiving apparatus for transmitting digital video/audio signals and the like is disclosed in Japanese Laid-open Patent Application No. Hei 2-270430.

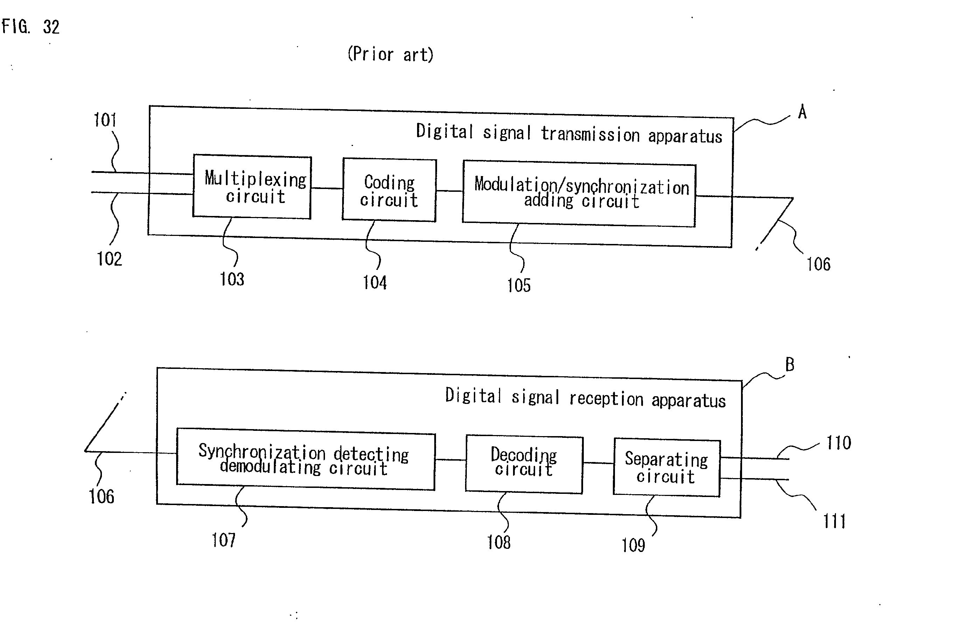

FIG. 32 is a schematic configurational view showing a transmission system using a conventional digital signal transmission apparatus and receiving apparatus. Referring to the figure, numeral 103 designates a multiplexing circuit which rearranges bit data of 16-bit length supplied to a digital audio signal input terminal 101 and bit data of plural control signals supplied to a control signal input terminal 102 in a predetermined sequence. Numeral 104 designates a coding circuit. This coding circuit 104 generates an 8-bit error detection and correction code with respect to a total of 17-bit data, and adds it to a constant area, thereby to generate a 25-bit serial data. Numeral 105 designates a modulation/synchronization adding circuit, and the above-mentioned 25-bit serial data is input thereto. When this serial data is input thereto, a parity check bit P is generated and added first by this modulation/synchronization adding circuit 105, and then biphase mark modulation is carried out, and a preamble SYNC as a synchronizing signal is added, and formatted data is out. A digital signal transmission apparatus A is composed of the terminals 101 and 102 and the circuits 103, 104 and 105.

Numeral 106 designates a transmission line, that is, a coaxial cable or an optical fiber cable, for example. Numeral 107 designates a synchronization detecting/demodulating circuit, and data transmitted via the above-mentioned transmission line 106 is input thereto. By this circuit, the synchronous preamble signal SYNC is detected and a clock is generated from it; demodulation is carried out by using this clock. The demodulated data undergoes error detection by using a parity check bit P. The numeral 108 designates a decoding circuit. This decoding circuit 108 uses error correction code check to correct errors occurred on the transmission line 106, or outputs a flag for carrying out a process, such as interpolation, as to an error which can be detected but cannot be corrected.

Numeral 109 designates a separating circuit, whereby a digital audio sample and a control signal are separated from each other, and are output from respective output terminals 110 and 111. The synchronization detecting/demodulating circuit 107, the decoding circuit 108, the separating circuit 109 and the output terminals 110 and 111 constitute a digital signal receiving apparatus B.

In the above-mentioned transmission system of the prior art, a plurality of information signals cannot be included in one set information unit, whereby information signals cannot be transmitted efficiently.

### DISCLOSURE OF INVENTION

An object of the present invention is to carry out efficiently transmission of an information signal by using a transmission apparatus, a transmission method, a receiving apparatus, a receiving method, a transmission system and a transmission method, which have been improved.

In order to solve the above-mentioned problem, in the transmission method and apparatus of the present invention, a plurality of information are included in one set information unit. For this purpose, the transmission method and the apparatus respectively comprise a compressing step and compressing means wherein the information amount of an inputted information signal is compressed and output for every constant information unit, a synchronizing signal adding step and synchronizing signal adding means wherein plural units of the output signals of the above-mentioned compressing means are collected, and one synchronizing signal is added thereto, and a sending step and a transmission section wherein the output signal of the above-mentioned synchronizing signal adding means is sent.

Furthermore, the receiving method and the receiving apparatus of the present invention are configured so as to respectively comprise a synchronizing signal eliminating step and synchronizing signal eliminating means wherein one synchronizing signal and plural units of compressed information signals are received as one set information unit, and the synchronizing signal is eliminated from the received signal, and a decompressing step and decompressing means wherein compressed video signals in the output signal of the above-mentioned synchronizing signal eliminating means are decompressed for every unit.

The above-mentioned transmission method, receiving method, transmission apparatus and receiving apparatus are properly combined to constitute a transmission method and a transmission system.

In the present invention, when the term "time" is used to specially designate "time of day," the term "time of day," "time point," "timing," "position of time" or "time position" are used. On the other hand, when the term "time" is used to specially designate "length of time," the term "length of time," "time length," "time period" or "period of time" are used.

### BRIEF DESCRIPTION OF THE DRAWINGS

FIG. 1 is a view showing a transmission system in accordance with a first embodiment of the present invention, and showing a transmission apparatus and a receiving apparatus constituting it;
FIG. 2 is a view showing data formats for one set information unit in the transmission system in accordance with the first embodiment of the present invention;
FIG. 3 is a view showing a transmission system in accordance with a second embodiment of the present invention, and showing a transmission apparatus and a receiving apparatus constituting it;
FIG. 4 is a view showing data formats for one set information unit in the transmission system in accordance with the second embodiment of the present invention;
FIG. 5(A) is a general view showing the case wherein an error generates at a position in a noncompression system;
FIG. 5(B) is a general view showing the case wherein an error is generated at a position in a compression system, and the square area of a pixel is treated as an area;
FIG. 5(C) is a general view showing the case wherein an error is generated at a position in a compression system, and the one-line area of a pixel is treated as an area;
FIG. 5(D) is a general view showing the case wherein an error is generated at a position in a compression system, and the whole screen area is treated as one area;
FIG. 6 is a view showing a transmission system in accordance with a third embodiment of the present invention, and showing a transmission apparatus and a receiving apparatus constituting it;
FIG. 7 is a view showing data formats for one set information unit in the transmission system in accordance with the third embodiment of the present invention;
FIG. 8 is a view showing a transmission system in accordance with a fourth embodiment of the present invention, and showing a transmission apparatus and a receiving apparatus constituting it;
FIG. 9 is a view showing data formats for one set information unit in the transmission system in accordance with the fourth embodiment of the present invention;
FIG. 10 is a view showing a transmission system in accordance with a fifth embodiment of the present invention, and showing a transmission apparatus and a receiving apparatus constituting it (in a Time Stamp adding means 28, in the case that the time stamp of an input signal inputted to an ECC encoder 12 is treated);
FIG. 11 is a view showing data formats for one set information unit in the transmission system in accordance with the fifth embodiment of the present invention;
FIG. 12 is a view showing a transmission system in accordance with a sixth embodiment of the present invention, and showing a transmission apparatus and a receiving apparatus constituting it (in a Time Stamp adding means 39, in the case that the time stamp of an output signal output by an ECC encoder 12 is treated);
FIG. 13 is a view showing data formats for one set information unit in the transmission system in accordance with the sixth embodiment of the present invention;
FIG. 14 is a view showing a transmission system in accordance with a seventh embodiment of the present invention, and showing a transmission apparatus and a receiving apparatus constituting it (in a Time Stamp adding means 28, in the case that the time stamp of an input signal inputted to an ECC encoder 12 is treated);
FIG. 15 is a view showing data formats for one set information unit on the sending side of the transmission system in accordance with the seventh embodiment of the present invention;
FIG. 16 is a view showing a transmission system in accordance with an eighth embodiment of the present invention, and showing a transmission apparatus and a receiving apparatus constituting it (in a Time Stamp adding means 39, in the case that the time stamp of an output signal output by an ECC encoder 12 is treated);
FIG. 17 is a view showing data formats for one set information unit on the receiving side of the transmission system in accordance with the eighth embodiment of the present invention;
FIG. 18 is a view showing other data formats for one set information unit in the transmission system in accordance with the seventh or eighth embodiment of the present invention;
FIG. 19 is a view showing a transmission system in accordance with a ninth embodiment of the present invention, and showing a transmission apparatus and a receiving apparatus constituting it (in a Time Stamp adding means 28, in the case that the time of an input signal inputted to an ECC encoder 12 is treated);
FIG. 20 is a view showing data formats for one set information unit on the sending side of the transmission system in accordance with the ninth embodiment of the present invention;
FIG. 21 is a view showing a transmission system in accordance with a tenth embodiment of the present invention, and showing a transmission apparatus and a receiving apparatus constituting it (in a Time Stamp adding means 39, in the case that the time stamp of an output signal output by an ECC encoder 12 is treated);
FIG. 22 is a view showing data formats for one set information unit on the receiving side of the transmission system in accordance with the tenth embodiment of the present invention;
FIG. 23 is a view showing a transmission system in accordance with an eleventh embodiment of the present invention, and showing a transmission apparatus and a receiving apparatus constituting it;
FIG. 24 is a view showing data formats; FIG. 24(A) is a view showing a data format of a compressed signal in accordance with the eleventh embodiment of the present invention;
FIG. 24(B) is a view showing a data format of a noncompressed signal in accordance with the eleventh embodiment of the present invention;
FIG. 25 is a view showing data formats for one set information unit in the transmission system in accordance with the twelfth embodiment of the present invention;
FIG. 26 is a view showing the relationship between the length of the generally-used 5C2V coaxial cable and its attenuation amount;
FIG. 27 is a view showing a transmission apparatus and a receiving apparatus used in a thirteenth embodiment of the present invention;
FIG. 28 is a view showing the detailed content of jitter used in the thirteenth embodiment of the present invention;
FIG. 29 is a view showing the error correction ability of the Reed Solomon code;
FIG. 30 is a view showing a transmission system in accordance with a fourteenth embodiment of the present invention, and showing a transmission apparatus and a receiving apparatus constituting it;
FIG. 31 is a view showing data formats for one set information unit on the receiving side of the transmission system in accordance with the fourteenth embodiment of the present invention; and
FIG. 32 is the view showing the conventional transmission system.

### THE BEST MODE FOR EMBODYING THE INVENTION

The best embodiments of the present invention will be described below referring to the drawings.

### [First embodiment]

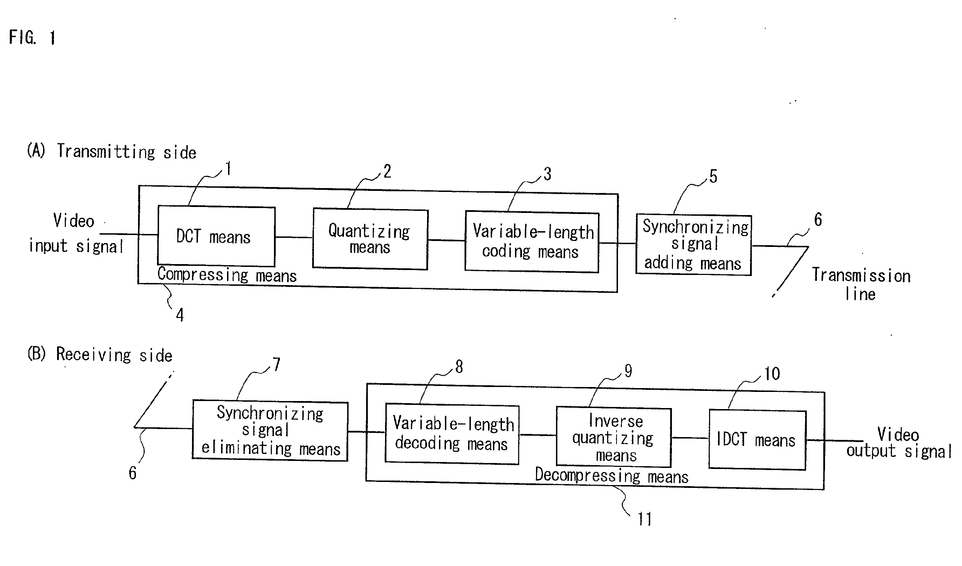

FIG. 1 is a first embodiment of the present invention. It shows a transmission system and transmission apparatus and receiving apparatus therefore.

The first embodiment shown in FIG. 1 is fundamental in a second and subsequent embodiments which are modifications or extensions thereof.

The upper half of FIG. 1 is a part of the transmission apparatus for carrying out a transmission method. In the transmission apparatus and the transmission method in accordance with the present embodiment, a discrete cosine transform (DCT) means 1 subjects a digital video input signal, which has been input, to discrete cosine transform (DCT) (transform of a space coordinate value into a frequency), a kind of orthogonal transform, for every DCT block used as a unit of compression processing (1 DCT block is 64 bytes in the present embodiment), and then performs output. The pixel value (brightness value for example) of the video signal randomly distributed before the discrete cosine transform has a property wherein energy distribution concentrates on low-frequency components after the transform. By using this property, operation is made to eliminate high-frequency terms after the transform by the discrete cosine transform means, thereby to carry out information compression. A quantilizing means 2 is a portion for carrying out quantilization (word length truncation) of the output signal of the discrete cosine transform means 1, which has been input, for every block; and carrying out operations to divide the respective coefficients of the output signal of the discrete cosine transform means 1 with a divider (corresponding to a quantilization step in this case) and to discard (rounding) remainders. A variable-length coding means 3 is a portion for converting the output signal of the quantilizing means 2, which has been input, into a variable-length code. This variable-length coding means 3 converts the output signal of the quantilizing means 2 into variable-length codes which have been determined beforehand on the basis of occurrence probability or the like and whose unit length is not constant.

The above-mentioned discrete cosine transform means 1, quantilizing means 2 and variable-length coding means 3 constitute a compressing means 4 which compresses the amount of information of the digital video signal having been input and performs output for every block which is a constant information unit. A synchronizing signal adding means 5 collects plural blocks of output signals of the variable-length coding means, which has been input, adds a synchronizing signal thereto so that the synchronizing signal added to the plural blocks of video signals is made to a set information unit, and outputs (transmission) it to a coaxial cable 6 used as a transmission line.

The lower half of FIG. 1 is a part of the receiving apparatus. In the receiving apparatus and the receiving method in accordance with the present embodiment, a synchronizing signal eliminating means 7 eliminates the synchronizing signal from one set information unit of signal having been input (reception). A variable-length decoding means 8 decodes the output signal (a variable-length code) of the synchronizing signal eliminating means 7, which has been input, into a digital signal obtained before variable-length coding. By this variable-length decoding means 8, the output signal (the variable-length code) of the synchronizing signal eliminating means 7 is decoded into a digital video signal before variable-length coding in accordance with a rule predetermined on the basis of occurrence probability.

An inverse quantilizing means 9 inversely quantilizes (recovers the word length) the output signal of the variable-length decoding means 8, which has been input, for every block. This inverse quantilizing means 9 inversely quantilizes the output signal of the variable-length decoding means 8 for every block. An inverse discrete cosine transform (IDCT) means 10 carries out inverse discrete cosine transform (transform of a frequency into a space coordinate value) for the output signal of the inverse quantilizing means 9, which has been input, and performs output. The variable-length decoding means 8, the inverse quantilizing means 9 and the inverse discrete cosine transform means 10 constitute a decompressing means 11.

In the transmission apparatus or the transmission method in accordance with the first embodiment, one synchronizing signal and plural blocks of video signals, i. e., information signals, each block being a constant information unit, are collected and output (transmission) as one set information unit. In the transmission apparatus or the transmission method in accordance with the present embodiment, a digital video signal is used as an information signal, and the information amount of this digital video signal is compressed.

In the receiving apparatus and the receiving method in accordance with the present embodiment, one synchronizing signal and plural blocks of video signals, i. e., information signals, each block being a constant information unit, are collected and inputted (reception) as one set information unit. In the receiving apparatus or the receiving method in accordance with the present embodiment, a digital video signal is used as an information signal, and this digital video signal is decompressed.

The transmission apparatus, transmission method, receiving apparatus, receiving method and transmission line therebetween constitute a transmission system or a transmission method.

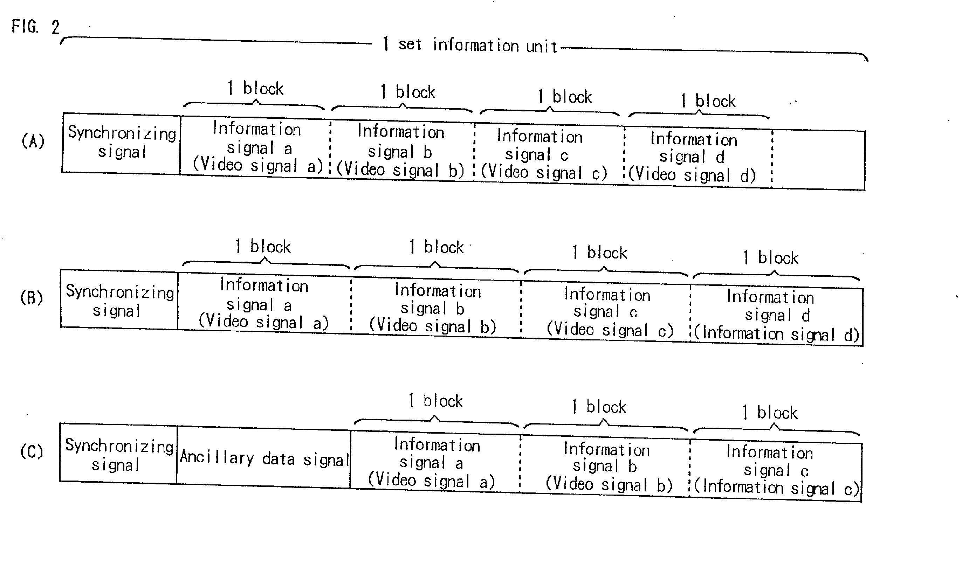

Data formats sent and received by the above-mentioned transmission system, transmission method, transmission apparatus, transmission method, receiving apparatus and receiving method will be described below referring to FIG. 2.

FIG. 2 is a schematic view showing data formats in one set information unit. In FIG. 2(A), an information signal a (a video signal a), an information signal b (a video signal b), an information signal c (a video signal c) and an information signal d (a video signal d) are each obtained by compressing and block-forming the information amount of a video input signal, and each of the information signals a, b, c and d represents one block of information signal. These plural blocks of information signals are further collected, and one synchronizing signal (shown at the left end in the figure) is added thereto to form one set information unit of signal. In the example shown in FIG. 2(A), one synchronizing signal and four information signals do not occupy the whole of one set information unit; instead of this, it may be possible that one synchronizing signal and a predetermined number of information signals occupy the whole of one set information unit. Furthermore, as shown in FIG. 2(C), it may be possible to have a configuration wherein "a synchronizing signal, information signals and other necessary information, not a video signal itself, used as an ancillary data signal (shown at the left end in FIG. 2(C)) are included in one set information unit, and transmission and reception are carried out for each set information unit."

The present invention is characterized to be configured such that "one synchronizing signal and plural blocks of compressed information signals are used as one set information unit." As a result, many information signals can be included in one set information unit, and signal transmission can be carried out efficiently.

In the present embodiment, the discrete cosine transform means 1, the quantilizing means 2 and the variable-length coding means 3 constitute the compressing means 4; however, another type of configuration may be used, if information signals can be compressed.

Furthermore, in the present embodiment, the coaxial cable 6 is used as a transmission line; however, other wire types using optical fibers, parallel feeders and other conductors, as well as wireless types may be used.

Moreover, video signals are used as information signals; however, the same effect can be obtained by using other information signals.

### [Second embodiment]

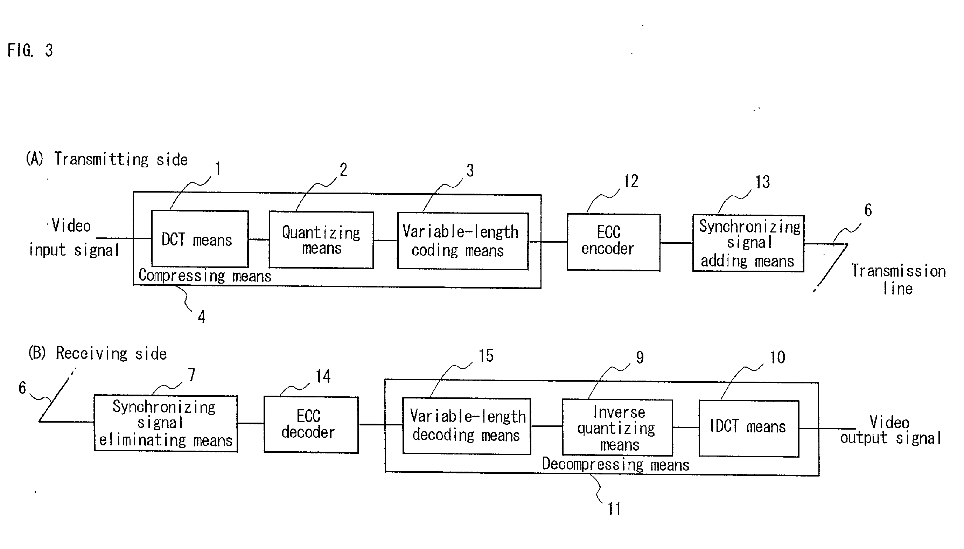

FIG. 3 is a view showing a transmission system and its transmission apparatus and receiving apparatus in accordance with a second embodiment of the present invention. Those components corresponding to the components having already been described in the explanation of the preceding embodiment are designated by the same reference signs, and overlap explanations are omitted.

This second embodiment is a development from the first embodiment; an error correction code is added to the signal transmitted from the transmission apparatus section to the receiving apparatus section to carry out error correction.

Referring to FIG. 3, an ECC (error correction code) encoder 12 is to add an error correction code (hereafter simply referred to as "ECC") to each block of video signal, that is, a constant information unit of the output signal of the variable-length coding means 3, which has been input; on the basis of this error correction code, the receiving apparatus detects or corrects code errors. In the present embodiment, the Reed Solomon Code is used as an error correction code. A synchronizing signal adding means 13 collects plural blocks of the output signals of the ECC encoder 12, which has been input, and adds a synchronizing signal thereto so that the synchronizing signal added to the plural blocks of video signals is output (transmission) as a set information unit, to the coaxial cable 6 used as a transmission line.

An ECC (error correction code) decoder 14 detects and corrects errors in video signals coded on the basis of the error correction code for each block used as a constant information unit of the output signal of the synchronizing signal eliminating means 7, which has been input. A variable-length decoding means 15 receives the output signal (variable-length code) of the ECC decoder 14, which has been input, and decodes the signal into a digital signal obtained before variable-length coding. The variable-length decoding means 15 decodes the output signal (variable-length code) of the ECC decoder 14 into a digital video signal obtained before variable-length coding in accordance with the rule predetermined on the basis of occurrence probability.

In the transmission apparatus or transmission method of the second embodiment, the apparatus comprises a compressing means 4 which compresses the information amount of a video signal, i. e., an information signal having been input, and outputs every constant information unit, the ECC encoder 12 which collects n units (n is a natural number not less than 1; n = 1 in the present embodiment) of the output signals of the compressing means 4 and add an error correction code, and the synchronizing signal adding means 13 which collects plural units of the output signals of the ECC encoder 12 and add one synchronizing signal thereto; the output signal is sent from the synchronizing signal adding means 13. Furthermore, in summary, the sending in accordance with the second embodiment is configured that an error correction signal is added to every n units (n is a natural number not less than 1; n = 1 in the present embodiment) of information signals (one block of video signal in the present embodiment) to form a small set information unit, and that one synchronizing signal and a plurality of the small set information units of information signals are collected as one set information unit and sent.

In the receiving apparatus or receiving method of the second embodiment, the unit comprises: the synchronizing signal eliminating means 7, which receives one synchronizing signal and plural units of video signals which are compressed information signals as one set information unit and eliminates the synchronizing signal from the received signals; the ECC decoder 14, which carries out video signal error correction for every small set information unit of the output signal of the synchronizing signal eliminating means 7, to which an error correction signal is added, on the basis of the error correction code; and a decompressing means 11, which decompresses the compressed video signals of the output signal of the ECC decoder 14 for every unit.

Furthermore, in summary, the reception in accordance with the second embodiment is configured that one synchronizing signal and plural constant information units of information signals are collected and received as one set information unit, and that predetermined units of information signals (one block of video signal in the present embodiment) are subjected to signal error correction for every unit on the basis of the error correction code added to every unit (every block in the present embodiment).

The transmission apparatus, transmission method, receiving apparatus, receiving method and transmission line therebetween constitute a transmission system or a transmission method.

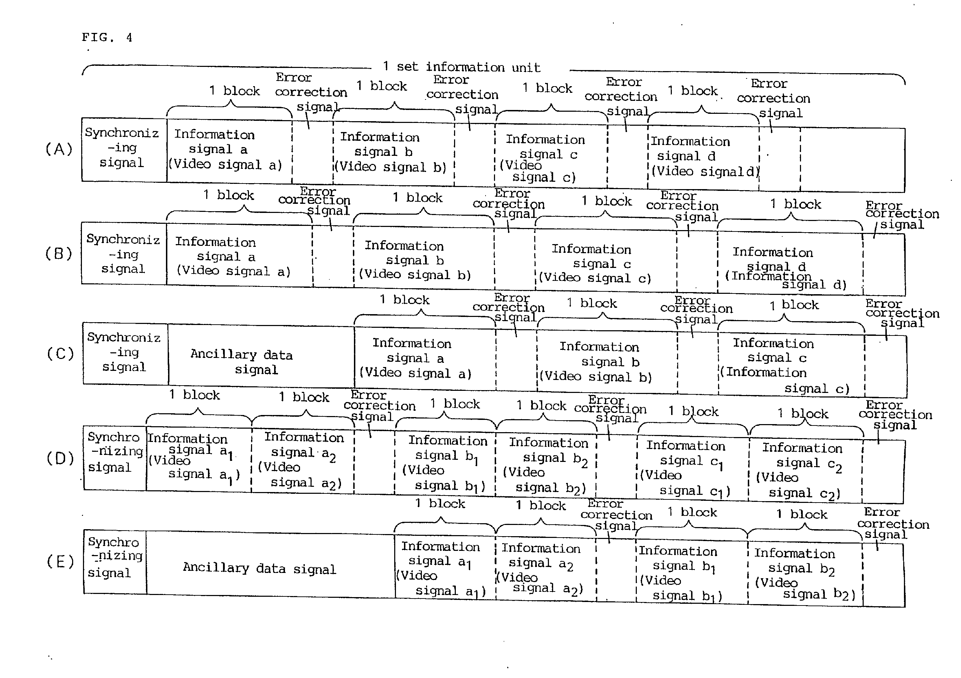

Data formats sent and received by the above-mentioned transmission system, transmission method, transmission apparatus, transmission method, receiving apparatus and receiving method will be described below referring to FIG. 4.

FIG. 4 is a view showing data formats in one set information unit. In FIG. 4(A), an information signal a (a video signal a), an information signal b (a video signal b), an information signal c (a video signal c) and an information signal d (a video signal d) are obtained by compressing and block-forming the information amount of a video input signal, and each represents one block of information signal. An error correction signal (error correction code) is added to each block of information signal, and plural blocks of the information signals with added error correction signals are collected, and one synchronizing signal is added thereto to form a set information unit of signal. In FIG. 4(A), the synchronizing signal and the information signals with the added error correction signals do not occupy the whole of one set information unit; but, the one synchronizing signal and the information signals with the added error correction signals may occupy the whole of one set information unit as shown in FIG. 4(B). Furthermore, as shown in FIG. 4(C), a synchronizing signal, information signals, an error correction signal and an ancillary data signal may be included in a set information unit, and may be sent and received. The ancillary data signal itself is not a video signal, but a signal for sending required information.

With this configuration, error generation frequency is reduced; in the case that a signal is output (transmission) without compression (hereinafter referred to as "in the case that a noncompression system is used"), it is difficult to visually find few errors. However, in the case that an information signal is compressed and output (transmission) (hereinafter referred to as "in the case that a compression system is used"), nonnegligible errors may generate. According to the present embodiment, the frequency of generating such errors can be reduced.

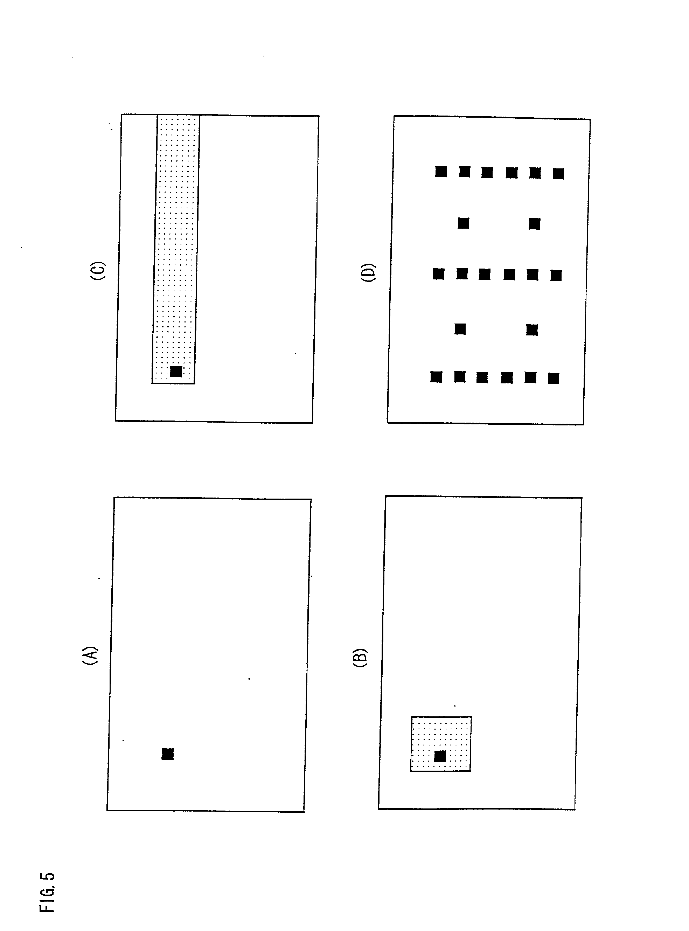

When an error generates at a position in one area for example, the error position is a point in a noncompression system as shown in FIG. 5(A), and it is difficult to visually notice this error. However, in a compression system, the error position extends to the whole of one area as shown in FIG. 5(C) to FIG. 5(D), and becomes nonnegligible. FIG. 5(A) is a general view showing a case wherein an error generates at a position in a noncompression system. FIG. 5(B) is a general view showing a case wherein an error generates at a position in a compression system, and the square area of a pixel is treated as an area. FIG. 5(C) is a general view showing a case wherein an error generates at a position in a compression system, and the area of one-line of a pixel is treated as an area. FIG. 5(D) is a general view showing a case wherein an error generates at a position in a compression system, the whole screen area being treated as an area. In all the figures, a black point represents a position where an error generates, a shaded portion (half-tone meshed part) represents an area wherein an image is affected by the error generation portion (black square spot part).

In a coaxial cable or an optical cable which is representative of a signal transmission system via wires (hereinafter referred to as "wire system") in particular, it is generally said that error generation frequency in a transmission line is 1 × 10⁻¹²; it has conventionally been regarded that no visual error generates in the noncompression system (error-free). However, in the second embodiment, by considering an effect of one error on other areas just as in the above-mentioned case wherein an error generates in a compressed signal, error generation frequency is lowered further; whereby if an error should generate, the influence of the error can be reduced to a practically negligible level.

Incidentally, in the present embodiment, an error correction code is added to each block of video signal, however, the same effect can be obtained even when an error correction code is added to every plural units of video signals, for example, every two blocks of information signals (two units, i. e., n = 2) as shown in FIG. 4(D) and FIG. 4(E).

### [Third embodiment]

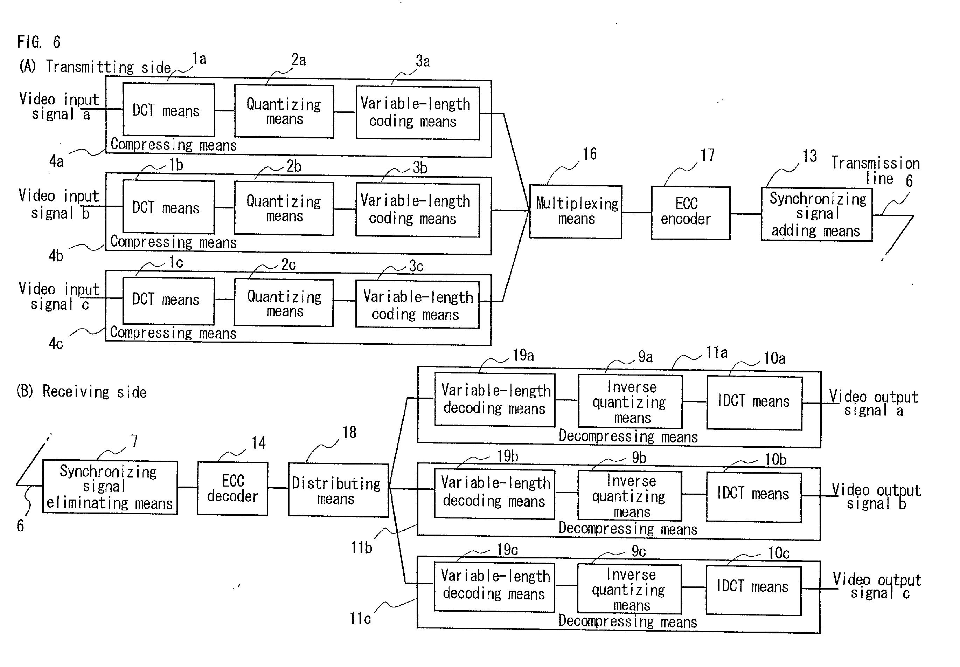

FIG. 6 is a view showing a transmission system, a transmission method, a transmission apparatus, a transmission method, a receiving apparatus and a receiving method in accordance with a third embodiment of the present invention. Those components corresponding to the components having already been described in the explanation of the preceding embodiment are designated by the same reference signs, and overlap explanations are omitted.

This third embodiment is a development from the first embodiment; a multiplexing means for a plurality of compressing means is provided on the sending side, and a distributing means and a plurality of decompressing means are provided on the receiving side. With this configuration, a plurality of compressed signals are time-divided and multiplexed and then transmitted via a transmission system.

The upper half portion of FIG. 6 designates a part of the transmission apparatus. In the transmission apparatus and transmission method in accordance with the present embodiment, the numerals 1a, 1b and 1c respectively designate discrete cosine transform means identical to those described in FIG. 1 and FIG. 3; the numerals 2a, 2b and 2c respectively designate quantizing means in the same way; the numerals 3a, 3b and 3c respectively designate variable-length coding means in the same way; by these means, compressing means 4a to 4c are formed respectively. The numeral 16 designates a multiplexing means which temporarily stores each of the output signals of the variable-length coding means 3a, 3b and- 3c, sequentially selects the output signals of the variable-length coding means 3a, 3b and 3c, and outputs the signals time-sequentially. The numeral 17 designates an ECC (error correction code) encoder which adds an error correction code to each block of video signal, a constant information unit, from the output signal of the multiplexing means 16; the receiving apparatus detects or corrects code errors on the basis of the error correction code. The present embodiment uses the Reed-Solomon code as an error correction code.

The lower half portion of FIG. 6 designates a part of the receiving apparatus. In the receiving apparatus and receiving method in accordance with the present invention, the numerals 19a, 19b and 19c respectively designate variable-length decoding means identical to those described in FIG. 1 and FIG. 3; the numerals 9a, 9b and 9c respectively designate inverse quantizing means in the same way; the numerals 10a, 10b and 10c respectively designate inverse discrete cosine transform means in the same way; by these means, decompressing means 11a, 11b and 11c are formed respectively. The numeral 18 designates a distributing means for sequentially distributing the output signal of the ECC decoder 14, having been input time-sequentially, in accordance with the same rule as that selected by the multiplexing means 16. The numerals 19a to 19c designate variable-length decoding means which decode the signal (a variable-length code) having been input from the distributing means 18 into a digital signal obtained before variable-length coding in the transmission apparatus. The variable-length decoding means 19a to 19c decode the output signal (variable-length code) of the distributing means 18 into a digital video signal obtained before variable-length coding in accordance with the rule determined on the basis of predetermined occurrence probability.

In the transmission apparatus or a transmission method in accordance with the third embodiment, the plural compressing means 4a, 4b and 4c which compress the information amounts of video signals having been input, and output every block thereof, i. e., a constant information unit, the multiplexing means 16 which selects every block of the output signal of each of these plural compressing means 4a to 4c and output them time-sequentially, the ECC encoder 17 which collects n units (n is a natural number not less than 1) of the output signal of the multiplexing means 16, and adds an error correction signal thereto, and a synchronizing signal adding means 13 which collects plural units of the output signals of the ECC encoder 17 and adds a synchronizing signal thereto are used to send the output signal of the above-mentioned synchronizing signal adding means 13. With the transmission apparatus and the transmission method, plural kinds of video signals used as information signals can be sent.

In the receiving apparatus or receiving method of the third embodiment, the unit comprises a synchronizing signal eliminating means 7 which receives one synchronizing signal and plural units of compressed video signals as one set information unit, and eliminates the synchronizing signal from the received signals, the ECC decoder 14 which carries out signal error correction for every unit of the output signal of the synchronizing signal eliminating means 7, to which an error correction signal is added, on the basis of the error correction code, the distributing means 18 for distributing the output signal of the ECC decoder 14 in accordance with a multiplexed rule, and decompressing means 11a to 11c which decompress each information unit of video signal, having a compressed amount of information, of the output signal of the distributing means 18 to receive signals. The receiving apparatus and the receiving method can receive plural kinds of video signals used as information signals and can decode their signals.

The transmission apparatus, transmission method, receiving apparatus, receiving method and transmission line therebetween constitute a transmission system or a transmission method.

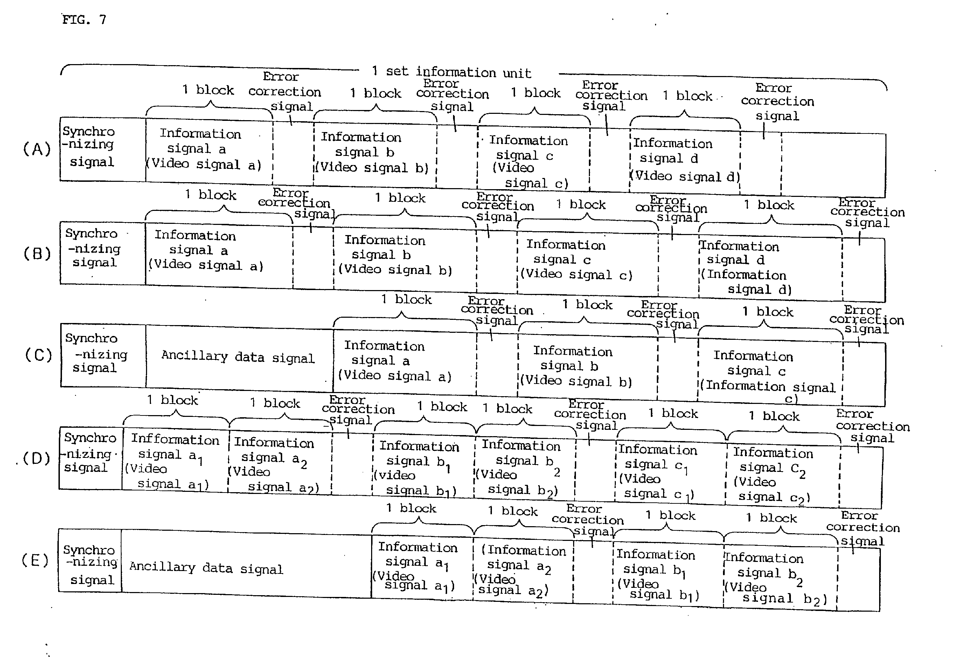

Data formats sent and received by the above-mentioned transmission system, transmission method, transmission apparatus, transmission method, receiving apparatus and receiving method will be described below referring to FIG. 6 and FIG. 7.

In the transmission apparatus or transmission method in accordance with the third embodiment, digital video input separate signals a to c are inputted to the compressing means 4a to 4c in parallel respectively, the information amounts of the input signals a to c are compressed respectively, and each of them is output block by block. The respective output signals of the compressing means 4a to 4c are each stored temporarily by the multiplexing means 16, sequentially selected block by block, and output to the ECC encoder 17 time-sequentially. An error correction code is added to every n units of blocks of the output signals of the multiplexing means 16 by the ECC encoder 17, and an synchronizing signal is added by a synchronizing signal adding means 13.

In the receiving apparatus or receiving method of the third embodiment, the synchronizing signal is eliminated from the received signal by the synchronizing signal eliminating means 7, and error correction is carried out on the basis of the error correction code at the ECC decoder 14. The output signal of the ECC decoder 14 is distributed by the distributing means 18 to the decompressing means in accordance with the rule selected by the multiplexing means 16, and is input to the decompressing means 11a to 11c in parallel respectively. As a result, the output signal of the distributing means 18 is decompressed into digital video output signals a to c.

The formats of data, to be sent and received by the transmission system or the transmission method, or the transmission apparatus or the transmission method and the receiving apparatus or the receiving method constituting the transmission system or the transmission method, will be described below referring to FIG. 7.

FIG. 7 is a view showing data formats for one set information unit. In FIG. 7(A), an information signal a (a video signal a), an information signal b (a video signal b) and an information signal c (a video signal c) are obtained by compressing the information amounts of the video input signal a, the video input signal b and the video input signal c and dividing them into plural constant-length blocks, and each represents one block of information signal. An error correction signal (error correction code) is added to each block of information signal, and plural blocks are collected, and one synchronizing signal is added thereto to form a set information unit of signal.

In the example shown in FIG. 7(A), one synchronizing signal and information signals with added error correction signals do not occupy the whole of one set information unit; however, the synchronizing signal and the information signals with the added error correction signals may occupy the whole of one set information unit as shown in a modified example shown in FIG. 7(B).

Furthermore, as shown in another modified example shown in FIG. 7(C), one synchronizing signal, information signals and one error correction signal, and furthermore one ancillary data signal may be included in a set information unit, and may be sent and received. The ancillary data signal itself is not a video signal but a necessary information signal.

With this configuration, plural information (signal) sources can be included in one set information unit, whereby signal transmission can be carried out efficiently.

The multiplexing means 16 is configured to add an identification signal for identifying that a video input signal corresponds to a digital video input signal a to c, for every block which is a predetermined unit; and the distributing means 18 may be configured to distribute the video signals a to c on the basis of the identification signal added to every block by the multiplexing means 16.

In the examples of FIG. 7(A) to 7(C), an error correction code is added to every block (unit) of information signal; however, apart from this, even when an error correction code is added to every plural blocks (plural units) of information signals, such as every two blocks (two units) of information signals for example, as shown in FIG. 7(D) and FIG. 7(E), the same effect can be obtained.

In addition, examples wherein an error correction code in accordance with the type of the second embodiment is used are shown in the present embodiment; however, apart from the examples, even in the case of the type of the first embodiment wherein no error correction code is used, the same effect can be obtained.

### [Fourth embodiment]

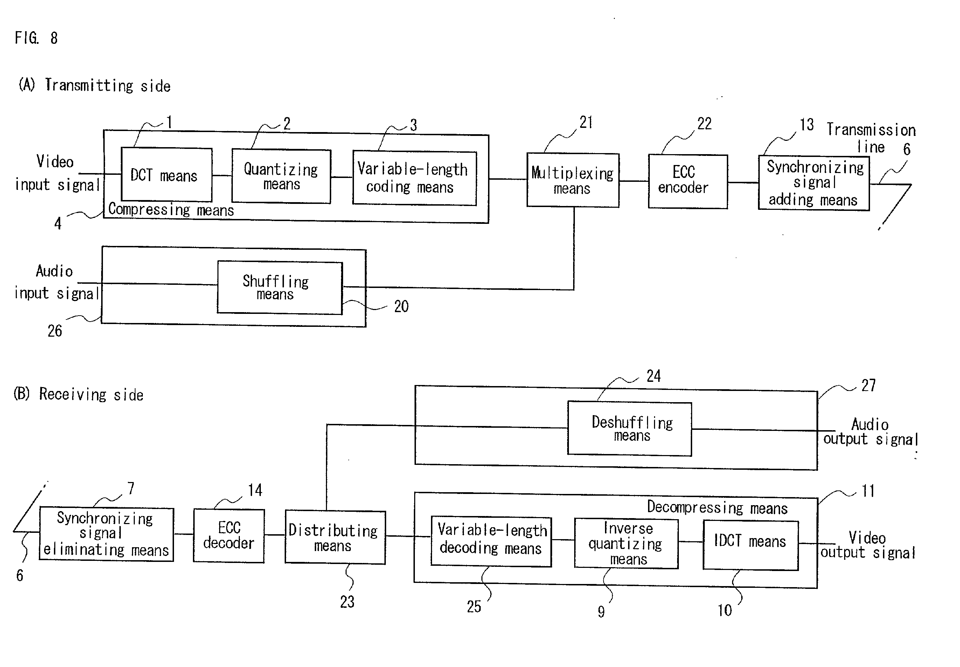

FIG. 8 is a view showing a transmission system, a transmission method, a transmission apparatus, a transmission method, a receiving apparatus and a receiving method in accordance with a fourth embodiment of the present invention. Those components corresponding to the components having already been described in the explanation of the preceding embodiment are designated by the same reference signs, and overlap explanations are omitted.

The fourth embodiment is a development from the first embodiment; the sending side can send compressed information and noncompressed information by a shuffling method, and on the other hand, the receiving side can receive compressed information and noncompressed information by using a deshuffling method.

Referring to FIG. 8, a shuffling means 20 changes the time-series arrangement of one frame of digital audio input signal within the one frame unit, and outputs the signal; this forms a noncompressing portion 26. A multiplexing means 21 temporarily stores the output signal of the variable-length coding means 3 and the output signal of the shuffling means 20, having been input, makes selection sequentially, and outputs in series.

The distributing means 23 distributes the output signal of the ECC decoder 14 to a deshuffling means 24 or a decompressing means 11 in accordance with a rule selected by the multiplexing means 21. The deshuffling means 24 is a means for returning the output signal of the distributing means 23, having been input, i. e., one frame of digital audio input signal to audio data having a changed time-series arrangement within the one frame; this constitutes a nondecompressing portion 27.

In other words, the transmission apparatus or transmission method in accordance with the fourth embodiment comprises a compressing means 4 which compresses the information amount of a video signal, i. e., an information signal having been input, and outputs the signal for every constant information unit, the noncompressing portion 26 which outputs an audio signal, i. e., an information signal having been input, for every constant information unit without compression, the multiplexing means 21 which selects the output signal of the compressing means 4 and the output signal of the noncompressing portion 26 for every block, i. e., a constant information unit, and outputs in series, an ECC encoder 22 which collects n units (n is a natural number not less than 1) of the output signals of the multiplexing means 21 and adds an error collection signal, and a synchronizing signal adding means 13 which collects plural blocks of the output signals of the ECC encoder 22 and adds one synchronizing signal thereto. A set information unit of the output signal being output from the synchronizing signal adding means 13 is sent to an output transmission line. The sending side in accordance with the present embodiment is characterized in that blocks of compressed information signals, each block being a constant information unit having a compressed amount of information, and blocks of uncompressed information signals, each block being a constant information unit having a noncompressed amount of information are both included in a set information unit of signal to be output.

In the receiving apparatus or receiving method in accordance with the fourth embodiment, one synchronizing signal, plural blocks of compressed information signals and plural blocks of noncompressed information signals are received as one set information unit. The receiving apparatus comprises a synchronizing signal eliminating means 7 which eliminates the synchronizing signal from one set information unit of signal received, the ECC decoder 14 which carries out signal error correction on the basis of an error correction signal for every unit of the output signal of the synchronizing signal eliminating means 7, to which the error correction signal is added, a distributing means 23 which distributes the output signal of the ECC decoder 14 in accordance with a multiplexed rule, the decompressing means 11 which decompresses every unit of the compressed information signal of the output signal from the distributing means 23, and the nondecompressing portion 27 which outputs noncompressed information signals, i. e., audio signals of the output signal from the distributing means 23. The receiving side in accordance with the present embodiment is characterized in that the receiving side receives the set information unit of signal to be received which includes blocks of compressed information signals, each block having a constant information unit with the amount of information compressed, and blocks of noncompressed information signals, each block having a constant information unit with the amount of information noncompressed, and that their information signals are obtained, decoded and taken out.

The transmission apparatus, transmission method, receiving apparatus, receiving method and transmission line therebetween constitute a transmission system or a transmission method.

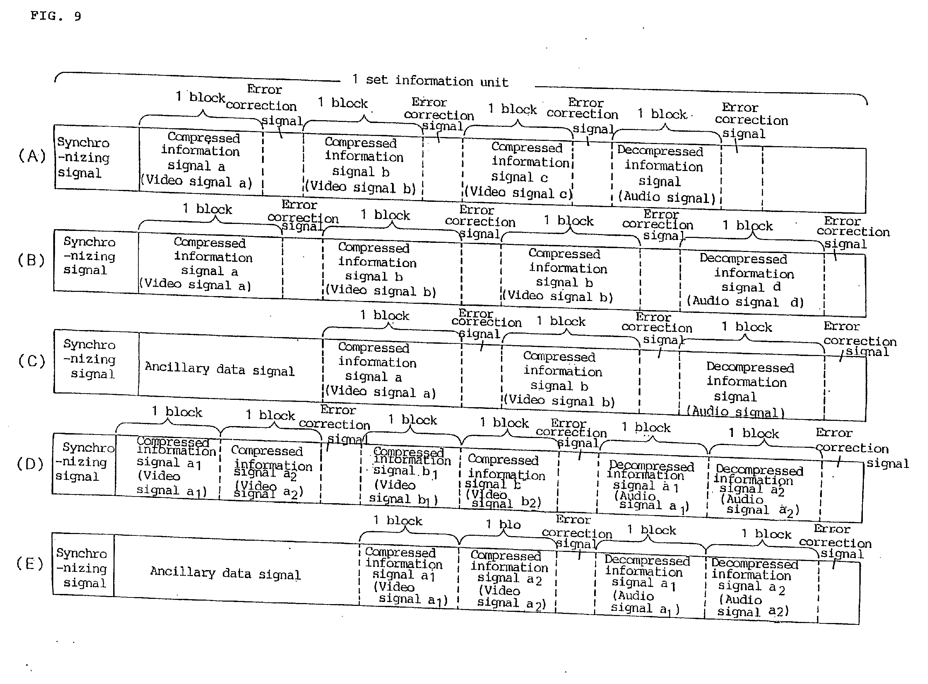

Data formats sent and received by the above-mentioned transmission system, transmission method, transmission apparatus, transmission method, receiving apparatus and receiving method will be described below referring to FIG. 8 and FIG. 9.

In the transmission apparatus or transmission method in accordance with the fourth embodiment, the digital video input signal is input to the compressing means 4, and the amount of information is compressed. On the other hand, the digital audio input signal is output from the shuffling means without compression of the amount of information. The output signals of the compressing means 4 and the shuffling means 20 are temporarily stored by the multiplexing means 21, sequentially selected, and output in series, i. e, time-sequentially to the ECC encoder 22. An error correction code is added to the output signal of the multiplexing means 21 by the ECC encoder 22; furthermore, a synchronizing signal is added by the synchronizing signal adding means 13.

In the receiving apparatus or receiving method in accordance with the fourth embodiment, the synchronizing signal is eliminated from the received signal by the synchronizing signal eliminating means 7, and error correction of the signal is carried out by the ECC decoder 14 on the basis of the error correction code. The output signal of the ECC decoder 14 is distributed to the decompressing means 11 or the deshuffling means 24 by the distributing means 23 in accordance with a rule selected by the multiplexing means 21, and input to the decompressing means 11 or the deshuffling means 24 in parallel. As a result, the video signal of the output signal of the distributing means 23 is decompressed and becomes a digital video output signal, and the audio signal is not decompressed and becomes a digital audio output signal.

Data formats sent and received by the above-mentioned transmission system, transmission method, transmission apparatus, transmission method, receiving apparatus and receiving method will be described below referring to FIG. 9.

FIG. 9 is a view showing data formats for one set information unit. In FIG. 9(A), a compressed information signal a (a video signal a), a compressed information signal b (a video signal b) and a compressed information signal c (a video signal c) are signals obtained by compressing and block-forming the information amounts of the video input signals; each represents one block of information signal. On the other hand, the noncompressed signal (audio signal) is a signal wherein the audio input signal is noncompressed and blocked, that is, one block of information signal. An error correction signal (error correction code) is added to each block of information signal, and plural blocks are collected, and one synchronizing signal is added thereto to form a set information unit of signal. In FIG. 9(A), one synchronizing signal and information signals with added error correction signals do not occupy the whole of one set information unit. Apart from FIG. 9(A), the synchronizing signal and the information signals with the added error correction signals may occupy the whole of one set information unit as shown in FIG. 9(B). Furthermore, as shown in FIG. 9(C), one synchronizing signal, information signals, one error correction signal and furthermore one ancillary data signal being not a video signal itself but a necessary information signal may be included in a set information unit, and may be sent and received.

With the configurations shown in FIG. 9(A), 9(B) and 9(C), plural information (signal) sources can be included in one set information unit, whereby signal transmission can be carried out efficiently.

The multiplexing means 21 is configured to have a function to add an identification signal for identifying whether a video input signal corresponds to a digital video input signal a, b or c, for every block used as a predetermined unit; and furthermore, the distributing means 23 may be configured to have a function to distribute the video signals a to c on the basis of the identification signal added for every block by the multiplexing means 21.

In stead of adding an error correction code to one block of video signal as shown in FIG. 9(A), 9(B) and 9(C), an error correction code may be added to every plural units of video signals, such as every two blocks (two units) of information signals as shown in FIG. 9(D) and FIG. 9(E). In such case, the same effect can be obtained.

In the fourth embodiment, examples using an error correction code on the basis of the configuration of the second embodiment have been shown, but apart from the examples, even in the case of the configuration of the first embodiment using no error correction code, the same effect can be obtained.

### [Fifth embodiment]

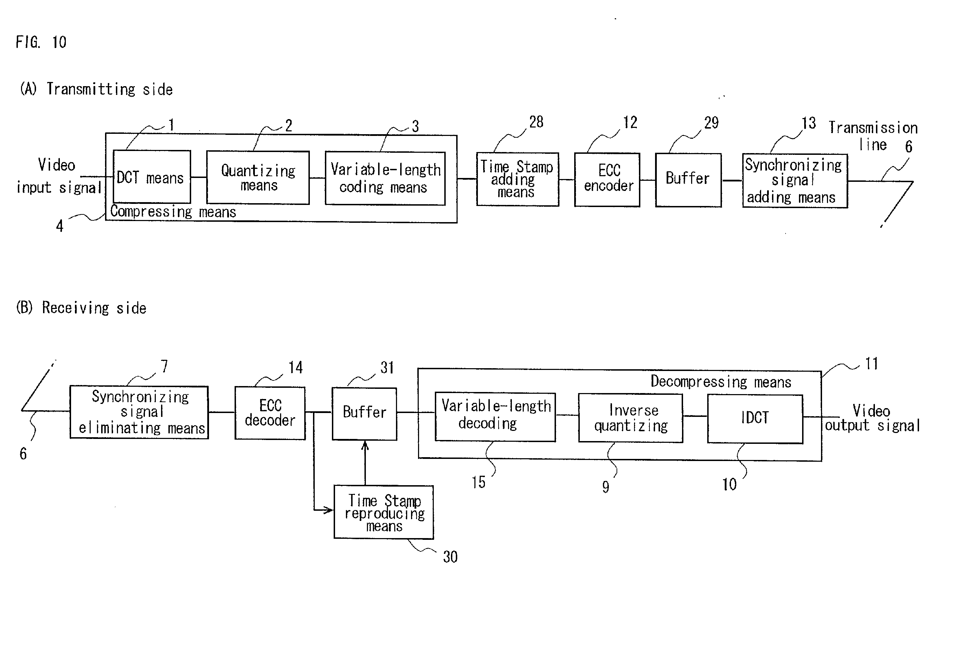

FIG. 10 is a view showing a transmission system, a transmission method, a transmission apparatus, a transmission method, a receiving apparatus and a receiving method in accordance with a fifth embodiment of the present invention. Those components corresponding to the components having already been described in the explanation of the preceding embodiment are designated by the same reference signs, and overlap explanations are omitted.

The fifth embodiment is a development from the first embodiment. The sending side of this embodiment adds time-of-day information to data-compressed information signals, carries out ECC encoding, temporarily stores the signals in a buffer and after then a signal is output. On the other hand, the receiving side reproduces the time point information. On the basis of this time-of-day information, the receiving side controls the buffer to delay each block of information signal so as to restore the time interval condition obtained before ECC encoding on the sending side, and performs output, thereby enhancing the transmission efficiency of the signals.

Referring to FIG. 10, the upper half is a part of a transmission apparatus and a transmission method. A time-of-day information adding means 28 recognizes and adds information representing the time-of-day when the input signal to the ECC encoder 12 (hereinafter referred to as "'Time Stamp" (hereinafter simply referred to as "TS")) for every constant information unit (hereinafter referred to as "block"). After a Time Stamp is added to every block of the input signal to the ECC encoder 12 as described above, the input signal is input to the ECC encoder 12. The ECC encoder 12 adds a Time Stamp to each block of the input signal of the ECC encoder 12, and performs output to a buffer 29 a signal with added an error correction code to every block to which the Time Stamp is added as described above. The buffer 29 is provided between the ECC encoder 12 and a synchronizing signal adding means 13 to temporarily store the output signal of the ECC encoder. This buffer 29 stores the output signal of the ECC encoder 12, and outputs information stored within a constant time as one set unit to the synchronizing signal adding means 13. In the present embodiment, the above-mentioned constant time is selected as one line period.

Apart from the above-mentioned configuration, a configuration may be made so that when the amount of information corresponding to one set information unit is stored in the buffer 29, the set information unit can be output as a group to the synchronizing signal adding means 13.

When the ECC encoder 12 is not used, a configuration is made as described below as a modified example. In other words, the Time Stamp adding means 28 is configured to recognize, block by block, a Time Stamp (TS) when the output signal of a compressing means 4 is output; a Time Stamp is added to every block of the output signal of the compressing means 4, and the output signal is then output to the buffer 29. In this case, the buffer 29 is provided between the compressing means 4 and the synchronizing signal adding means 13. Therefore, the output signal of the compressing means 4 is temporarily stored in the buffer 29, and information stored within a constant time is output as one set unit to the synchronizing signal adding means 13.

Referring to FIG. 10, the lower half is a part of a receiving apparatus and a receiving method. A Time Stamp reproducing means 30 recognizes, block by block, the Time Stamp added by the Time Stamp adding means 28. In accordance with the directions of the Time Stamp reproducing means 30, a buffer 31 outputs the information signals stored therein to a decompressing means 11 at the timing corresponding to the Time Stamp block by block. The numeral 31 designates the buffer provided between an ECC decoder 14 and a decompressing means 11 to temporarily store the output signal of the ECC decoder 14.

When the ECC encoder 14 is not used, a configuration is made as described below as a modified example. The Time Stamp reproducing means 30 recognizes, block by block, the Time Stamp added by the Time Stamp adding means 28. In accordance with the directions of the Time Stamp reproducing means 30, the buffer 31, wherein the output signal (information signals) of the synchronizing signal eliminating means 7 is stored, outputs the information signals stored therein block by block at the timing corresponding to the Time Stamp. In this case, the buffer 31 is provided between the synchronizing signal eliminating means 7 and the decompressing means 11, and temporarily stores the output signal of the synchronizing signal eliminating means 7.

In other words, in the above-mentioned part of the transmission apparatus or transmission method of FIG. 10, in the first embodiment or second embodiment described above, information representing the time of day when a signal is output from the compressing means 4 is recognized (detected) block by block in the case where the ECC encoder 12 is not used; or information representing the time of day when a signal is input to the ECC encoder 12 is recognized (detected) block by block in the case where the ECC encoder 12 is used. Furthermore, a Time Stamp is added to every block of the output signal of the compressing means 4 in the case where the ECC encoder 12 is not used, or to every block of the input signal of the ECC encoder 12 in the case where the ECC encoder 12 is used. The transmission apparatus and the transmission method of the present embodiment are most characteristic in that they are configured so as to add a Time Stamp to every block.

On the other hand, in the above-mentioned part of the receiving apparatus and receiving method of FIG. 10, in the above-mentioned first embodiment or second embodiment, information representing the time of day included in the output signal of the synchronizing signal eliminating means 7 is recognized block by block in the case where the ECC decoder 14 is not used, or information representing the time of day included in the output signal of the ECC decoder 14 is recognized block by block in the case where the ECC decoder 14 is used. Then, on the basis of the Time Stamp, the output signal of the synchronizing signal eliminating means 7 in the case where the ECC decoder 14 is not used, or the output signal of the ECC decoder 14 in the case where the ECC decoder 14 is used is delayed block by block. The receiving apparatus and the receiving method of the present embodiment are most characteristic in that they are configured so that the output signal of the synchronizing signal eliminating means 7 in the case where the ECC decoder 14 is not used, or the output signal of the ECC decoder 14 in the case where the ECC decoder 14 is used is delayed and output block by block on the basis of the Time Stamp added to every block.

The transmission apparatus, transmission method, receiving apparatus, receiving method and transmission line therebetween constitute a transmission system or a transmission method.

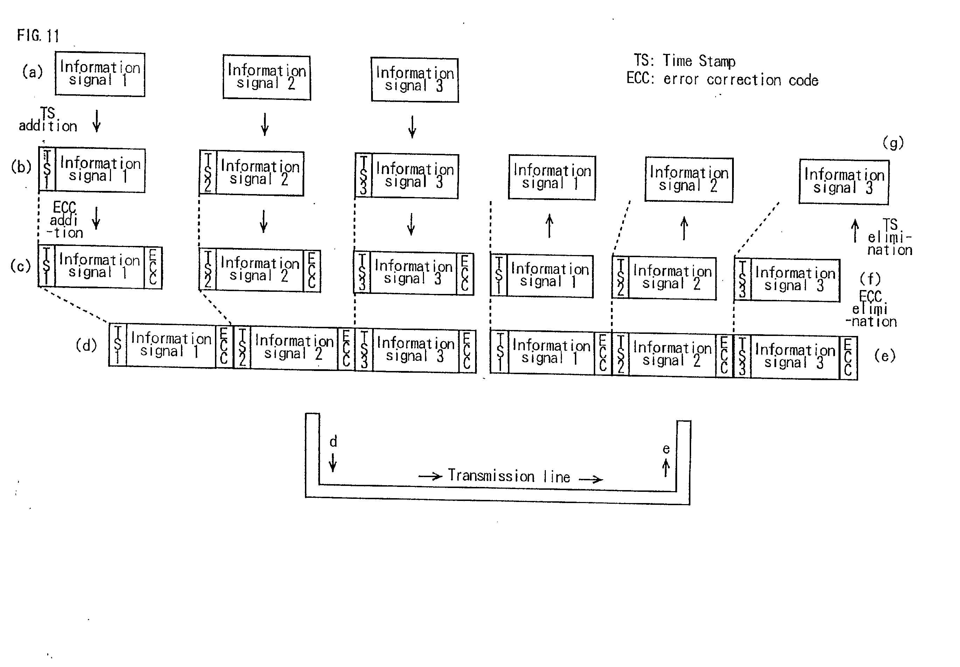

Data formats sent and received by the above-mentioned transmission system, transmission method, transmission apparatus, transmission method, receiving apparatus and receiving method will be described below referring to FIG. 11.

FIG. 11 is a view showing data formats for one set information unit of the transmission system in accordance with the fifth embodiment of the present invention.

Referring to FIG. 10, in the part of the transmission apparatus and transmission method, a digital video input signal is input to the compressing means 4 and the amount of information is compressed, and blocked into constant information units and output. The output signal of the compressing means 4 shown in FIG. 11(A) is output to the ECC encoder 12. The Time Stamp adding means 28 adds that time, i. e., a Time Stamp (TS) representing the time when the input signal of the ECC encoder 12 is input thereto, block by block (FIG. 11(B)). In this case, Time Stamp 1 (TS1) to Time Stamp 3 (TS3) are added to information signal 1 to information signal 3, respectively.

Next, at the ECC encoder 12, an error correction code is added to each of the information signal 1 to information signal 3 and the Time Stamp 1 (TS1) to Time Stamp 3 (TS3). The output signal (refer to FIG. 11(C)) of the ECC encoder 12 is stored in the buffer 29. Information stored within a constant time (corresponding to one line period in the present embodiment) is output to the synchronizing signal adding means 13 as one set unit. The output signal (FIG. 11(D)) of the buffer 29 is output to the synchronizing signal adding means 13 wherein synchronizing signals are added, and then transmitted via a transmission line.

On the other hand, in the above-mentioned part of the receiving apparatus and receiving method of the fifth embodiment, synchronizing signals are eliminated from the received signal by the synchronizing signal eliminating means 7. After this, an error correction code is added to the output signal (FIG. 11(E)) of the synchronizing signal eliminating means 7 by the ECC decoder 14 block by block. On the basis of the error correction code, the output signal of the synchronizing signal eliminating means 7 undergoes error correction. On the basis of the Time Stamp 1 (TS1) to the Time Stamp 3 (TS3) in the output signal (FIG. 11(F)) of the ECC decoder 14, the Time Stamp reproducing means 30 delays the information signal 1 to information signal 3 by using a buffer 31 and outputs the signals (FIG. 11(G)). The delay is conducted so that the time interval among the information signal 1 to information signal 3 is the same as that obtained when the signals are input to the ECC encoder 12 during sending. After this, the output signal of the buffer 31 is decompressed by the decompressing means 11, and becomes a digital video output signal.

With this kind of configuration, on the basis of the information sent to the receiving side in a burst-like manner, the time interval at the input terminal positions of the Time Stamp adding means 28 on the sending side is reproduced. By using the Time Stamp in this way, information signals can be included in one set information unit so as to be reproduced at a proper time interval, whereby signal transmission can be carried out efficiently.

In the present embodiment, an example wherein the Time Stamp adding means 28 is provided in the first embodiment or the second embodiment is shown; however, the same effect can be obtained even when the Time Stamp adding means is provided in an embodiment other than the first or second embodiment.

### [Sixth embodiment]

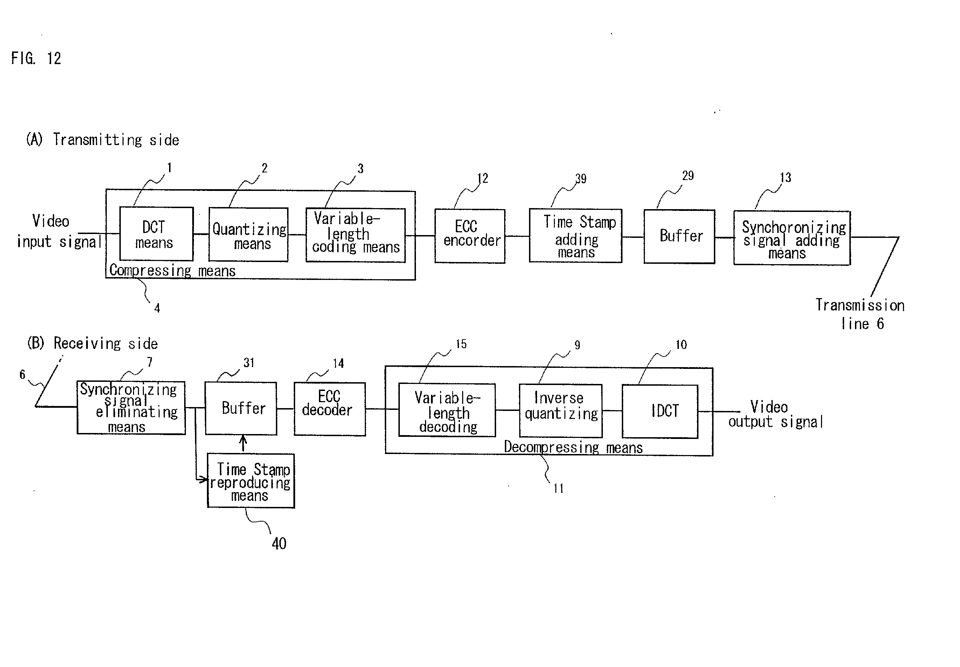

FIG. 12 is a view showing a transmission system, a transmission method, a transmission apparatus, a transmission method, a receiving apparatus and a receiving method in accordance with a sixth embodiment of the present invention. The components having already been described in the preceding embodiments are designated by the same reference signs, and overlap explanations are omitted.

The sixth embodiment is a development from the first embodiment. On the sending side of this embodiment, after a Time Stamp is added to each of the information signals which have been data-compressed and ECC-encoded; and temporarily stored in a buffer, the information signals are output to the transmission line. On the other hand, on the receiving side, the Time Stamp is reproduced, and the buffer is controlled by using it. By that, the time interval after ECC encoding is reproduced, and the signals are ECC-decoded and decompressed.

Referring to FIG. 12, the upper half is a part of a transmission apparatus and a transmission method. A Time Stamp adding means 39 provided therein recognizes and adds a Time Stamp (TS) of which the output signal of an ECC encoder 12 is output for every constant information unit (hereinafter referred to as "block"). In this way, the Time Stamp is added to every block of the output signal of the ECC encoder 12, and output to a buffer 29. The buffer 29 is provided between the ECC encoder 12 and the synchronizing signal adding means 13 to temporarily store the output signal of the ECC encoder 12. This buffer 29 stores the output signal of the ECC encoder 12, and outputs information stored within a constant time as one set unit to the synchronizing signal adding means 13. In the present embodiment, the above-mentioned constant time is taken as one line period. Different from the above-mentioned embodiment, a configuration may be obtained wherein when the constant amount of information corresponding to one set information unit is stored in the buffer 29, the set information unit is taken as a group and output to the synchronizing signal adding means 13.

When the ECC encoder 12 is not used, the configuration described below is made as a modified example. In other words, the Time Stamp adding means 39 is configured to recognize, block by block, a Time Stamp (TS) when the output signal of a compressing means 4 is output; a Time Stamp is added to every block of the output signal of the compressing means 4, and the signal is then output to the buffer 29. In this case, the buffer 29 is provided between the compressing means 4 and the synchronizing signal adding means 13. Therefore, the output signal of the compressing means 4 is temporarily stored, and information stored within a constant time is output as one set unit to the synchronizing signal adding means 13.

Referring to FIG. 12, the lower half is a part of a receiving apparatus and a receiving method. A Time Stamp reproducing means 40 recognizes, block by block, the Time Stamp added by the Time Stamp adding means 39. In accordance with the direction of the Time Stamp reproducing means 40, a buffer 31, in which the output signal of a synchronizing signal eliminating means 7 is stored, outputs the information signals stored therein to an ECC decoder 14 at the timing corresponding to the Time Stamp block by block. The numeral 31 designates the buffer provided between the synchronizing signal eliminating means 7 and the ECC decoder 14 to temporarily store the output signal of the synchronizing signal eliminating means 7.

When the ECC encoder 14 is not used, the configuration is made as described below as a modified example. The Time Stamp reproducing means 40 recognizes, block by block, the Time Stamp added by the Time Stamp adding means 39. In accordance with the direction of the Time Stamp reproducing means 40, the buffer 31, wherein the output signal of the synchronizing signal eliminating means 7 is stored, outputs the stored information signals block by block at the timing corresponding to the Time Stamp. The buffer 31 is provided between the synchronizing signal eliminating means 7 and the decompressing means 11, and temporarily stores the output signal of the synchronizing signal eliminating means 7.

In other words, in the above-mentioned part of the transmission apparatus or transmission method of FIG. 12, in the first embodiment or second embodiment described above, information representing the time when the output signal of the compressing means 4 is output is recognized (detected) block by block in the case where the ECC encoder 12 is not used; or information representing the time when the output signal of the ECC encoder 12 is output is recognized (detected) block by block in the case where the ECC encoder 12 is used. Furthermore, a Time Stamp is added to every block of the output signal of the compressing means 4 in the case where the ECC encoder 12 is not used, or to every block of the output signal of the ECC encoder 12 in the case where the ECC encoder 12 is used. The transmission apparatus and the transmission method are most characteristic in that they are configured so as to add a Time Stamp representing the time when the signal is output from the compressing means 4 in the case where the ECC encoder 12 is not used, or output from the ECC encoder 12 when the ECC encoder 12 is used, to every block.

On the other hand, in the above-mentioned receiving apparatus and receiving method shown in FIG. 12, in,the above-mentioned first embodiment or second embodiment, the output signal of the synchronizing signal eliminating means 7 is delayed block by block on the basis of the Time Stamp. Then, information representing the time of day included in the output signal of the synchronizing signal eliminating means 7 is recognized block by block. The receiving apparatus and the receiving method are most characteristic in that they are configured so that the output signal of the synchronizing signal eliminating means 7 is delayed and output block by block on the basis of the Time Stamp added to every block.

The transmission apparatus, transmission method, receiving apparatus, receiving method and transmission line therebetween constitute a transmission system or a transmission method.

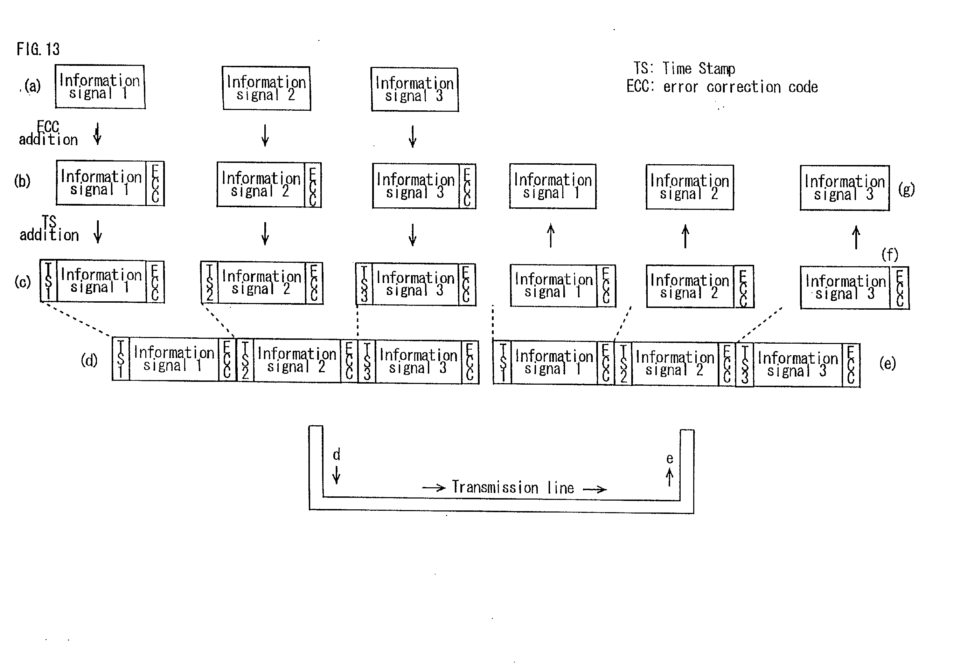

Data formats sent and received by the above-mentioned transmission system, transmission method, transmission apparatus, transmission method, receiving apparatus and receiving method will be described below referring to FIG. 13.

Referring to FIG. 12, in the transmission apparatus or the transmission method, a digital video input signal is input to the compressing means 4 and the amount of the information is compressed, and blocked into constant information units and output. The output signal of the compressing means 4 shown in FIG. 13(A) is output to the ECC encoder 12. An error correction code is added to information signal 1 to information signal 3 of the output signal of the compressing means 4 by the ECC encoder 12. Next, to every block of the output signal (refer to FIG. 13(B)) of the ECC encoder 12, the Time Stamp (TS) representing the time when the output signal of the ECC encoder 12 is output is added (FIG. 13(C)) by the Time Stamp adding means 39, and input to the buffer 29. In this case, Time Stamp 1 (TS1) to Time Stamp 3 (TS3) are added to the information signal 1 to the information signal 3, respectively.

The output signal of the ECC encoder 12 is stored in the buffer 29, and information stored within a constant time (corresponding to one line period in the present embodiment) is output to the synchronizing signal adding means 13 as one set unit (FIG. 13(D)). The output signal of the buffer 29 is output to the synchronizing signal adding means 13 wherein synchronizing signals are added, and then transmitted via a transmission line.

On the other hand, in the part of the above-mentioned receiving apparatus and receiving method in accordance with the sixth embodiment (FIG. 12), synchronizing signals are eliminated from the received signal by the synchronizing signal eliminating means 7. After this, the output signal (FIG. 13(E)) of the synchronizing signal eliminating means 7 is output by delaying on the basis of the Time Stamp 1 (TS1) to the Time Stamp 3 (TS3) in the output signal. The delay is conducted by the buffer 31 so that the time interval among the information signal 1 to information signal 3 is the same as that obtained when the signals are output block by block from the ECC encoder 12 during sending. After this, the output signal (FIG. 13(F)) of the buffer 31 is input to the ECC decoder 14, and signal error correction is carried out on the basis of the error correction code. The output signal (FIG. 13(G)) of the ECC decoder 14 is decompressed by the decompressing means 11, and becomes a digital video output signal.

With this kind of configuration, on the basis of the information sent to the receiving side in a burst-like manner, the previous time interval at the Time Stamp adding means 39 on the sending side is reproduced. By using the Time Stamp in this way, information signals can be included in one set information unit so as to be reproduced at a proper time interval, whereby signal transmission can be carried out efficiently.

Since the Time Stamp is transmitted without being compressed, it can be used immediately after reception without performing decompression operation.

In the present embodiment, an example wherein the Time Stamp adding means 39 is provided in the first embodiment or the second embodiment is shown; however, the same effect can be obtained even when the Time Stamp adding means is provided in an embodiment other than the first or second embodiment.

### [Seventh embodiment]

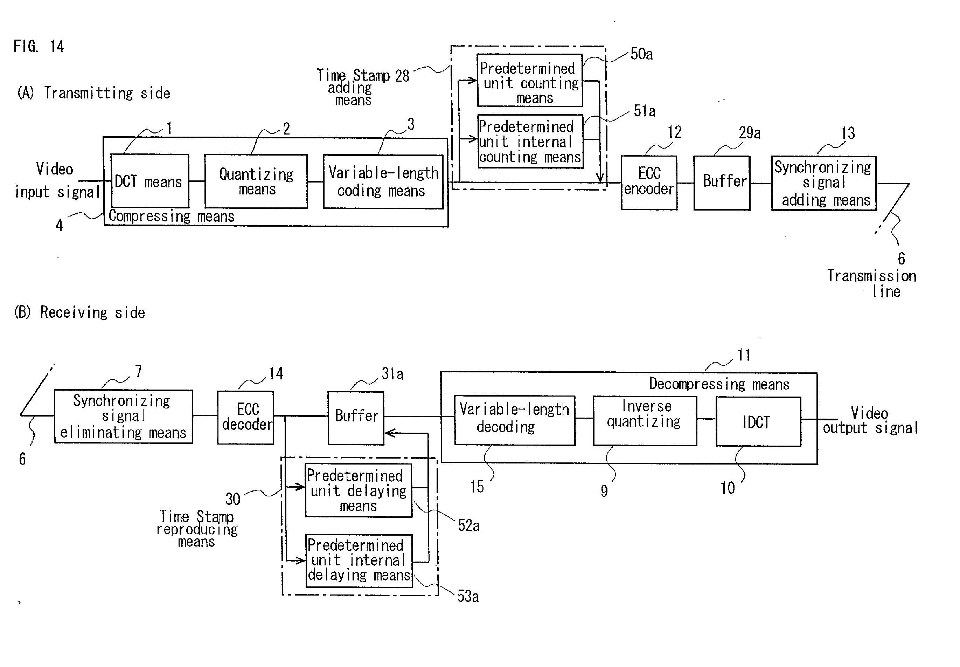

FIG. 14 is a view showing a transmission system, a transmission method, a transmission apparatus, a transmission method, a receiving apparatus and a receiving method in accordance with a seventh embodiment of the present invention. The circuit shown in FIG. 14 corresponds to a case wherein the Time Stamp representing the time when a signal is input to the ECC encoder 12 is added to every constant information unit (hereinafter referred to as "block") by the Time Stamp adding means 28 shown in FIG. 10. Those components corresponding to the components having already been described in the explanation of the preceding embodiment are designated by the same reference signs, and overlap explanations are omitted.

The seventh embodiment is a development from the first embodiment. In the present embodiment, the Time Stamp adding means on the sending side in accordance with the fifth embodiment is configured by a predetermined unit calculating means and a predetermined unit internal counting means. On the other hand, the Time Stamp reproducing means on the receiving side is configured by a predetermined unit delaying means and a predetermined unit internal delaying means.

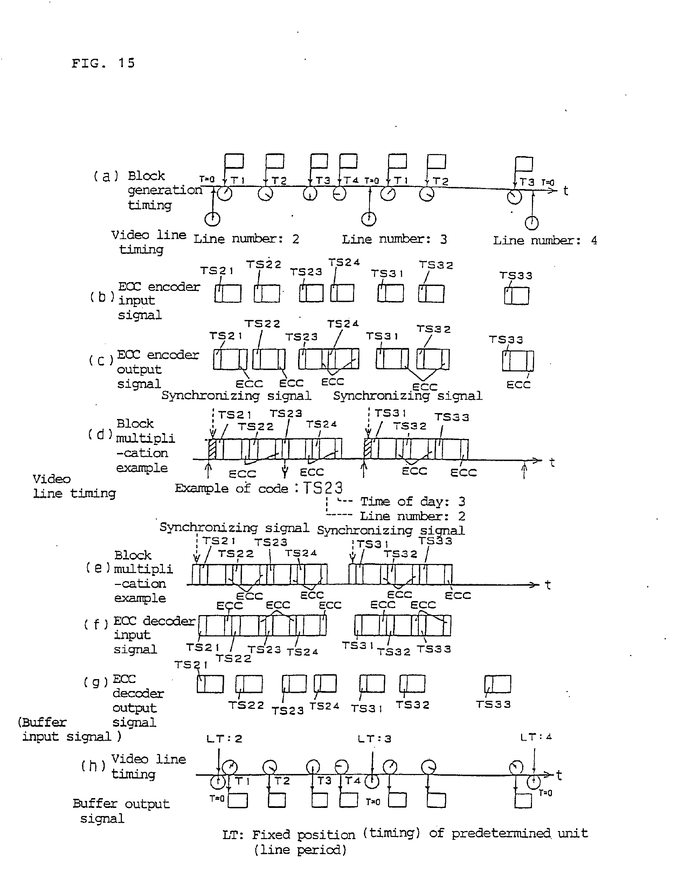

The seventh embodiment (FIG. 14 and FIG. 15) is to provide a more specific embodiment regarding the Time Stamp adding means 28, the Time Stamp reproducing means 30 and the addition and reproduction of the Time Stamp in accordance with the fifth embodiment.

The upper half of FIG. 14 is a part of the sending side, and the lower half is a part of the receiving side.

As shown in this embodiment, the Time Stamp adding means 28 comprises a predetermined unit counting means 50a and a predetermined unit internal counting means 51a. The information signals to be treated in the transmission apparatus or the receiving apparatus of the present embodiment are video signals, and it is supposed that plural constant information units thereof are collected to form a predetermined unit.

The predetermined unit counting means 50a counts the number of line periods, and counts what the number of order of a block having been input to the ECC encoder 12 is in line periods from a predetermined reference when it was input, and outputs the value in the form of N bits. The predetermined reference is herein a time-of-day reference. More specifically, a specific time of day may be set to a reference in a configuration having a clock in common between the sending and receiving. Alternatively, a specific signal, such as a block or a synchronizing signal, sent before from the sending side to the receiving side may be used as a reference.

In the case where the predetermined unit counting means 50a counts frames, the predetermined unit counting means 50a can counts the frames on the basis of the head of the frames, or the rising edge or falling edge of a vertical synchronizing signal. In addition, in the case where the predetermined unit counting means 50a counts fields, the predetermined unit counting means 50a can count the fields on the basis of the head of the fields, or the rising edge or falling edge of a vertical synchronizing signal. Furthermore, in the case where the predetermined unit counting means 50a counts lines, the predetermined unit counting means 50a can count the lines on the basis of the head of the lines, or the rising edge or falling edge of a horizontal synchronizing signal. In other words, time periods, being constant and common between the sending and receiving sides, should only be counted.

Technical terms will be defined here. "Frame" is a period during which an image for one screen is formed, that is, two vertical scanning periods in the NTSC system. "Field" is a period during which one vertical scanning is carried out for the television signal, and "line" is a period during which one horizontal scanning is carried out.

The predetermined unit internal counting means 51a counts the time length from a reference position of a line period (timing) to a timing when a block of video signal is input to the encoder 12, and outputs the count value as a Time Stamp in M bits.

Furthermore, in the case where the predetermine unit counting means 50a counts frames, the head of the frames, or the rising or falling edge position (timing) of a vertical synchronizing signal is made to a fixed position (timing). The predetermined unit internal counting means 51a can count the time from the above-mentioned fixed position (timing) to the current time, i. e., the position (timing) wherein a block of video signal is input to the encoder 12. In the case where the predetermined unit counting means 50a counts fields, the head of the fields, or the rising or falling edge position (timing) of a vertical synchronizing signal is made to a fixed position (timing). The predetermined unit internal counting means 51a can count the time from the above-mentioned fixed position (timing) to the current time, i. e., the position (timing) wherein a block of video signal is input to the encoder 12. Furthermore, in the case where the predetermined unit counting means 50a counts lines, the head of the lines, or the rising or falling edge position (timing) of a horizontal synchronizing signal is made to a fixed position (timing). And, the predetermined unit internal counting means 51a can count the time from the above-mentioned fixed position (timing) to the current time, i. e., the position (timing) wherein a block of video signal is input to the encoder 12.

Accordingly, as the whole of the Time Stamp adding means 28, an N-bit signal output by the predetermined unit counting means 50a is made to high-order bits, and an M-bit signal output by the predetermined unit internal counting means 51a is made to low-order bits, and a Time Stamp in (N + M) bits in total is added to the input signal of the ECC encoder 12.

On the other hand, as a modified example, when the ECC encoder 12 is not used, the Time Stamp adding means 28 is configured to recognize and add, block by block, a Time Stamp (TS) representing the time when the output signal of a compressing means 4 is output; a Time Stamp is added to every block of the output signal of the compressing means 4, and the signal is then output to a buffer 29a. The buffer 29a may be provided between the compressing means 4 and the synchronizing signal adding means 13, and configured to temporarily store the output signal of the compressing means 4, and to output information stored within a constant time as one set unit to the synchronizing signal adding means 13.

On the receiving side, a Time Stamp reproducing means 30 comprises a predetermined unit delaying means 52a and a predetermined unit internal delaying means 53a. The predetermined unit delaying means 52a recognizes an N-bit predetermined unit Time Stamp supplied by the predetermined unit counting means 50a (information representing what the number of order of a block of video signal having been input to the ECC encoder 12 is in line periods from a predetermined reference time of day when it was input).

The predetermined unit internal delaying means 53a recognizes an M-bit predetermined unit internal Time Stamp supplied by the predetermined unit internal counting means 51a (information representing the time from the line period reference position, such as the head position (timing) of lines, to the current time, i. e., the position (timing) wherein a block of video signal is input to the encoder 12).

A buffer 31a stores the output signal (video signal) of the ECC decoder 14, delays the signal block by block until a predetermined time of day, and outputs the signal. The predetermined time of day is the time of day elapsed from the time of day (timing) corresponding to the Time Stamp represented by the predetermined unit Time Stamp recognized by the predetermined unit delaying means 52a, to the time represented by the predetermined unit internal Time Stamp recognized by the predetermined unit internal delaying means 53a.

On the other hand, in the case of a modified example without using the ECC decoder 14, the Time Stamp reproducing means 30 recognizes, block by block, the Time Stamp added by the Time Stamp adding means 28. In accordance with the direction of this Time Stamp reproducing means 30, the buffer 31a, in which the output signal of the synchronizing signal eliminating means 7 is stored, outputs the stored information signal at the timing corresponding to the Time Stamp block by block. The buffer 31a should only be provided between the synchronizing signal eliminating means 7 and the decompressing means 11, and configured to temporarily store the output signal of the synchronizing signal eliminating means 7.

The transmission apparatus and transmission method in accordance with the present embodiment will be described below. The description is made as to when the line period of a video signal is set to a predetermined unit, and when constant information units, i. e., blocks, of video signals which is the information signals generated in one line period are collected to form a line which is a predetermined unit. The Time Stamp described in the fifth embodiment comprises a predetermined unit Time Stamp and a predetermined unit internal Time Stamp. The above-mentioned predetermined unit Time Stamp represents what the number of order of an information signal (video signal), having been output from the compressing means 4 in the case where the ECC encoder 12 is not used or having been input to the ECC encoder 12 in the case where the ECC encoder 12 is used, is in predetermined units (line periods) from a predetermined reference when it was output from the compressing means 4 or input to the ECC encoder 12. The above-mentioned predetermined unit internal Time Stamp represents the time from a fixed position (timing) used as the reference of a predetermined unit (line period), i. e., the head position (timing) of lines, to the current time, i. e., the position (timing) wherein the information signal (video signal) is output from the compressing means 4 or input to the ECC encoder 12.

Furthermore, the receiving apparatus or receiving method in accordance with the present embodiment will be described below. The description is applied when the line period of a video signal is used as a predetermined unit, and when constant information units, i. e., blocks, of video signals used as information signals generated in one line period are collected to form one line, i. e., a predetermined unit. The Time Stamp described in the fifth embodiment comprises a predetermined unit Time Stamp and a predetermined unit internal Time Stamp. The above-mentioned predetermined unit Time Stamp represents what the number of order of an information signal (video signal), having been output from the compressing means 4 in the case where the ECC encoder 12 is not used or having been input to the ECC encoder 12 in the case where the ECC encoder 12 is used, is in predetermined units (line periods) from a predetermined reference when it was output from the compressing means 4 or input to the ECC encoder 12. The above-mentioned predetermined unit internal Time Stamp represents the time from a fixed position (timing) used as the reference of a predetermined unit (line period) of the information signals (video signals), i. e., the head position (timing) of lines, to the current time, i. e., the position (timing) wherein the information signal (video signal) is output from the compressing means 4 or input to the ECC encoder 12. Next, on the basis of the above-mentioned Time Stamp added to every constant information unit (block) of information signal (video signal), the constant information unit (block) is formed so as to be delayed until it reaches a predetermined time of day. The predetermined time of day is a time of day elapsed from the time of day (timing) corresponding to the time of day represented by the predetermined unit Time Stamp by the time corresponding to the Time Stamp represented by the predetermined unit internal Time Stamp. However, the time represented by the above-mentioned predetermined unit Time Stamp is the time corresponding to information representing what the number of order of a block of video signal, having been output from the compressing means 4 (in the case where the ECC encoder 12 is not used) or having been input to the ECC encoder 12 (in the case where the ECC encoder 12 is used), is in line periods from a predetermined reference when it was input.

The operations of the above-mentioned transmission system will be described below referring to FIG. 15.

FIG. 15 is a view showing operations on the sending side and the receiving side for one set information unit in the transmission system or transmission method in accordance with the seventh embodiment of the present invention.

In the transmission apparatus or transmission method, a digital video input signal is input to the compressing means 4 and the amount of the information is compressed. The output signal (FIG. 15(A)) of the compressing means 4 is output to the ECC encoder 12, and the predetermined unit counting means 50a and the predetermined unit internal counting means 51a which are the Time Stamp adding means 28 adds the Time Stamp (TS) representing that time, i. e., the time when the input signal is input to the ECC encoder 12 to every block (FIG. 15(B)). Here, the Time Stamp output from the Time Stamp adding means 28 comprises an N-bit signal (in FIG. 15, N designates a line number: 2, 3, ...) output from the predetermined unit counting means 50a, as a high-order bit portion, and an M-bit signal (in FIG. 15, M designates T1, T2, ...) output from the predetermined unit internal counting means 51a, as a low-order bit portion. Further, the N-bit signal output from the predetermined unit counting means 50a is a predetermined unit Time Stamp representing a line number indicating what the number of order of a block having been input to the ECC encoder 12 is in line periods from a predetermined reference. The M-bit signal output from the predetermined unit internal counting means 51a is a predetermined unit internal Time Stamp representing the time from the head of lines, i. e., a fixed position (timing) used as the reference of a line period in which a block input to the ECC encoder 12 is included to the video signal position (timing) wherein the block is input to the ECC encoder 12. Furthermore, a Time Stamp is added herein to each video signal. Next, an error correction code is added to each video signal and Time Stamps (TS21 to TS33) by the ECC encoder 12.

However, the Time Stamps shown in FIG. 15 added in the above description are TS21 to TS33, wherein both n and m of TSnm are natural numbers not less than 1; n represents what the number of order of a block having been input to the ECC encoder 12 is in line periods (corresponding to the predetermined unit Time Stamp); m represents the time from the head of lines, i. e., a fixed position (timing), used as the reference of a line period in which a block input to the ECC encoder 12 is included to the video signal position (timing) wherein the block is currently input to the ECC encoder 12. It represents the time-of-day number in m lines (corresponding to the number of the predetermined unit internal Time Stamp).

The output signal (refer to FIG. 15(C)) of the ECC encoder 12 is temporarily stored in the buffer 29a, information stored within a constant time is output as one set unit to the synchronizing signal adding means 13. The output signal of the buffer 29a is output to the synchronizing signal adding means 13 wherein synchronizing signals are added (FIG. 15(D)), and transmitted via a transmission line.

On the other hand, in the receiving apparatus or receiving method, synchronizing signals are eliminated from the received signal (FIG. 15(E)) by the synchronizing signal eliminating means 7. Then, the output signal (FIG. 15(F)) of the synchronizing signal eliminating means 7 undergoes signal error correction on the basis of the error correction code at the ECC decoder 14. Next, on the basis of the Time Stamps (TS21 to TS33) in the output signal (FIG. 15(G)) of the ECC decoder 14, delay is conducted by the buffer 31a block by block so that the time interval among the blocks of video signals is the same as that obtained when video signals are input during sending, and output is performed (FIG. 15(H)).

In other words, the predetermined unit delaying means 52a recognizes a line number which is a predetermined unit Time Stamp (N bits) added by the predetermined unit counting means 50a, and the predetermined unit internal delaying means 53a recognizes an M-bit Time Stamp (predetermined unit internal information from the head of lines to the position (timing) wherein a block of video signal is input to the ECC encoder 12) supplied by the predetermined unit internal counting means 51a.

In accordance with the direction of this predetermined unit delaying means 52a and the predetermined unit internal delaying means 53a, the blocks of video signals stored in the buffer 31a are delayed block by block until arrival to a predetermined time of day, and then output. The predetermined time of day is the time of day elapsed from the timing corresponding to the N-bit predetermined unit Time Stamp (the Time Stamp representing what the number of order is in lines from a predetermined reference) to the time corresponding to the predetermined unit internal Time Stamps (T1 to T5). The predetermined unit internal Time Stamps (T1 to T5) are Time Stamps each representing the time from the head position (timing) of fixed video signal lines in which a block of video signal is included to the position (timing) of the video signal currently input. After this, the output signal of the buffer 31a is decompressed, and becomes a digital video output signal.

With this configuration, the same effects as those of the fifth embodiment can be obtained.

The present embodiment is made by providing the Time Stamp adding means 28 in the second embodiment; however, the same effects can be obtained by providing the Time Stamp adding means in other embodiments.

In the present embodiment, a video signal is used as an information signal, the predetermined unit of the video signal is defined as one line of video signal. As the predetermined unit, n frames (n is a natural number not less than 1) of video signals can be used, or as the predetermined unit, n fields or n lines (n is a natural number not less than 1) of video signals may also be used. However, a signal other than the video signal may be used as an information signal; the predetermined unit should only have a constant interval.

Furthermore, one set information unit in accordance with the present embodiment comprises a constant information unit, i. e., a block, generated within one line period; apart from this, one set information unit may also comprise a constant information unit, i. e., a block, generated within n line periods (n is a natural number not less than 1) of video signals. Moreover, as another modification, one set information unit may also comprise a block which is a constant information unit generated within n field periods or n frame periods (n is a natural number not less than 1) of video signals.

Besides, the fixed position (timing) which is a reference to a predetermined unit of video signals should only be the position synchronous with the period of line, field or frame. Therefore, the fixed time position is not necessarily located at the head of lines, fields or frames. For example, the same thing can be established at the rising or falling part of a vertical synchronizing signal or a horizontal synchronizing signal; the position should only be a fixed position (timing) having a constant period.

In addition, when the predetermined unit is one line, one field or one frame, a line counter, a field counter or a frame counter can be used respectively as a predetermined unit counting means. By using these, general-purpose counters can be used, whereby the cost of the apparatus can be reduced.

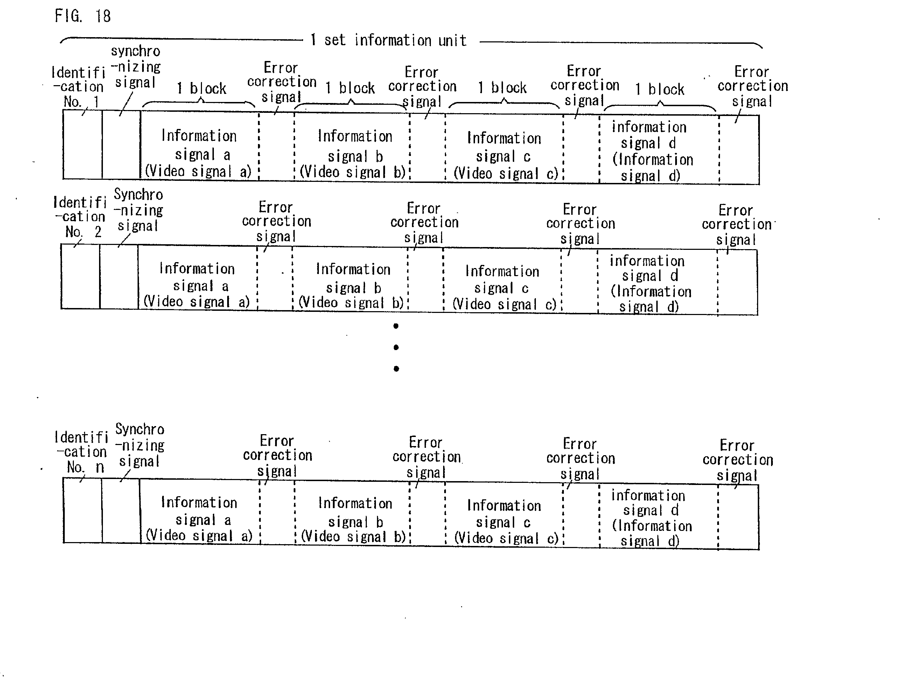

Additionally, FIG. 18 described later shows a system which assigns, for every predetermined unit, a predetermined identification number (a line number assigned to every line in the present embodiment; in FIG. 18, 1 to n in identification number 1, ..., identification number n (n is a natural number not less than 1) correspond to line numbers) in or together with a synchronizing signal, and transmits information. With this system, the predetermined unit counting means 50a and the predetermined unit delaying means 52a in accordance with the seventh embodiment can be made unnecessary.

In other words, in the sending side shown in the upper half of FIG. 14, in the case where plural constant information units of information signals are collected and become a predetermined unit, and the predetermined unit has an identification code for identifying each predetermined unit, the Time Stamp adding means comprises a predetermined unit internal counting means which counts the time from the fixed position (timing) used as the reference of the predetermined unit of the above-mentioned information signals to the position (timing) to which a Time Stamp (TS) is added. This transmission apparatus or transmission method is characterized in that the Time Stamp (TS) comprises a predetermined unit internal Time Stamp representing the time from a fixed position (timing) used as the reference of the predetermined unit of information signals to the position (timing) to which a Time Stamp (TS) is added.

On the other hand, in the receiving side shown in the lower half of FIG. 14, in the case where plural constant information units of information signals are collected and become a predetermined unit, and the predetermined unit has an identification code for identifying each predetermined unit, the unit comprises a predetermined unit internal Time Stamp representing the time from a fixed position (timing) used as the reference of the predetermined unit of information signals to the position (timing) to which a Time Stamp (TS) is added. Then, in accordance with the Time Stamp added to each constant information unit of information signal, a constant information unit (block) is delayed by the time corresponding to the predetermined unit internal Time Stamp of the above-mentioned information signal at each constant information unit of information signal. This receiving apparatus or receiving system is characterized as described below. The Time Stamp (TS) comprises a predetermined unit internal Time Stamp representing the time from a fixed position (timing) used as the reference of the predetermined unit of the information signals to the position (timing) to which a Time Stamp (TS) is added; therein, in accordance with the Time Stamp added to each constant information unit of information signal, a constant information unit (block) is delayed by the time corresponding to the predetermined unit internal Time Stamp of the information signal at each constant information unit of information signal.

Furthermore, in the case where one set information unit is used as information stored within a constant time, for example in the case where blocks, for example, constant information units, generated in one line period are collected and become one set information unit, the predetermined unit counting means 50a and the predetermined unit delaying means 52a of FIG. 14 in accordance with the seventh embodiment can be made unnecessary.

On the sending side of such a modified example wherein 50a and 52a are omitted, in the case where plural constant information units of information signals are collected and become a predetermined unit having a constant time length, the Time Stamp adding means comprises a predetermined unit internal counting means which counts the time from the fixed position (timing) used as the reference of the predetermined unit of the above-mentioned information signals to the position (timing) to which a Time Stamp (TS) is added. This transmission apparatus or transmission method is characterized in that the Time Stamp (TS) comprises the predetermined unit internal Time Stamp representing the time from the fixed position (timing) used as the reference of the predetermined unit of the information signals to the position (timing) to which Time Stamp (TS) is added.

On the other hand, in the receiving side of the modified example wherein the above-mentioned 50a and 52a are omitted, in the case where plural constant information units of information signals are collected and become a predetermined unit having a constant time length, the unit comprises the predetermined unit internal Time Stamp representing the time from the fixed position (timing) used as the reference of the predetermined unit of the information signals to the position (timing) to which Time Stamp (TS) is added, which can be obtained by counting the number of constant information signals or predetermined units. In accordance with the Time Stamp (TS) added to each constant information unit of information signal, the configuration and method on this receiving side delays a constant information unit (block) by the time corresponding to the predetermined unit internal Time Stamp of the above-mentioned information signal at each constant information unit of information signal. This receiving apparatus or receiving system is characterized as described below. The Time Stamp (TS) comprises a predetermined unit internal Time Stamp representing the time from a fixed position (timing) used as the reference of the predetermined unit of the information signals to the position (timing) to which a Time Stamp (TS) is added; in accordance with the Time Stamp added to each constant information unit of information signal, a constant information unit (block) is delayed by the time corresponding to the predetermined unit internal Time Stamp of the information signal at each constant information unit of information signal.

Furthermore, the buffer 31a of FIG. 14 in accordance with the present embodiment delays blocks of video signals by the time corresponding to [the predetermined unit Time Stamp + the predetermined unit internal Time Stamp] simultaneously. However, apart from this, the buffer 31a may be configured to delay a constant information unit (block) by the time corresponding to the predetermined unit Time Stamp, and then to delay the constant information unit (block) by the time corresponding to the predetermined unit internal Time Stamp, or to delay the constant information unit (block) by the time corresponding to the predetermined unit internal Time Stamp, and then to delay the constant information unit (block) by the time corresponding to the predetermined unit Time Stamp.

### [Eighth embodiment]

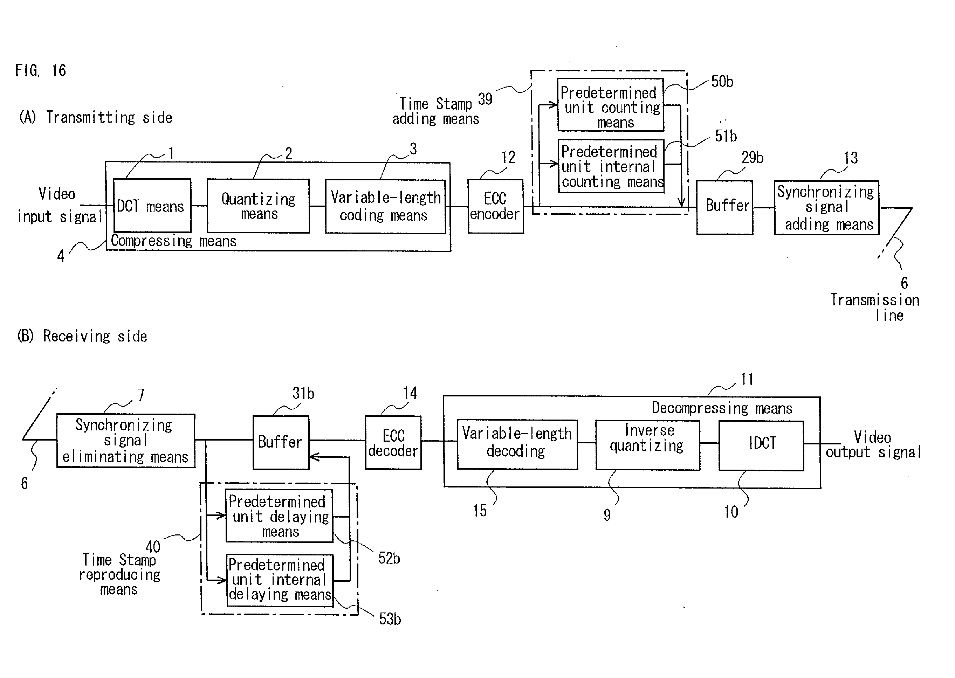

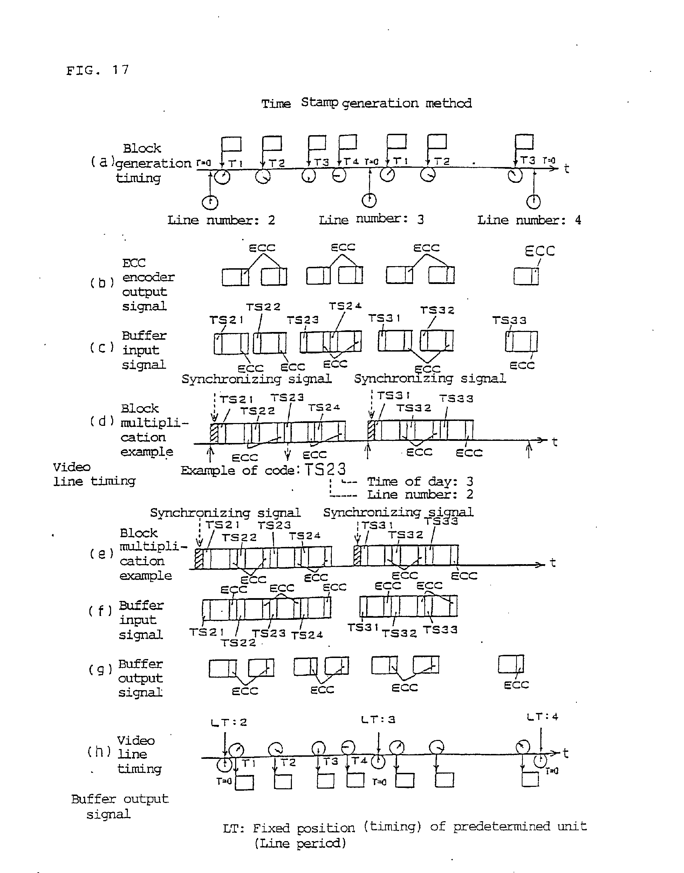

FIG. 16 and FIG. 17 are views showing a transmission system, a transmission method, a transmission apparatus, a transmission method, a receiving apparatus and a receiving method in accordance with an eighth embodiment of the present invention. The circuit shown in FIG. 16 is the case where the Time Stamp of the output signal output from the ECC encoder 12 is added to every constant information unit (hereinafter referred to as "block") by the Time Stamp adding means 39 shown in FIG. 12. Those components corresponding to the components having already been described in the explanation of the preceding embodiment are designated by the same reference signs, and overlap explanations are omitted.

The eighth embodiment is a development from the first embodiment. In the present embodiment, the Time Stamp adding means on the sending side in accordance with the sixth embodiment comprises a predetermined unit counting means and a predetermined unit internal counting means, and the Time Stamp reproducing means on the receiving side comprises a predetermined unit delaying means and a predetermined unit internal delaying means.

This embodiment (FIG. 16 and FIG. 17) provides a more specific embodiment regarding the Time Stamp adding means 39, the Time Stamp reproducing means 40 and the addition and reproduction of the Time Stamp in accordance with the sixth embodiment, in particular.

The upper half of FIG. 16 is a part of the sending side, and the lower half is a part of the receiving side.

As shown in this embodiment, the Time Stamp adding means 39 comprises a predetermined unit counting means 50b and a predetermined unit internal counting means 51b. Herein, the information signals to be treated in the sending, receiving apparatus, etc. of the present embodiment are video signals, and it is supposed that plural constant information units thereof are collected to form a predetermined unit.

The predetermined unit counting means 50b counts the number of line periods, and counts to find what the number of order of a block having been output from the ECC encoder 12 is in line periods from a predetermined reference when it was output, and outputs the number in N bits. The predetermined reference is herein a time-of-day reference. More specifically, a specific time of day may be used as a reference in a configuration having a clock in common between the sending and receiving sides. Alternatively, a specific signal, such as a block or a synchronizing signal, sent before from the sending side to the receiving side may be used as a reference.

In the case where the predetermined unit counting means 50b counts frames, the predetermined unit counting means 50b can counts the frames on the basis of the head of the frames, or the rising edge or falling edge of a vertical synchronizing signal. In addition, in the case where the predetermined unit counting means 50b counts fields, the predetermined unit counting means 50b can count the fields on the basis of the head of the fields, or the rising edge or falling edge of a vertical synchronizing signal. Furthermore, in the case where the predetermined unit counting means 50b counts lines, the predetermined unit counting means 50 (sic) can count the lines on the basis of the head of the lines, or the rising edge or falling edge of a horizontal synchronizing signal. In other words, time periods, being constant and common between the sending and receiving sides, should only be counted.

Herein, as described in the seventh embodiment, "Frame" represents a period during which an image for one screen is formed, that is, two vertical scanning periods in the NTSC system. "Field" is a period during which one vertical scanning is carried out for the television signal. "Line" represents a period during which one horizontal scanning is carried out. The predetermined unit internal counting means 51b counts the time from a line period reference position (timing) to a timing when a block of video signal is output from the encoder 12, and outputs the count value as a Time Stamp in M bits.

Furthermore, in the case where the predetermined unit counting means 50b counts frames, the head of the frames, or the rising or falling edge position (timing) of a vertical synchronizing signal is made to a fixed position (timing). The predetermined unit internal counting means 51b can count the time from the fixed position (timing) to the current time, i. e., the position (timing) wherein a block of video signal is output from the encoder 12. In addition, in the case where the predetermined unit counting means 50b counts fields, the head of the fields, or the rising or falling edge position (timing) of a vertical synchronizing signal is made to a fixed position (timing). The predetermined unit internal counting means 51b can count the time from the above-mentioned fixed position (timing) to the current time, i. e., the position (timing) wherein a block of video signal is input to the encoder 12. Furthermore, in the case where the predetermined unit counting means 50b counts lines, the head of the lines, or the rising or falling edge position (timing) of a horizontal synchronizing signal becomes a fixed position (timing). And, the predetermined unit internal counting means 51b can count the time from the above-mentioned fixed position (timing) to the current time, i. e., the position (timing) wherein a block of video signal is output from the encoder 12.

Accordingly, as the whole of the Time Stamp adding means 39, an N-bit signal output by the predetermined unit counting means 50b is made to high-order bits, and an M-bit signal output by the predetermined unit internal counting means 51b is made to low-order bits, and a Time Stamp in (N + M) bits in total is added to the input signal of the ECC encoder 12.

On the other hand, as a modified example, when the ECC encoder 12 is not used, the Time Stamp adding means 39 is configured to recognize and add, block by block, a Time Stamp (TS) representing the time when the output signal of a compressing means 4 is output; a Time Stamp is added to every block of the output signal of the compressing means 4, and the output signal is then output to a buffer 29b. The buffer 29b may be provided between the compressing means 4 and the synchronizing signal adding means 13, and configured to temporarily store the output signal of the compressing means 4, and to output information stored within a constant time as one set unit to the synchronizing signal adding means 13.

Next, on the receiving side, a Time Stamp reproducing means 40 comprises a predetermined unit delaying means 52b and a predetermined unit internal delaying means 53b. The predetermined unit delaying means 52b recognizes an N-bit predetermined unit Time Stamp supplied by the predetermined unit counting means 50b (information representing what the number of order of a block of video signal having been output from the ECC encoder 12 is in line periods from a predetermined reference time of day when it was input.

The predetermined unit internal delaying means 53b recognizes an M-bit predetermined unit internal Time Stamp supplied by the predetermined unit internal counting means 51b (information representing the time from the line period reference position, such as the head position (timing) of lines, to the current time, i. e., the position (timing) wherein a block of video signal is output from the encoder 12).

A buffer 31b stores the output signal (video signal) of a synchronizing signal eliminating means 7, delays constant information units (blocks), block by block, until arrival to a predetermined time of day, and outputs the signal. The predetermined time of day is the time of day elapsed from the time (timing) corresponding to the Time Stamp represented by the predetermined unit Time Stamp recognized by the predetermined unit delaying means 52b to the time corresponding to the Time Stamp represented by the predetermined unit internal Time Stamp recognized by the predetermined unit internal delaying means 53b.

On the other hand, in the case of a modified example without using the ECC decoder 14, the Time Stamp reproducing means 40 recognizes, block by block, the Time Stamp added by the Time Stamp adding means 39. In accordance with the direction of this Time Stamp reproducing means 40, the buffer 31b, in which the output signal of the synchronizing signal eliminating means 7 is stored, outputs the stored information signal at the timing corresponding to the Time Stamp block by block. The buffer 31b should only be provided between the synchronizing signal eliminating means 7 and the decompressing means 11, and configured to temporarily store the output signal of the synchronizing signal eliminating means 7.

The transmission apparatus and transmission method in accordance with the present embodiment will be described below. The description is made as to the case that the line period of a video signal is made to a predetermined unit, and when constant information units, i. e., blocks of video signals which are information signals generated in one line period are collected so as to form a predetermined unit. The Time Stamp described in the sixth embodiment comprises a predetermined unit Time Stamp and a predetermined unit internal Time Stamp. The predetermined unit Time Stamp represents what the number of order of an information signal (video signal), having been output from the compressing means 4 in the case where the ECC encoder 12 is not used or having been output from the ECC encoder 12 in the case where the ECC encoder 12 is used, is in predetermined units (line periods) from a predetermined reference when it was output from the compressing means 4 or the ECC encoder 12. Furthermore, the predetermined unit internal Time Stamp represents the time from a fixed position (timing) used as the reference of a predetermined unit (line period), i. e., the head position (timing) of lines, to the current time, i. e., the position (timing) of the information signal (video signal) wherein the information signal (video signal) is output from the compressing means 4 or the ECC encoder 12.

On the other hand, the receiving apparatus and receiving method in accordance with the present embodiment will be described below. The description is made as to the case that the line period of a video signal is used as a predetermined unit, and when constant information units, i. e., blocks of video signals used as information signals generated in one line period of video signal are collected so as to form a predetermined unit. The Time Stamp described in the sixth embodiment comprises a predetermined unit Time Stamp and a predetermined unit internal Time Stamp. The predetermined unit Time Stamp represents what the number of order of an information signal (video signal), having been output from the compressing means 4 (in the case where the ECC encoder 12 is not used) or the ECC encoder 12 (in the case where the ECC encoder 12 is used), is in predetermined units (line periods) from a predetermined reference when it was output from the compressing means 4 or the ECC encoder 12. Furthermore, the predetermined unit internal Time Stamp represents the time from a fixed position (timing) used as the reference of a predetermined unit (line period), i. e., the head position (timing) of lines, to the current time, i. e., the position (timing) wherein the information signal (video signal) is output from the compressing means 4 or the ECC encoder 12. And it is configured so that on the basis of the Time Stamp added to every block of information signal (video signal), the constant information unit (block) is delayed until arrival to a predetermined time of day, and then output. The predetermined time of day is the time of day elapsed from the time of day (timing) corresponding to the time of day represented by the predetermined unit Time Stamp to the time corresponding to the Time Stamp represented by the predetermined unit internal Time Stamp. However, the time represented by the above-mentioned predetermined unit Time Stamp is the time corresponding to information representing what the number of order of a block of video signal, having been output from the compressing means 4 (in the case where the ECC encoder 12 is not used) or having been input to the ECC encoder 12 (in the case where the ECC encoder 12 is used), is in line periods from a predetermined reference when it was input.

The operations of the above-mentioned transmission system will be described below referring to FIG. 17.

FIG. 17 is a view showing operations on the sending side and the receiving side for one set information unit in the transmission system or transmission method in accordance with the eighth embodiment of the present invention.

In the transmission apparatus or transmission method, a digital video input signal is input to the compressing means 4 and the amount of information is compressed. The output signal (FIG. 17(A)) of the compressing means 4 is output to the ECC encoder 12; by the ECC encoder 12, an error correction code is added to each video signal. Next, the predetermined unit counting means 50b and the predetermined unit internal counting means 51b as the Time Stamp adding means 39, at that time adds the Time Stamp (TS) representing that time, i. e., the time when the output signal (FIG. 17(B)) from the ECC encoder 12 is output, block by block (FIG. 17(C)). Here, the Time Stamp output from the Time Stamp adding means 39 comprises an N-bit signal (in FIG. 17, N designates a line number: 2, 3, ...) output from the predetermined unit counting means 50b, as high-order bits, and an M-bit signal (in FIG. 17, M designates T1, T2, ...) output from the predetermined unit internal counting means 51b, as low-order bits.

Further, the N-bit signal output from the predetermined unit counting means 50b is a predetermined unit Time Stamp representing a line number indicating what the number of order of a block having been output from the ECC encoder 12 is in line periods from a predetermined reference. Furthermore, the M-bit signal output from the predetermined unit internal counting means 51b is a predetermined unit internal Time Stamp representing the time from the head of lines, i. e., a fixed position (timing) used as the reference of a line period in which a block output from the ECC encoder 12 is included to the video signal position (timing) wherein the block is output from the ECC encoder 12. Moreover, Time Stamps (TS21 to TS33) are added herein to video signals, respectively. However, both n and m of TSnm are natural numbers not less than 1. n represents what the number of order of a block having been output from the ECC encoder 12 is in line periods (corresponding to the predetermined unit Time Stamp). m represents the time from the head of line which is a fixed position (timing), used as the reference of a line period in which a block output from the ECC encoder 12 is included to the video signal position (timing) wherein the block is currently output from the ECC encoder 12, and represents the time-of-day number in lines (corresponding to the number of the predetermined unit internal Time Stamp).

The output signal of the ECC encoder 12 is temporarily stored in the buffer 29b, and information stored within the constant time is output as one set unit to the synchronizing signal adding means 13.

The output signal of the buffer 29b is output to the synchronizing signal adding means 13 wherein synchronizing signals are added (FIG. 17(D)), and transmitted via a transmission line.

On the other hand, in the receiving apparatus o receiving method, synchronizing signals are eliminated from the received signal (FIG. 17(E)) by the synchronizing signal eliminating means 7. Then, on the basis of the Time Stamps (TS21 to TS33) in the output signal of the synchronizing signal eliminating means 7, the output signal (FIG. 17(F)) of the synchronizing signal eliminating means 7 is delayed by the buffer 31b block by block so that the time interval among the blocks of video signals is the same as that obtained when video signals are input during sending, and output (FIG. 17(G)). Next, signal error correction is carried out on the basis of the error correction code by the ECC decoder 14 (FIG. 17(H)). In other words, the predetermined unit delaying means 52b recognizes a line number which is a predetermined unit Time Stamp (N bits) added by the predetermined unit counting means 50b, and the predetermined unit internal delaying means 53b recognizes an M-bit Time Stamp (predetermined unit internal information from the head of lines to the current position, that is, the position (timing) wherein a video signal is output from the ECC encoder 12) supplied by the predetermined unit internal counting means 51b.

In accordance with the direction of this predetermined unit delaying means 52b and the predetermined unit internal delaying means 53b, the blocks of video signals stored in the buffer 31b are delayed block by block until arrival to a predetermined time of day, and then output. The predetermined time of day is the time of day elapsed from the timing corresponding to the N-bit predetermined unit Time Stamp (the Time Stamp representing what the number of order is in lines from a predetermined reference) to the time corresponding to the predetermined unit internal Time Stamp (T1 to T5). The predetermined unit internal Time Stamps (T1 to T5) are Time Stamps each representing the time from the head position (timing) of a fixed video signal line in which a block of video signal is included to the position (timing) of the video signal currently input. After this, the output signal of the buffer 31b undergoes signal error correction on the basis of the error correction code at the ECC decoder 14, is decompressed, and becomes a digital video output signal.

With this configuration, the same effects as those of (the sixth embodiment) can be obtained.

The present embodiment is made by providing the Time Stamp adding means 39 in the second embodiment; however, the same effects can be obtained by providing the Time Stamp adding means in other embodiments.

In the present embodiment, a video signal is used as an information signal, and one line is used as the predetermined unit of the video signals. Therefore, the predetermined unit may be defined by n frames (n is a natural number not less than 1) of video signals, or the predetermined unit may be defined by n fields or n lines (n is a natural number not less than 1) of video signals may also be used. However, a signal other than the video signal may be used as an information signal; the predetermined unit should only have a constant interval.

Furthermore, one set information unit in accordance with the present embodiment comprises a constant information unit, i. e., a block, generated within one line period; apart from this, a set information unit may also comprise a block which is a constant information unit generated within n line periods (n is a natural number not less than 1) of video signals.

Moreover, as other modification, a set information unit may also comprise a block which is a constant information unit generated within n field periods or n frame periods (n is a natural number not less than 1) of video signals.

Besides, the fixed time position (timing) of a predetermined unit of video signals should only be the position synchronous with the period of line, field or frame.

Therefore, the fixed time position is not necessarily located at the head of lines, fields or frames. For example, the same thing can be established at the rising or falling portion of a vertical synchronizing signal or a horizontal synchronizing signal; the position should only be a fixed position (timing) having a constant period.

In addition, when the predetermined unit is one line, one field or one frame, a line counter, a field counter or a frame counter can be used respectively as a predetermined unit counting means. By using these, general-purpose counters can be used, whereby the cost of the apparatus can be reduced.

Additionally, as described referring to FIG. 9(B) and as shown in FIG. 18 described later, a system which assigns, for every predetermined unit, a predetermined identification number in or together with a synchronizing signal, and transmits information is used, the predetermined unit counting means 50b and the predetermined unit delaying means 52b in accordance with this embodiment can be made unnecessary. The identification number is herein a line number assigned to every line in the present embodiment; in FIG. 18, 1 to n in identification number 1, ..., identification number n (n is a natural number not less than 1) correspond to line numbers.

In the sending side shown in the upper half of FIG. 16, in the case where plural constant information units of information signals are collected and is made to a predetermined unit and the predetermined unit has an identification code for identifying each predetermined unit, the Time Stamp adding means comprises a predetermined unit internal counting means which counts the time from the fixed time position (timing) used as the reference of the predetermined unit of the above-mentioned information signals to the position (timing) to which a Time Stamp (TS) is added. This transmission apparatus or transmission method is characterized in that the Time Stamp (TS) comprises a predetermined unit internal Time Stamp representing the time from a fixed time position (timing) used as the reference of the predetermined unit of information signals to the time position (timing) to which a Time Stamp (TS) is added.

On the other hand, in the receiving side shown in the lower half of FIG. 16, in the case where plural constant information units of information signals are collected and become a predetermined unit, and the predetermined unit has an identification code for identifying each predetermined unit, the unit comprises a predetermined unit internal Time Stamp representing the time from a fixed position (timing) used as the reference of the predetermined unit of information signals to the position (timing) to which a Time Stamp (TS) is added. In accordance with the Time Stamp added to each constant information unit of information signal, a constant information unit (block) is delayed by the time corresponding to the predetermined unit internal Time Stamp of the above-mentioned information signal at each constant information unit of information signal. This receiving apparatus or receiving system is characterized as described below. The Time Stamp (TS) comprises a predetermined unit internal Time Stamp representing the time from a fixed position (timing) used as the reference of the predetermined unit of the information signals to the position (timing) to which a Time Stamp (TS) is added; therein, in accordance with the Time Stamp added to each constant information unit of information signal, a constant information unit (block) is delayed by the time corresponding to the predetermined unit internal Time Stamp of the information signal at each constant information unit of information signal.

Furthermore, in the case where one set information unit is used as information stored within a constant time, for example in the case where blocks, i. e., constant information units, generated in one line period are collected and become one set information unit, the predetermined unit counting means 50a (50b sic) and the predetermined unit delaying means 52a (52b sic) in accordance with the present embodiment can be made unnecessary.

In other words, on the sending side of FIG. 16, in the case where plural constant information units of information signals are collected and become a predetermined unit having a constant time length, the Time Stamp adding means comprises a predetermined unit internal counting means which counts the time from the fixed position (timing) used as the reference of the predetermined unit of the above-mentioned information signals to the position (timing) to which a Time Stamp (TS) is added. This transmission apparatus or transmission method is characterized in that the Time Stamp (TS) comprises the predetermined unit internal Time Stamp representing the time from the fixed position (timing) used as the reference of the predetermined unit of the information signals to the position (timing) to which Time Stamp (TS) is added.

On the other hand, in the receiving side of FIG. 16, in the case where plural constant information units of information signals are collected and become a predetermined unit having a constant time length, the unit comprises the predetermined unit internal Time Stamp representing the time from the fixed position (timing) used as the reference of the predetermined unit of the information signals to the position (timing) to which Time Stamp (TS) is added, which can be obtained by counting the number of constant information signals or predetermined units. Furthermore, in accordance with the Time Stamp (TS) added to each constant information unit of information signal, the configuration and method on the receiving side delays a constant information unit (block) by the time corresponding to the predetermined unit internal Time Stamp of the above-mentioned information signal at each constant information unit of information signal. This receiving apparatus or receiving system is characterized as described below. The Time Stamp (TS) comprises a predetermined unit internal Time Stamp representing the time from a fixed position (timing) used as the reference of the predetermined unit of the information signals to the position (timing) to which a Time Stamp (TS) is added; in accordance with the Time Stamp added to each constant information unit of information signal, a constant information unit (block) is delayed by the time corresponding to the predetermined unit internal Time Stamp of the information signal at each constant information unit of information signal.

Furthermore, in the present embodiment, the same buffer 31b is used and this buffer 31b delays blocks of video signals by the time corresponding to [the predetermined unit Time Stamp + the predetermined unit internal Time Stamp] simultaneously. However, apart from this, the buffer 31b may be configured to delay a constant information unit (block) by the time corresponding to the predetermined unit Time Stamp, and then to delay the constant information unit (block) by the time corresponding to the predetermined unit internal Time Stamp, or to delay the constant information unit (block) by the time corresponding to the predetermined unit internal Time Stamp, and then to delay the constant information unit (block) by the time corresponding to the predetermined unit Time Stamp.

### [Ninth embodiment]

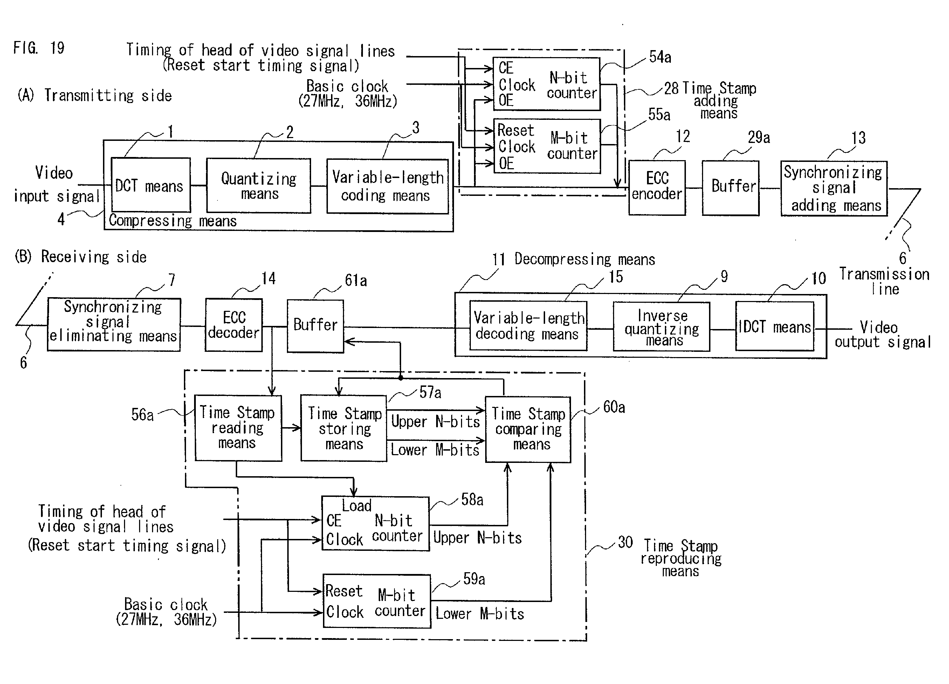

FIG. 19 is a view showing a transmission system, a transmission method, a transmission apparatus, a transmission method, a receiving apparatus and a receiving method in accordance with a ninth embodiment of the present invention. In other words, the circuit shown in FIG. 14 applies in the case where the Time Stamp representing the time when a signal is input to the ECC encoder 12 is added to every constant information unit (hereinafter referred to as "block") by the Time Stamp adding means 28 shown in FIG. 10. Those components corresponding to the components having already been described in the explanation of the preceding embodiment are designated by the same reference signs, and overlap explanations are omitted.

The ninth embodiment is a development from the first embodiment. In the present embodiment, the Time Stamp adding means on the sending side of the fifth embodiment comprises an N-bit counter and an M-bit counter; in the same way, the Time Stamp reproducing means comprises an N-bit counter, an M-bit counter, a Time Stamp reading means, a Time Stamp storing means and a Time Stamp comparing means.

In other words, the present embodiment provides another more detailed embodiment regarding the Time Stamp adding means 28 and the Time Stamp reproducing means 30 in accordance with the fifth embodiment, and their Time Stamp adding and reproducing methods in particular.

The Time Stamp adding means 28 comprises an N-bit counter 54a which is a predetermined unit counting means and an M-bit counter 55a which is a predetermined unit internal counting means.

An information signal treated at the transmission apparatus, the receiving apparatus, etc. in accordance with the ninth embodiment of the present invention is a video signal whose time relationship is required to be saved between the transmission apparatus and receiving apparatus; the line period of the video signal is used as a predetermined unit. Therefore, blocks, each block being used as a constant information unit of video signal, generated in one line period of the video signal, in other words, plural blocks, are collected to form a predetermined unit.

The N-bit counter 54a is used to count the number of line periods of video signals having been input; it counts to find what the number of order of a block having been input to the ECC encoder 12 is in line periods from a predetermined reference when it was input, and outputs the value in N bits.

The predetermined reference is herein a time reference, and configuration is to have a clock used in common between the sending and receiving sides. A specific time may be used as the predetermined reference, or a block, a synchronizing signal or the like having been sent from the sending side to the receiving side may also be used as the predetermined reference.

In other words, the N-bit counter 54a counts the number of lines on the basis of the timing of the head of the video signal lines input from the CE terminal in synchronization with the basic clock input to the Clock terminal; in other words, a count value, in N bits, representing what the number of order of a block having been input to the ECC encoder 12 is in line periods from the predetermined reference when it was input is output, on the basis of the timing wherein the block of video signal input from the OE terminal is generated.

Regarding the block of video signal input to the ECC encoder 12, the M-bit counter 55a counts the time from the position for the reference to line periods, for example, the position (timing) of the head of lines in which it is included, to the current position, that is, the position (timing) wherein the block of video signal is input to the ECC encoder 12, and outputs this count value as a Time Stamp in M bits.

In other words, the M-bit counter 55a resets its count value in synchronization with the basic clock input to the Clock terminal and at the timing (reset start timing signal) of the head of the video signal lines input from the Reset terminal, whereby it continues counting the time from the head of the lines to the current time. And, on the basis of the timing wherein the block of video signal input from the OE terminal (output enable terminal) is generated, its count value, in M bits, that is, the count value representing the time from the head position (timing) of the lines to the current position, that is, the position (timing) wherein the block of video signal is input to the ECC encoder 12 is output.

At this time, the ninth embodiment uses a basic clock of 27 MHz or 36 MHz. Furthermore, this basic clock information may be reproduced from a carrier wave transmitted from the transmission apparatus at the receiving apparatus, or may be sent from the transmission apparatus to the receiving apparatus via a transmission line other than the transmission line for transmitting video signals. Furthermore, in the same manner as that of the basic clock, the reset start timing signal (RST) which is a reference signal may be reproduced from video signals sent from the sending side to the receiving side, when the M-bit counter 55a counts Time Stamps (TS). Alternatively, it may be sent from the sending side to the receiving side via a transmission line other than the transmission line for transmitting video signals.

Accordingly, as the whole of the Time Stamp adding means 28, an N-bit signal output by the N-bit counter 54a is made to high-order bits, and an M-bit signal output by the M-bit counter 55a is made to low-order bits, and a Time Stamp in (N + M) bits in total is added to the input signal of the ECC encoder 12.

On the other hand, when the ECC encoder 12 is not used, the Time Stamp adding means 28 is configured to recognize, block by block, a Time Stamp (TS) representing the time when the output signal of a compressing means 4 is output; a Time Stamp is added to every block of the output signal of the compressing means 4, and the signal is output to a buffer 29a. The buffer 29a may be provided between the compressing means 4 and the synchronizing signal adding means 13, and the buffer 29a should only be configured to temporarily store the output signal of the compressing means 4, and to output information stored within a constant time as one set unit to the synchronizing signal adding means 13.

Next, in the Time Stamp reproducing means 30, a predetermined unit delaying means comprises a Time Stamp reading means 56a, a Time Stamp storing means 57a, an N-bit counter 58a used as a first counter and a comparing means 60a. A predetermined unit internal delaying means comprises the Time Stamp reading means 56a, the Time Stamp storing means 57a, an M-bit counter 59a used as a second counter and the comparing means 60a.

The Time Stamp reading means 56a is a means to extract only the Time Stamp added to every block from the output signal of the ECC decoder 14, and output it.

The Time Stamp storing means 57a sequentially stores the values of the Time Stamps (TS) extracted by the Time Stamp reading means 56a at each extraction, with N bits as a high-order portion and M bits as a low-order portion, and outputs the value of the oldest stored Time Stamp, with N bits as a high-order portion and M bits as a low-order portion. Furthermore, in accordance with the direction of the Time Stamp comparing means 60a described later, the output signal of the Time Stamp comparing means 60a is input to the buffer 61a; each time the oldest block stored in the buffer 61a is output from the buffer 61a, the Time Stamp storing means 57a outputs a Time Stamp (TS) next older than the Time Stamp (TS) being output currently.

In the N-bit counter 58a, value (L) of the high-order bits (N bits) of the Time Stamp (TS) of the first received block subtracted from K (K is a natural number not less than 1, predetermined by a time interval among blocks), that is, (L - K), is loaded into the Load terminal of the N-bit counter 58a. After this, each time the reset start timing signal (RST) supplied from the sending side is input to the CE terminal, the N-bit counter 58a counts up one by one from the value (L - K) in synchronization with the reference clock (F) supplied from the sending side, and outputs its current count value.

Each time the reset start timing signal (RST) supplied from the sending side is input to the Reset terminal, the M-bit counter 59a resets the count value of the M-bit counter 59a. In synchronization with the reference clock (F) supplied from the sending side, the M-bit counter 59a counts up from a reset value ("0" for example) and outputs its current count value.

The Time Stamp comparing means 60a compares the upper-bit portion (N bits) of the Time Stamp (TS), i. e., the output signal of the Time Stamp storing means 57a with the output value of the N-bit counter 58a, and also compares the lower-bit portion (M bits) of the Time Stamp (TS), i. e., the output signal of the Time Stamp storing means 57a with the output value of the M-bit counter 59a. When both have reached an equal value, the Time Stamp comparing means 60a outputs a signal which directs to output the oldest block stored in the buffer 61a to the buffer 61a. Furthermore, the Time Stamp comparing means 60a outputs a signal which directs to output a Time Stamp (TS) next older than the oldest stored Time Stamp (TS) to the Time Stamp storing means 57a.

The buffer 61a temporarily stores the output signal of an ECC decoder 14, and outputs the oldest block stored in the buffer 61a to a decompressing means 11 (a variable-length decoding means 15) in response to the output signal of the Time Stamp comparing means 60a. Furthermore, after outputting the oldest block stored in the buffer 61a to the decompressing means 11 (the variable-length decoding means 15), the buffer 61a treats a block next older than the output block as the oldest block. In this way, each time the buffer 61a outputs the oldest block, it treats the block next older than the output block as the oldest block.

In the ninth embodiment, FIFO (First In First Out) memory is used for the Time Stamp storing means 57a and the buffer 61a.

On the other hand, in the case of a modified example without using the ECC decoder 14, the Time Stamp reproducing means 30 recognizes, block by block, the Time Stamp added by the Time Stamp adding means 28. In accordance with the direction of this Time Stamp reproducing means 30, the buffer 61a, in which the output signal of the synchronizing signal eliminating means 7 is stored, outputs the stored information signal at the timing corresponding to the Time Stamp block by block. The buffer 61a may be provided between the synchronizing signal eliminating means 7 and the decompressing means 11, and configured to temporarily store the output signal of the synchronizing signal eliminating means 7.

In other words, in the transmission apparatus and transmission method in accordance with the ninth embodiment, when the line period of a video signal is used as a predetermined unit, and when blocks which are constant information units of video signals used as information signals generated in one line period of the video signal are collected to form a predetermined unit, the Time Stamp described in the fifth embodiment comprises a predetermined unit Time Stamp and a predetermined unit internal Time Stamp. The predetermined unit Time tamp represents what the number of order of a block of information signal (video signal), having been output from the compressing means 4 (in the case where the ECC encoder 12 is not used) or having been input to the ECC encoder 12 (in the case where the ECC encoder 12 is used), is in predetermined unit (line) periods from a predetermined reference when it was output or input. Furthermore, the predetermined unit internal Time Stamp represents the time from a fixed position (timing) used as the reference of a predetermined unit (line period) of information signals (video signals), i. e., the head position (timing), to the current time, i. e., the position (timing) wherein the information signal (video signal) is output from the compressing means 4 (in the case where the ECC encoder 12 is not used) or input to the ECC encoder 12 (in the case where the ECC encoder 12 is used).

On the other hand, in the receiving apparatus and receiving method in accordance with the ninth embodiment, when the line period of a video signal is used as a predetermined unit, and when constant information units, i. e., blocks, of video signals used as information signals generated in one line period of the video signal are collected to form a predetermined unit, the Time Stamp described in the fifth embodiment comprises a predetermined unit Time Stamp and a predetermined unit internal Time Stamp.

The predetermined unit Time Stamp represents what the number of order of a block of information signal (video signal), having been output from the compressing means 4 (in the case where the ECC encoder 12 is not used) or having been input to the ECC encoder 12 (in the case where the ECC encoder 12 is used), is in predetermined units (line periods) from a predetermined reference when it was output or input. Furthermore, the predetermined unit internal Time Stamp represents the time from a fixed position (timing) used as the reference of a predetermined unit (line period) of information signals (video signals), i. e., the head position (timing), to the current time, i. e., the position (timing) wherein the information signal (video signal) is output from the compressing means 4 (in the case where the ECC encoder 12 is not used) or input to the ECC encoder 12 (in the case where the ECC encoder 12 is used). On the basis of the Time Stamp added to every constant information unit (block) of information signal (video signal), the constant information unit (block) is delayed until arrival to a predetermined time of day. The predetermined time of day is the time of day elapsed from the time (timing) corresponding to the time of day represented by the predetermined unit Time Stamp to the time corresponding to the Time Stamp represented by the predetermined unit internal Time Stamp. The operations of the above-mentioned transmission system of the ninth embodiment will be described below.

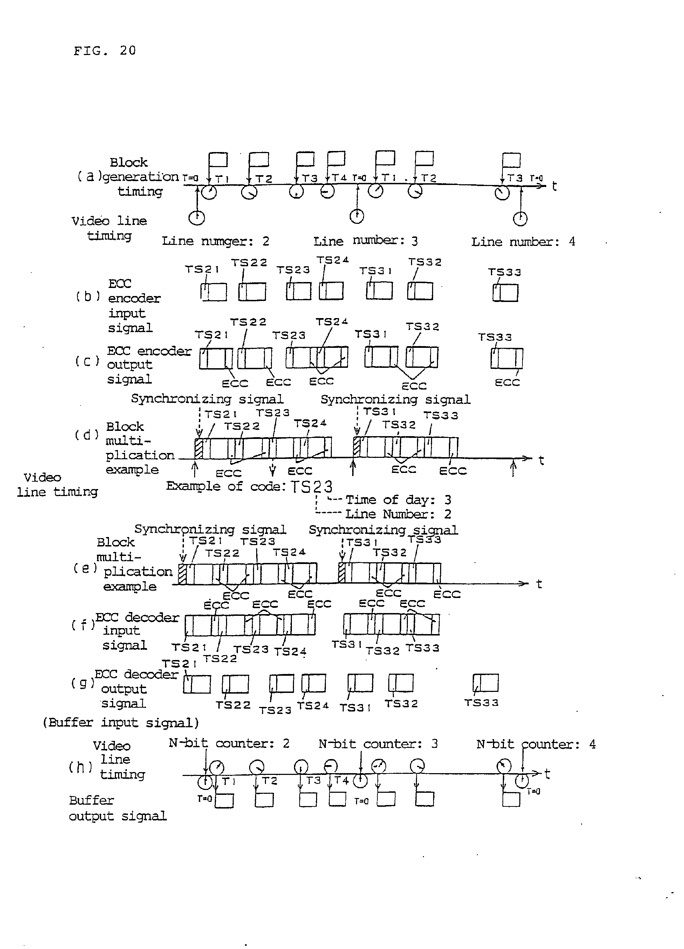

In the transmission apparatus or transmission method, a digital video input signal is input to the compressing means 4 and the amount of the information is compressed. The output signal (FIG. 20(A)) of the compressing means 4 is output to the ECC encoder 12; at that time, the Time Stamp (TS) representing the time when the output signal is output from the compressing means 4, or the Time Stamp (TS) representing the time when the input signal is input to the ECC encoder 12 is added to every block used as a constant information unit (FIG. 20(B)). Herein, the Time Stamp output from the Time Stamp adding means 28 comprises an N-bit high-order bit portion and an M-bit low-order bit portion. The high-order bit signal is an N-bit signal output by the N-bit counter 54a. The N-bit signal represents a predetermined unit Time Stamp (line numbers: 2, 3, ... in FIG. 20) representing a line number indicating what the number of order of a block of video signal, having been output from the compressing means 4 or having been input to the ECC encoder 12, is in line periods from a predetermined reference.

The above-mentioned low-order bit signal is an M-bit signal output by the M-bit counter 55a, and represents a predetermined unit internal Time Stamp (T1, T2, ... in FIG. 20) representing the time from a fixed position (timing) used as the reference of a line period in which a block of video signal output from the compressing means 4 or input to the ECC encoder 12 is included, i. e., the head of lines in this case to the video signal position (timing) wherein the block is output from the compressing means 4 or input to the ECC encoder 12 (in other words, the time from the head to the video signal position (timing) currently being input). Furthermore, a Time Stamp (including up to TS21 to TS33, TS (line number), (line internal time of day)) is added herein to each video signal. In addition, in the present embodiment, the basic clock and the reset start timing signal (RST) are sent from the sending side to the receiving side via another transmission line.

Next, an error correction code is added to each video signal and a Time Stamp (TS21 to TS33) by the ECC encoder 12 (refer to FIG. 20(C)). The output signal of the ECC encoder 12 is temporarily stored in the buffer 29a, information stored within a constant time is output as one set unit to the synchronizing signal adding means 13. The output signal of the buffer 29a is output to the synchronizing signal adding means 13 wherein synchronizing signals are added (FIG. 20(D)), and transmitted via a transmission line.

On the other hand, in the receiving apparatus or receiving method of the ninth embodiment, synchronizing signals are eliminated from the received signal (FIG. 20(E)) by the synchronizing signal eliminating means 7, and then, the output signal (FIG. 20(F)) of the synchronizing signal eliminating means 7 undergoes signal error correction on the basis of the error correction code at the ECC decoder 14. Next, on the basis of the Time Stamps (TS21 to TS33) in the output signal (FIG. 20(G)) of the ECC decoder 14, delay is conducted by the buffer 61a so that the time interval among video signals is the same as that obtained when video signals are input to the ECC encoder 12 during sending (FIG. 20(H)).

A block used as an output signal of the ECC decoder 14 is stored in the buffer 61a. On the other hand, the Time Stamp reading means 56a reads the Time Stamp (TS) added to the block, and its value is stored in the Time Stamp storing means 57a. Furthermore, when a new block is output from the ECC decoder 14, the new block is stored in the buffer 61a, the Time Stamp (TS) corresponding to the block is read, and the value is sequentially stored in the Time Stamp storing means 57a.

On the other hand, a value (L - K) of which a value K (K is a natural number not less than 1) is subtracted from a value (L) of the high-order N bits of the Time Stamp (TS) of the first received block subtracted from is loaded into the N-bit counter 58a which is a first counter, and after this, each time the reset start timing signal (RST) supplied from the sending side is input to the N-bit counter 58a, the output signal of the N-bit counter 58a is counted up one by one.

Furthermore, each time the reset start timing signal (RST) is supplied from the sending side, the M-bit counter 59a which is a second counter is reset, and the output signal of the M-bit counter 59a is counted up one by one from a reset value ("0" for example).

Next, the value of the upper-bit portion (N bits) of the oldest Time Stamp (TS) stored in the Time Stamp storing means 57a is compared with the output value of the N-bit counter 58a, and the value of the lower-bit portion (M bits) of the oldest Time Stamp (TS) is compared with the output value of the M-bit counter 59a by the Time Stamp comparing means 60a. When both have reached an equal value, the output signal of the Time Stamp comparing means 60a directs the buffer 61a to output the oldest block stored in the buffer 61a. The buffer 61a outputs the oldest block in accordance with the direction; the Time Stamp storing means 57a is also directed to output the Time Stamp (TS) of a block next older than the oldest stored Time Stamp (TS). The Time Stamp storing means 57a outputs the Time Stamp (TS) next older than the oldest stored Time Stamp (TS).

After this, the value of the upper-bit portion (N bits) of the Time Stamp of the block next older than the oldest block is compared with the output value of the N-bit counter 58a, and the lower-bit portion (M bits) of the Time Stamp is compared with the output value of the M-bit counter 59a. When both have reached an equal value, a signal is output to the Time Stamp storing means 57a and the buffer 61a. The buffer 61a outputs the block (the currently oldest block) next older than the oldest block. The Time Stamp storing means 57a outputs the Time Stamp (TS) second next older than the oldest stored Time Stamp (TS)(the Time Stamp (TS) of the block next older than the currently oldest block).

The operation similar to that described above will be repeated, and after this, the output signal of the buffer 61a is decompressed, and becomes a digital video output signal.

Furthermore, in the system of FIG. 19, as a modified example, as shown in FIG. 18, in the case of a system which assigns, for every predetermined unit, a predetermined identification number [a line number assigned to every line in the present embodiment; in FIG. 18, 1 to n in identification number 1, ..., identification number n (n is a natural number not less than 1) correspond to line numbers] in or together with a synchronizing signal, and transmits information, the N-bit counters 54a and 58a in accordance with the present embodiment can be made unnecessary.

In other words, in the sending side of the ninth embodiment shown in FIG. 19, in the case where plural constant information units of information signals are collected and become a predetermined unit, and the predetermined unit has an identification code for identifying each predetermined unit, the Time Stamp adding means comprises a predetermined unit internal counting means, i. e., the M-bit counter 55a, which counts the time from the fixed position (timing) used as the reference of the predetermined unit of the above-mentioned information signals to the position (timing) to which a Time Stamp (TS) is added. The transmission apparatus or transmission method is characterized in that the Time Stamp (TS) comprises a predetermined unit internal Time Stamp, i. e., low-order bit (M-bit) information, representing the time from a fixed position (timing) used as the reference of the predetermined unit of information signals to the position (timing) to which a Time Stamp (TS) is added.

On the other hand, in the receiving side of the ninth embodiment shown in FIG. 19, in the case where plural constant information units of information signals are collected and become a predetermined unit, and the predetermined unit has an identification code for identifying each predetermined unit, the Time Stamp adding means comprises a low-order bit (M-bit) which is a predetermined unit internal Time Stamp information representing the time from a fixed position (timing) used as the reference of the predetermined unit of information signals to the position (timing) to which a Time Stamp (TS) is added. The configuration of this receiving side comprises the Time Stamp reading means 56a, the Time Stamp storing means 57a, the M-bit counter 59a used as the second counter and the comparing means 60a. In accordance with the Time Stamp added to each constant information unit of information signal, the above-mentioned Time Stamp reading means 56a delays a constant information unit (block) by the time corresponding to the predetermined unit internal Time Stamp of the above-mentioned information signal at each constant information unit of information signal. The receiving apparatus or receiving system is characterized in that the Time Stamp (TS) comprises a low-order bit (M-bit) information of a predetermined unit internal Time Stamp information, representing the time from a fixed position (timing) used as the reference of the predetermined unit of information signals to the position (timing) to which a Time Stamp (TS) is added, and that in accordance with the Time Stamp added to each constant information unit of information signal, a constant information unit (block) is delayed by the time corresponding to the predetermined unit internal Time Stamp of the information signal at each constant information unit of information signal.

Furthermore, in the case where one set information unit is used as information stored within a constant time, for example in the case where blocks which are constant information units, generated in one line period are collected and become one set information unit, the N-bit counters 54a and 58a of the present embodiment can be made unnecessary.

In other words, on the sending side, in the case where plural constant information units of information signals are collected and become a predetermined unit having a constant time length, the Time Stamp adding means comprises the M-bit counter 55a of a predetermined unit internal counting means which counts the time from the fixed position (timing) used as the reference of the predetermined unit of the above-mentioned information signals to the position (timing) to which a Time Stamp (TS) is added. This transmission apparatus or transmission method is characterized in that the Time Stamp (TS) comprises the predetermined unit internal Time Stamp, i. e., low-order bit (M-bit) information, representing the time from the fixed position (timing) used as the reference of the predetermined unit of the information signals to the position (timing) at which Time Stamp (TS) is added.

On the other hand, in the receiving side, in the case where plural constant information units of information signals are collected and become a predetermined unit having a constant time length, the unit comprises a low-order bit (M-bit) which is the predetermined unit internal Time Stamp information, representing the time from the fixed position (timing) used as the reference of the predetermined unit of the information signals to the position (timing) at which Time Stamp (TS) is added, which can be obtained by counting the number of constant information signals or predetermined units. This receiving side comprises the Time Stamp reading means 56a, the Time Stamp storing means 57a, the M-bit counter 59a which is a second counter and the comparing means 60a. In accordance with the Time Stamp added to each constant information unit of information signal, the Time Stamp reading means 56a delays a constant information unit (block) by the time corresponding to the predetermined unit internal Time Stamp of the above-mentioned information signal at each constant information unit of information signal. This reception apparatus or receiving system is characterized in that the Time Stamp (TS) comprises a low-order (M-bit) which is a predetermined unit internal Time Stamp information, representing the time from a fixed position (timing) used as the reference of the predetermined unit of information signals to the position (timing) at which a Time Stamp (TS) is added, which can be obtained by counting the number of constant information signals or predetermined units, and that also comprises so that, in accordance with the Time Stamp added to each constant information unit of information signal, a constant information unit (block) is delayed by the time corresponding to the predetermined unit internal Time Stamp of the information signal every constant information unit of information signal.

With this configuration, the same effects as those of the fifth embodiment can be obtained.

Although the present embodiment is made by providing the Time Stamp adding means 28 and the Time Stamp reproducing means 30 in the second embodiment, the same effects can be obtained by providing the Time Stamp adding means in other embodiments.

In the present embodiment, although the predetermined unit is one line of video signal, the predetermined unit may be a constant interval. Therefore, as the predetermined unit, n lines (n is a natural number not less than 1) of video signals may be used, or as the predetermined unit, n fields or n frames (n is a natural number not less than 1) of video signals may also be used.

Furthermore, the fixed position (timing) of a predetermined unit of video signals should only be the position synchronizing with one of line, field and frame.

Therefore, the fixed position (timing) of the predetermined unit of video signals is not necessarily located at the head of lines, fields or frames.

In addition, when the predetermined unit is one line, a line counter can be used; when the unit is one field, a field counter can be used; when the unit is one frame, a frame counter can be used; as a number counting means.

### [Tenth embodiment]

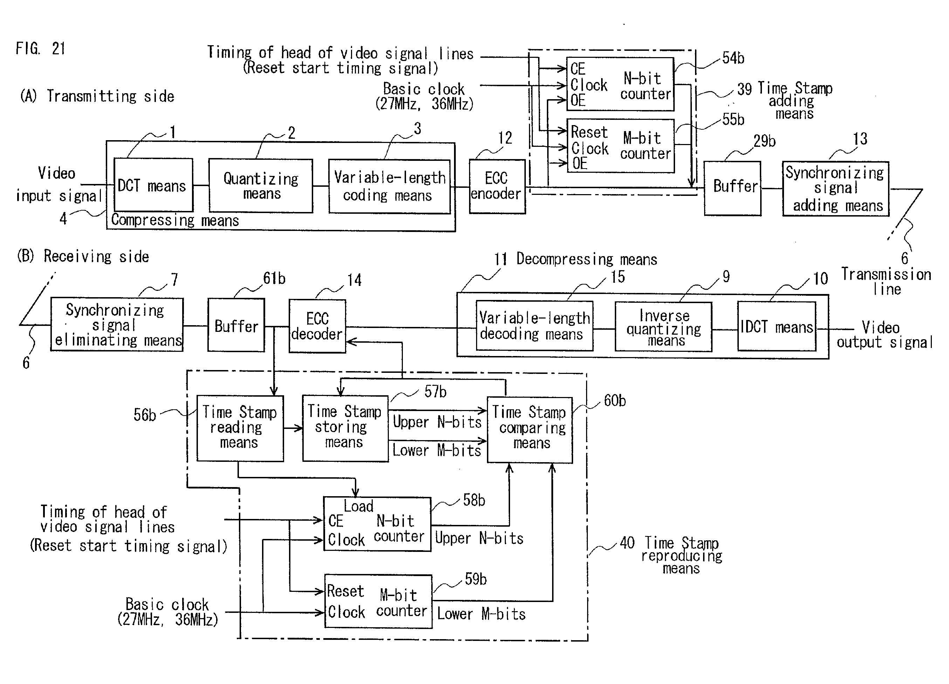

FIG. 21 is a view showing a transmission system, a transmission method, a transmission apparatus, a transmission method, a receiving apparatus and a receiving method in accordance with a tenth embodiment of the present invention. In the tenth embodiment, a portion corresponding to the Time Stamp adding means on the sending side of the sixth embodiment (FIG. 12) comprises an N-bit counter and an M-bit counter; and a portion corresponding to the Time Stamp reproducing means on the receiving side comprises an N-bit counter, an M-bit counter, a Time Stamp reading means, a Time Stamp storing means and a Time Stamp comparing means. In other words, in accordance with the present embodiment, the Time Stamp representing the time when a signal is output from the ECC encoder 12 is added to every block by the Time Stamp adding means 39 of the sixth embodiment. Those components corresponding to the components having already been described in the explanation of the preceding embodiment are designated by the same reference signs, and overlap explanations are omitted.

The tenth embodiment provides another more detailed embodiment regarding the Time Stamp adding means 39 and the Time Stamp reproducing means 40 in accordance with the sixth embodiment, and their Time Stamp adding and reproducing methods in particular.

In the present embodiment, the Time Stamp adding means 39 comprises an N-bit counter 54b which is a predetermined unit counting means and an M-bit counter 55b which is a predetermined unit internal counting means.

An information signal treated at the transmission apparatus or the receiving apparatus in accordance with the present embodiment of the present invention is a video signal whose timing relationship must be saved between the transmission apparatus and receiving apparatus; the line period of the video signal is made to a predetermined unit. Therefore, blocks, each block being used as a constant information unit of video signal, generated in one line period of the video signal, in other words, plural blocks, are collected to form a predetermined unit.

The N-bit counter 54b counts the number of line periods of video signals having been input and counts what the number of order of a block output from the ECC encoder 12 is in line periods from a predetermined reference when it was output, and outputs the value in N bits. The predetermined reference is herein a time reference, and it is configured so as to have a clock used in common between the sending and receiving sides; a specific time may be used as the reference. Alternatively a block, a synchronizing signal or the like having been sent from the sending side to the receiving side may also be used as the reference.

In other words, the N-bit counter 54b counts the number of lines on the basis the head timing of a line of the video signal input from the CE terminal in synchronization with the basic clock input to the Clock terminal. And the N-bit counter 54b outputs a count value representing what the number of order of a block having been output from the ECC encoder 12 is in line periods from a predetermined reference when it was output in N bits, on the basis of the timing wherein the block of video signal input from the OE terminal is generated.

Regarding the block of video signal output from the ECC encoder 12, the M-bit counter 55b counts the time from the position for the reference of line periods, for example, the head position (timing) of lines in which it is included, to the current position, that is, the position (timing) wherein the block of video signal is output from the ECC encoder 12, and outputs this count value as a Time Stamp in M bits.

Therefore, the M-bit counter 55b resets its count value in synchronization with the basic clock input to the Clock terminal and at the timing (reset start timing signal) of the head of the video signal lines input from the Reset terminal, whereby it continues counting the time from the head of the lines to the current time. On the basis of the timing wherein the block of video signal input from the OE terminal is generated, the M-bit counter 55b outputs its count value, that is, the count value representing the time from the head position (timing) of the lines to the current position in M bits, that is, the position (timing) wherein the block of video signal is output from the ECC encoder 12.

In the present embodiment, the basic clock uses a basic clock of 27 MHz or 36 MHz. The information of this basic clock may be reproduced from a carrier wave transmitted from the transmission apparatus at the receiving apparatus, or may be sent from the transmission apparatus to the receiving apparatus via a transmission line other than the transmission line for transmitting video signals. Furthermore, in the same manner as that for this basic clock, the reset start timing signal (RST) which is a signal of a reference may be reproduced from video signals sent from the transmission apparatus to the receiving apparatus, when the M-bit counter 55b measures Time Stamps (TS), or may be sent from the sending side to the receiving side via a transmission line other than the transmission line for transmitting video signals.

Accordingly, as the whole of the Time Stamp adding means 39, an N-bit signal output by the N-bit counter 54b is made to high-order bits, and an M-bit signal output by the M-bit counter 55b is made to low-order bits, and a Time Stamp in (N + M) bits in total is added to the output signal of the ECC encoder 12.

On the other hand, in the case of a modified example wherein the ECC encoder 12 is not used, the Time Stamp adding means 39 is configured so as to recognize, block by block, the Time Stamp (TS) representing the time when the output signal of a compressing means 4 is output, a Time Stamp is added to every block of the output signal of the compressing means 4, and the output signal is output to a buffer 29b. The buffer 29b is disposed between the compressing means 4 and the synchronizing signal adding means 13, and temporarily stores the output signal of the compressing means 4, and the buffer 29b outputs information stored within a constant time as one set unit to the synchronizing signal adding means 13.

Subsequently, in the Time Stamp reproducing means 40, a predetermined unit delaying means comprises a Time Stamp reading means 56b, a Time Stamp storing means 57b, an N-bit counter 58b which is a first counter and a comparing means 60b. Furthermore, the predetermined unit internal delaying means comprises the Time Stamp reading means 56b, the Time Stamp storing means 57b, an M-bit counter 59b which is a second counter and the comparing means 60b.

The Time Stamp reading means 56b is a means to extract only the Time Stamp added to every block from the output signal of the synchronizing signal eliminating means 7, and output it.

The Time Stamp storing means 57b sequentially stores the values of the Time Stamps (TS) extracted by the Time Stamp reading means 56b at each extraction, with N bits as a high-order portion and M bits as a low-order portion, and outputs the value of the oldest stored Time Stamp, with N bits as a high-order portion and M bits as a low-order portion. Furthermore, in accordance with the direction of the Time Stamp comparing means 60b described later, the output signal of the Time Stamp comparing means 60b is input to the buffer 61b and every time the oldest block stored in the buffer 61b is output from the buffer 61b, the Time Stamp storing means 57b outputs a Time Stamp (TS) next older than the Time Stamp (TS) being output currently.

In the N-bit counter 58b, a value K (K is a natural number not less than 1, predetermined by a time interval among blocks) is subtracted from a value (L) of the high-order bits (N bits) of the Time Stamp (TS) of the first received block and a value (L - K) is loaded into the Load terminal of the N-bit counter 58b. After then, every time the reset start timing signal (RST) supplied from the sending side is input to the CE terminal, the N-bit counter 58b counts up from the value (L - K) in synchronism with the reference clock (F) supplied from the sending side, and outputs its current count value.

Every time the reset start timing signal (RST) supplied from the sending side is input to the Reset terminal, the M-bit counter 59b resets the count value of the M-bit counter 59b. In synchronism with the reference clock (F) supplied from the sending side, the M-bit counter 59b counts up from a reset value ("0" for example) and outputs its current count value.

The Time Stamp comparing means 60b compares the value of the upper-bit portion (N bits) of the Time Stamp (TS) which is the output signal of the Time Stamp storing means 57b with the output value of the N-bit counter 58b, and also compares the value of the lower-bit portion (M bits) of the Time Stamp (TS) which is the output signal of the Time Stamp storing means 57b with the output value of the M-bit counter 59b. When both have reached an equal value with each other, the Time Stamp comparing means 60b outputs to the buffer 61b a signal which directs to output the oldest block stored in the buffer 61b. Furthermore, the Time Stamp comparing means 60b outputs to the Time Stamp storing means 57a (sic) a signal which directs to output a Time Stamp (TS) next older than the oldest stored Time Stamp (TS).

The buffer 61b temporarily stores the output signal of the synchronizing eliminating means 7, and outputs the oldest block stored in the buffer 61b to a decompressing means 11 (a variable-length decoding means 15) in response to the output signal of the Time Stamp comparing means 60b. Furthermore, after outputting the oldest block stored in the buffer 61b to the variable-length decoding means 15 in the decompressing means 11, the buffer 61b treats a block next older than the output block as the oldest block. In this way, every time the buffer 61b outputs the oldest block, it treats the block next older than the output block as the oldest block.

In this embodiment, FIFO (First In First Out) memory is used for the Time Stamp storing means 57b and the buffer 61b.

On the other hand, in the case of a modified example without using the ECC decoder 14, the Time Stamp reproducing means 40 recognizes, block by block, the Time Stamp added by the Time Stamp adding means 39. In accordance with the direction of this Time Stamp reproducing means 40, the buffer 61b, in which the output signal of the synchronizing signal eliminating means 7 is stored, outputs the stored information signal at the timing corresponding to the Time Stamp block by block. The buffer 61b should only be provided between the synchronizing signal eliminating means 7 and the decompressing means 11, and configured to temporarily store the output signal of the synchronizing signal eliminating means 7.

The transmission apparatus and transmission method in accordance with the present embodiment will be described below, when the line period of a video signal is used as a predetermined unit, in other words, when constant information units, i. e., blocks, of video signals used as information signals generated in one line period of a video signal are collected to form a predetermined unit, i. e., a line. The Time Stamp described in the sixth embodiment comprises a predetermined unit Time Stamp and a predetermined unit internal Time Stamp. The predetermined unit Time Stamp represents what the number of order of a block of information signal (video signal), having been output respectively from the compressing means 4 (in the case where the ECC encoder 12 is not used) or the ECC encoder 12 (in the case where the ECC encoder 12 is used), is in predetermined unit (line) periods when it was output or input. Furthermore, the predetermined unit internal Time Stamp represents the time length from a fixed position (timing) for a predetermined unit (line) of information signals (video signals), i. e., the head position (timing), to the current time, i. e., the position (timing) wherein the information signal (video signal) is output from the compressing means 4 (in the case where the ECC encoder 12 is not used) or the ECC encoder 12 (in the case where the ECC encoder 12 is used).

On the other hand, the receiving apparatus and receiving method in accordance with the tenth embodiment will be described below, when the line period of a video signal is used as a predetermined unit, that is, when constant information units, i. e., blocks, of video signals used as information signals generated in one line period of the video signal are collected to form a predetermined unit. The Time Stamp described in the sixth embodiment comprises a predetermined unit Time Stamp and a predetermined unit internal Time Stamp. The predetermined unit Time Stamp represents what the number of order of a block of information signal (video signal), having been output from the compressing means 4 (in the case where the ECC encoder 12 is not used) or the ECC encoder 12 (in the case where the ECC encoder 12 is used), is in predetermined units (line periods) from a predetermined reference when it was output. Furthermore, the predetermined unit internal Time Stamp represents the time length from a fixed position (timing) used as the reference of a predetermined unit (line period), i. e., the head position (timing), to the current time, i. e., the position (timing) wherein the information signal (video signal) is output from the compressing means 4 (in the case where the ECC encoder 12 is not used) or the ECC encoder 12 (in the case where the ECC encoder 12 is used). Furthermore, on the basis of the Time Stamp added to every constant information unit (block) of information signal (video signal), the constant information unit (block) is configured so as to be delayed until arrival to a predetermined time of day. The predetermined time of day is the time of day elapsed from the time (timing) corresponding to the time of day represented by the predetermined unit Time Stamp to the time corresponding to the Time Stamp represented by the predetermined unit internal Time Stamp.

The operations of the above-mentioned transmission system of the tenth embodiment will be described below.

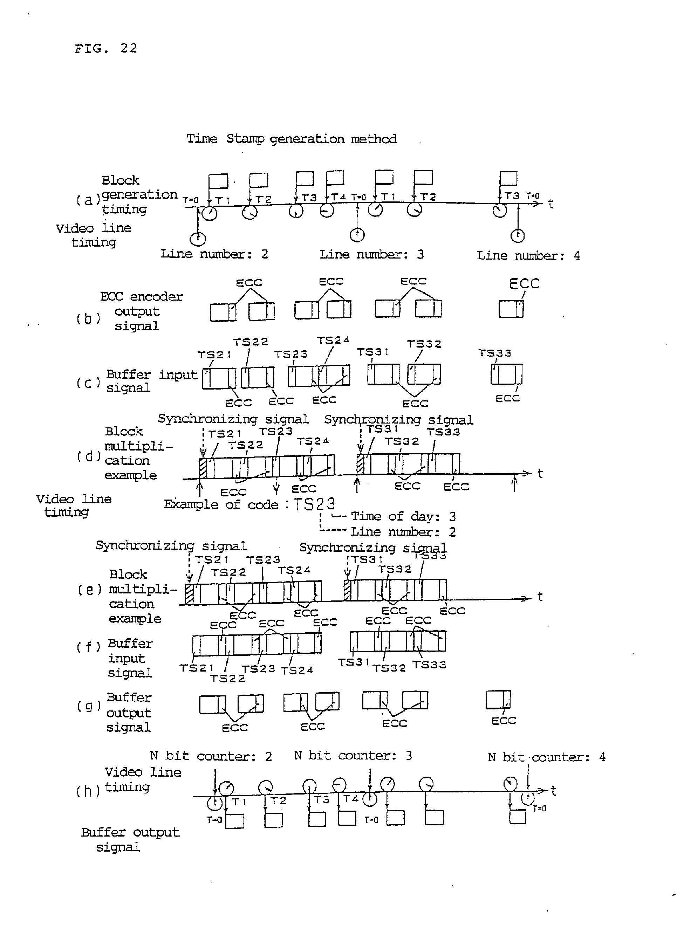

In this transmission apparatus and transmission method, a digital video input signal is input to the compressing means 4 and the amount of the information is compressed. The output signal (FIG. 22(A)) of the compressing means 4 is output to the ECC encoder 12. An error correction code is added to each video signal of the output signal of the compressing means 4 by the ECC encoder 12. Subsequently, the Time Stamp (TS) representing the time when the output signal (refer to FIG. 22(B)) of the ECC encoder 12 is output is added to every block which is a constant information unit (FIG. 22(C)). Herein, the Time Stamp output from the Time Stamp adding means 39 comprises an N-bit high-order bit and an M-bit low-order bit. The high-order bit signal is an N-bit signal output by the N-bit counter 54b. The N-bit signal represents a predetermined unit Time Stamp (line numbers: 2, 3, ... in FIG. 22) representing a line number indicating what the number of order of a block of video signal, having been output from the compressing means 4 or the ECC encoder 12, is in line periods from a predetermined reference.

The above-mentioned low-order bit signal is an M-bit signal output by the M-bit counter 55b and represents a predetermined unit internal Time Stamp (T1, T2, ... in FIG. 22) representing the time from a fixed position (timing) used as the reference of a line period in which a block of video signal output from the compressing means 4 or the ECC encoder 12 is included, i. e., the head of lines in this case to the video signal position (timing) wherein the block is output from the compressing means 4 or the ECC encoder 12 (in other words, the time from the head to the video signal position (timing) currently being input). Incidentally, a Time Stamp (including up to TS21 to TS33, TS (line number), (line internal time of day)) is added herein to each video signal. In addition, in the present embodiment, the basic clock and the reset start timing signal (RST) are sent from the sending side to the receiving side via other transmission line.

The output signal of the ECC encoder 12 is temporarily stored in the buffer 29b, and information stored within a constant time is output as one set unit to the synchronizing signal adding means 13. The output signal of the buffer 29b is output to the synchronizing signal adding means 13 wherein synchronizing signals are added (FIG. 22(D)), and transmitted via a transmission line.

On the other hand, in the receiving apparatus and receiving method, synchronizing signals are eliminated from the received signal (FIG. 22(E)) by the synchronizing signal eliminating means 7, and then, in the output signal (FIG. 22(F)) of the synchronizing signal eliminating means 7, on the basis of the Time Stamps (TS21 to TS33) in the output signal of the synchronizing signal eliminating means 7, video signals are delayed by the buffer 61a so that the time interval among video signals is the same as that obtained when video signals are output from the ECC encoder 12 during sending (FIG. 22(G)). Next, signal error correction is carried out on the basis of an error correction code by the ECC decoder 14 (FIG. 22(H)).

A block which is a signal output from the synchronizing signal eliminating means 7 is stored in the buffer 61b. On the other hand, the Time Stamp reading means 56b reads the Time Stamp (TS) added to the block, and its value is stored in the Time Stamp storing means 57b. Furthermore, when a new block is output from the synchronizing signal eliminating means 7, the new block is stored in the buffer 61b, the Time Stamp (TS) corresponding to the block is read, and the value is sequentially stored in the Time Stamp storing means 57b.

A value K (K is a natural number not less than 1) is subtracted from a value (L) of the high-order N bits of the Time Stamp (TS) of the first received block, a value (L - K) is loaded into the N-bit counter 58b which is a first counter. After this, every time the reset start timing signal (RST) supplied from the sending side is input to the N-bit counter 58b, the output signal of the N-bit counter 58b is counted up one by one.

Furthermore, every time the reset start timing signal (RST) is supplied from the sending side, the M-bit counter 59b which is a second counter is reset, and the output signal of the M-bit counter 59b is counted up one by one from a reset value ("0" for example).

Next, the value of the upper-bit portion (N bits) of the oldest Time Stamp (TS) stored in the Time Stamp storing means 59b (57b sic) is compared with the output value of the N-bit counter 58b, and the value of the lower-bit portion (M bits) of the oldest Time Stamp (TS) is compared with the output value of the M-bit counter 59b by the Time Stamp comparing means 60b. And when both have reached an equal value, the output signal of the Time Stamp comparing means 60b directs the buffer 61b so as to output the oldest block stored therein, and the buffer 61b outputs the oldest block in accordance with the direction. Furthermore, the Time Stamp storing means 57b is also directed to output the Time Stamp (TS) of a block next older than the oldest stored Time Stamp (TS), and the Time Stamp storing means 57b outputs the Time Stamp (TS) next older than the oldest stored Time Stamp (TS).

After this, the value of the upper-bit (N bits) of the Time Stamp of the block next older than the oldest block is compared with the output value of the N-bit counter 58b, and the lower-bit (M bits) of the Time Stamp is compared with the output value of the M-bit counter 59b. Furthermore, when both have reached an equal value, a signal is output to the Time Stamp storing means 57b and the buffer 61b, and the buffer 61b outputs the block (the currently oldest block) next older than the oldest block. The Time Stamp storing means 57b outputs the Time Stamp (TS) second next older than the oldest stored Time Stamp (TS)(the Time Stamp (TS) of the block next older than the currently oldest block).

The operation similar to that described above will be repeated, and after this, the output signal of the buffer 61b is decompressed, and becomes a digital video output signal.

Furthermore, as a modified example, as shown in FIG. 18, in the case of a system which assigns, for every predetermined unit, a predetermined identification number in or together with a synchronizing signal, and transmits information, the N-bit counters 54b and 58b in accordance with the present embodiment can be made unnecessary. (However, an identification number is a line number assigned to every line in the present embodiment; in FIG. 18, 1 to n in identification number 1, ..., identification number n (n is a natural number not less than 1) correspond to line numbers).

In other words, in the sending side of the tenth embodiment shown in the upper half of FIG. 21, in the case where plural constant information units of information signals are collected and become a predetermined unit, and the predetermined unit has an identification code for identifying each predetermined unit, the Time Stamp adding means 39 comprises a predetermined unit internal counting means, i. e., the M-bit counter 55a, which counts the time from the fixed position (timing) which is the reference of the predetermined unit of the above-mentioned information signals to the position (timing) at which a Time Stamp (TS) is added. This transmission apparatus or transmission method is characterized in that the Time Stamp (TS) comprises a predetermined unit internal Time Stamp, i. e., low-order bit (M-bit) information, representing the time from a fixed position (timing) used as the reference of the predetermined unit of information signals to the position (timing) to which a Time Stamp (TS) is added.

On the other hand, in the receiving side of the tenth embodiment shown in the lower half of FIG. 21, in the case where plural constant information units of information signals are collected and become a predetermined unit, and the predetermined unit has an identification code for identifying each predetermined unit, configuration is made depending on a predetermined unit internal Time Stamp, i. e., low-order bit (M-bit) information representing the time from a fixed position (timing) which is the reference of the predetermined unit of information signals to the position (timing) to which a Time Stamp (TS) is added. The configuration comprises the Time Stamp reading means 56b for delaying a constant information unit (block) by the time corresponding to the predetermined unit internal Time Stamp of the above-mentioned information signal at each information signal of constant information unit, in accordance with the Time Stamp added to each constant information unit of information signal, the Time Stamp storing means 57b, the M-bit counter 59b which is the second counter and the comparing means 60b. This receiving apparatus or receiving system is characterized in that the Time Stamp (TS) comprises a predetermined unit internal Time Stamp, i. e., low-order bit (M-bit) information, representing the time from a fixed position (timing) used as the reference of the predetermined unit of information signals to the position (timing) to which a Time Stamp (TS) is added, and that in accordance with the Time Stamp added to each constant information unit of information signal, a constant information unit (block) is delayed by the time corresponding to the predetermined unit internal Time Stamp of the information signal at each constant information unit of information signal.

Furthermore, as a modified example, in the case where one set information unit is made to information stored within a constant time, for example in the case where blocks which is a constant information unit, generated in one line period are collected and become one set information unit, the N-bit counters 54b and 58b of the present embodiment can be made unnecessary.

In other words, on the sending side, in the case where plural constant information units of information signals are collected and become a predetermined unit having a constant time length, the Time Stamp adding means comprises the M-bit counter 55b which is a predetermined unit internal counting means, for counting the time from the fixed position (timing) used as the reference of the predetermined unit of the above-mentioned information signals to the position (timing) at which a Time Stamp (TS) is added. This transmission apparatus or transmission method is characterized in that the Time Stamp (TS) comprises the predetermined unit internal Time Stamp, i. e., low-order bit (M-bit) information, representing the time from the fixed position (timing) used as the reference of the predetermined unit of the information signals to the position (timing) at which Time Stamp (TS) is added.

On the other hand, in the receiving side, in the case where plural constant information units of information signals are collected and become a predetermined unit having a constant time length, a Time Stamp added to each constant information unit of information signal comprises the predetermined unit internal Time Stamp, low-order bit (M-bit) information, representing the time from the fixed position (timing) used as the reference of the predetermined unit of the information signals which can be obtained by counting the number of constant information signals or predetermined units to the position (timing) at which Time Stamp (TS) is added. This receiving side comprises the Time Stamp reading means 56b which, in accordance with the Time Stamp added to each constant information unit of information signal, delays a constant information unit (block) by the time corresponding to the predetermined unit internal Time Stamp of the above-mentioned information signal at each constant information unit of information signal, the Time Stamp storing means 57b, the M-bit counter 59b which is the second counter and the comparing means 60b. The receiving apparatus or receiving system is characterized in that the Time Stamp (TS) comprises a predetermined unit internal Time Stamp, i. e., low-order (M-bit) information, representing the time from a fixed position (timing) used as the reference of the predetermined unit of information signals to the position (timing) to which Time Stamp (TS) is added, which can be obtained by counting the number of constant information signals or predetermined units. Furthermore, in accordance with the Time Stamp added to each constant information unit of information signal, a constant information unit (block) is delayed by the time represented by the predetermined unit internal Time Stamp of the information signal at each constant information unit of information signal.

With this configuration, the same effects as those of the sixth embodiment can be obtained.

Incidentally, although, the present embodiment is made by providing the Time Stamp adding means 39 and the Time Stamp reproducing means 40 in the second embodiment, the same effects can be obtained by providing the Time Stamp adding means in other embodiments.

Incidentally, in the present embodiment, although the predetermined unit is one line of video signal, the predetermined unit should only have a constant interval. Therefore, as the predetermined unit, n lines (n is a natural number not less than 1) of video signals can be used, or as the predetermined unit, n fields or n frames (n is a natural number not less than 1) of video signals may also be used.

Moreover, the fixed position (timing) of a predetermined unit of video signals should only be the position synchronous with one of line, field and frame.

Therefore, the fixed position (timing) of the predetermined unit is not necessarily located at the head of lines, fields or frames.

In addition, when the predetermined unit is one line, a line counter can be used; when the unit is one field, a field counter can be used; furthermore, when the unit is one frame, a frame counter can be used; respectively as a number counting means.

### [Eleventh embodiment]

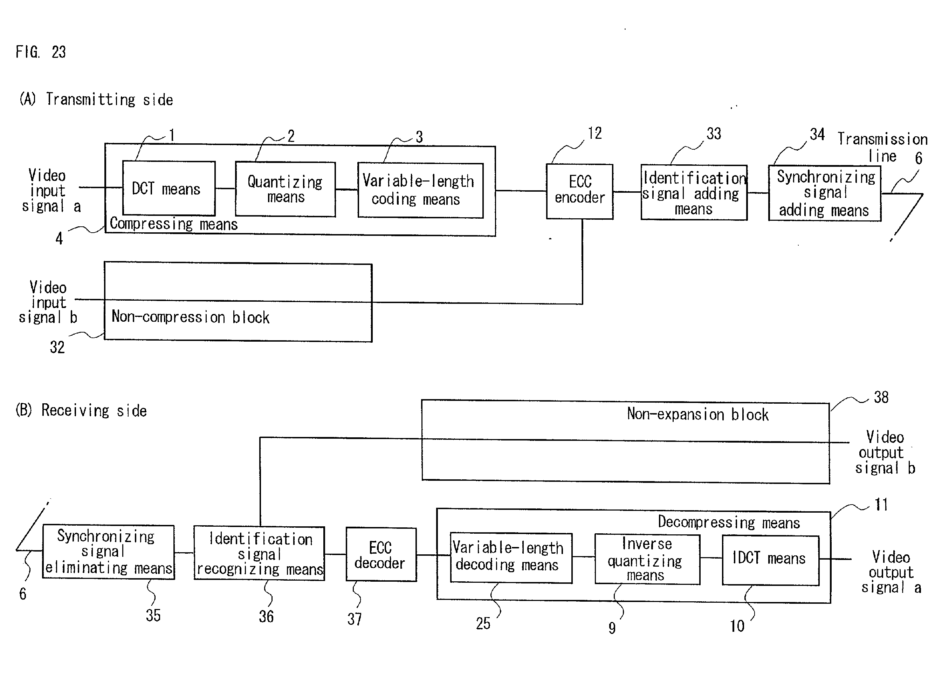

FIG. 23 is a view showing a transmission system, a transmission method, a transmission apparatus, a transmission method, a receiving apparatus and a receiving method in accordance with an eleventh embodiment of the present invention. Those components corresponding to the components having already been described in the explanation of the preceding embodiment are designated by the same reference signs, and overlap explanations are omitted. In the eleventh embodiment, a noncompressing section and an identification signal adding means are provided on the sending side of the second embodiment; in addition, an identification signal recognizing means and a nondecompressing section are provided on the receiving side thereof, whereby operations are carried out by them.

Referring to FIG. 23, a non-compression block 32 outputs a digital video signal without compressing the information amount thereof. An identification signal adding means 33 identifies whether the output signal of a variable-length coding means 3 or the output signal of the non-compression block 32 is input thereto, and adds an identification signal for identifying whether the signal is of compressed information amount (hereinafter referred to as "a compressed signal") or of non-compressed information amount (hereinafter referred to as "a noncompressed signal"). In the case where the input signal is the compressed signal, this identification signal adding means 33 collects plural blocks of the compressed signal and output them. A synchronizing signal adding means 34 adds a synchronizing signal to the output signal of the identification signal adding means 33; in the case where a signal to be sent is the compressed signal, what one synchronizing signal is added to plural blocks of video signals is formed as one set information unit. On the other hand, in the case where a signal to be sent is a noncompressed signal, the synchronizing signal adding means 34 adds one synchronizing signal to one block of video signal to form one set information unit. These set information units of signals formed above are sent to a coaxial cable 6 which is a transmission line.

The numeral 35 designates a synchronizing signal eliminating means which eliminates the synchronizing signal from the one set information unit of signal having been input (received). The numeral 36 designates a means which recognizes whether the output signal of the synchronizing signal eliminating means 35, having been input, is a compressed signal or a noncompressed signal, in accordance with a signal added by the identification signal adding means 33; when it is recognized that a compressed signal has been input, the signal is output to an ECC decoder described later; on the other hand, when it is recognized that a noncompressed signal has been input, the signal is output to a non-expansion block 38 described later. The numeral 38 designates the nondecompressing section which outputs the output signal of the identification signal recognizing means 36 having been input without decompressing the information amount thereof; the numeral 37 designates an ECC decoder which detects and corrects errors in video signals coded on the basis of an error correction code for every block, i. e., a predetermined unit of the output signals of the identification signal recognizing means 36.

The transmission apparatus, transmission method shown in the upper half of FIG. 23 in accordance with the eleventh embodiment comprises a compressing means 4 which compresses the information amount of a video signal having been input and performs output for every constant information unit, an ECC encoder 12 which collects n units (n is a natural number not less than 1) of the output signals of the compressing means 4, the non-compression block 32 which outputs an information signal having been input for every constant set information unit without compression, the identification signal adding means 33 which collects plural units of the output signals of the ECC encoder 12 and output them when the output signals of the ECC encoder 12 are input, or when the output signal of the non-compression block 32 is input thereto, outputs one set information unit and adds thereto an identification code for identifying whether the signal is a compressed signal or not, and the synchronizing signal adding means 34 which adds one synchronizing signal to the output signal of the identification information adding means 33. With this configuration, the output signal of the synchronizing signal adding means 34 is sent. This transmission apparatus, transmission method is characterized in that it comprises a transmission apparatus which collects plural units, that is, blocks used as constant information units, of compressed signals wherein the information amounts of information signals are compressed, and sends them as one set information unit, and a transmission apparatus which sends constant information units of information signals wherein the information amounts thereof are not compressed, i. e., one noncompressed signal as one set information unit; a signal for identifying which transmission apparatus has output the signal is added, and one synchronizing signal is further added.

On the other hand, the receiving apparatus, receiving method shown in the lower half of FIG. 23 in accordance with the eleventh embodiment comprises the synchronizing signal eliminating means 35 which receives one synchronizing signal and plural units of compressed information signals or one noncompressed information signal as one set information unit, and eliminates the synchronizing signal from the received signal, the identification signal recognizing means 36 which distributes the output signal of the synchronizing signal eliminating means 35 in accordance with an identification code for identifying whether the output signal is a compressed signal or not, an ECC decoder 37 which carries out signal error correction for every constant information unit to which an error correction signal is added on the basis of the error correction signal when the output signal of the identification signal recognizing means 36 is a compressed signal, a decompressing means 11 which decompresses the output signal of the ECC decoder 37 for every constant information unit, and the non-expansion block 38 which inputs a nondecompressed signal in the output signal of the identification signal recognizing means. This receiving apparatus, receiving method is characterized as described below; it comprises a receiving apparatus which collects plural units, that is, blocks used as constant information units, of compressed signals wherein the information amounts of information signals are compressed, and receives them as one set information unit, and a receiving apparatus which receives one synchronizing signal and a constant information unit of noncompressed signal as one set information unit; identification is carried out to find whether one unit of information signals or plural units of information signals are included in one set information unit, and one of the receiving apparatus is selected on the basis of the result of the identification.

The transmission apparatus, transmission method, receiving apparatus, receiving method and transmission line constitute a transmission system.

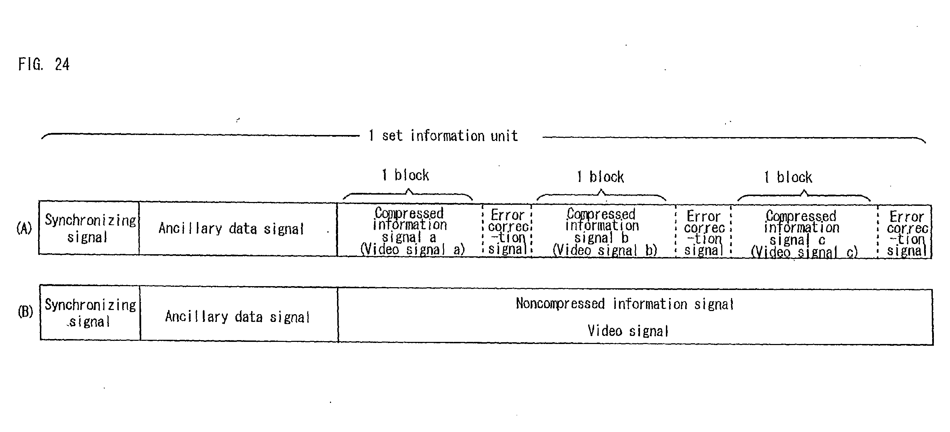

Data formats sent and received by the above-mentioned transmission system, and the transmission apparatus and receiving apparatus constituting it will be described below referring to FIG. 24.

FIG. 24 is a view showing data formats for one set information unit. FIG. 24(A) is a view showing a data format of a compressed signal in accordance with the present invention. As shown in the figure, a compressed information signal a (video signal a), a compressed information signal b (video signal b) and a compressed information signal c (video signal c) are obtained by compressing and block-forming the information amount of a video input signal; an error correction signal (error correction code) is added to each block of the information signal, and plural blocks are collected, and then one synchronizing signal is added to the plural blocks to form a set information unit of signal.

On the other hand, FIG. 24(B) is a view showing a data format of a noncompressed signal in accordance with the present embodiment; the noncompressed information signal (video signal) is obtained by block-forming the information amount of the video input signal without compressing it; one block of information signal and one synchronizing signal added thereto form one set information signal.

With the configuration in accordance with the present embodiment, plural information (signal) sources can be included in one set information unit; in addition, by using the identification signal, noncompressed signals as well as compressed signals can be transmitted, whereby signal transmission can be carried out efficiently.

Furthermore, in the present embodiment, although an error correction code is added to every block of video signal, the same effect can be obtained even when, as other example, an error correction code is added to every plural units of video signals, for example, every two blocks (two units) of information signals.

The eleventh embodiment has disclosed an example wherein a unit or a method for sending or receiving non'compressed information signals is added to (the second embodiment); however, apart from this example, even in an example wherein a unit or a method for sending or receiving noncompressed information signals is added to other embodiments (the first to fifth embodiments), the same effect can be obtained.

### [Twelfth embodiment]

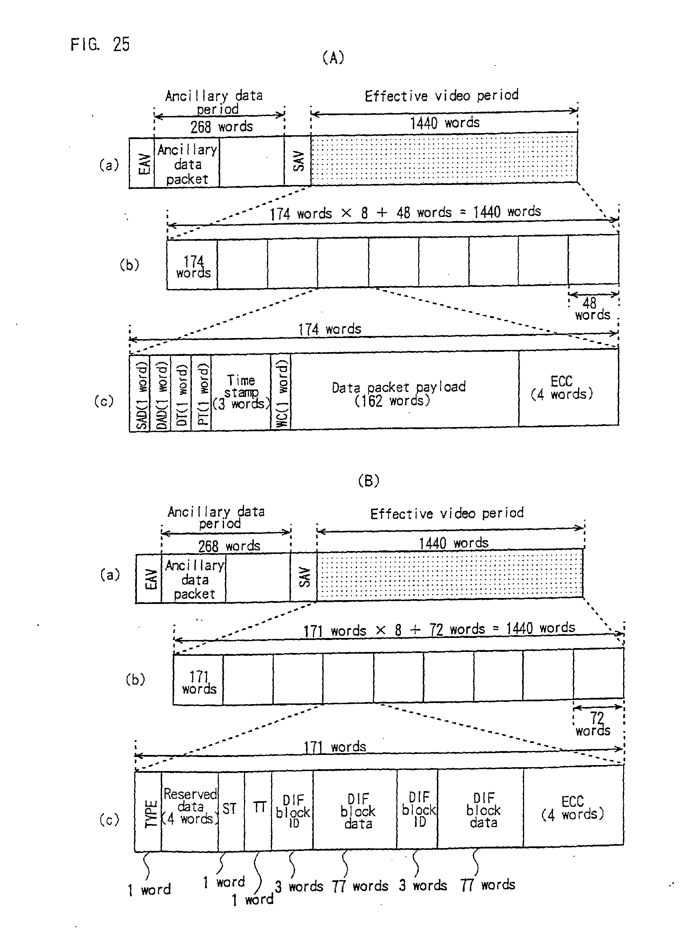

FIG. 25 is a view showing data formats for one set information unit of the transmission system in accordance with the twelfth embodiment of the present invention. Those components corresponding to the components having already been described in the explanation of the preceding embodiment are designated by the same reference signs, and overlap explanations are omitted. The present embodiment applies the second embodiment to the SDI standard (Serial Digital Interface standard, i. e., SMPTE 259M "PROPOSED SMPTE STANDARD FOR TELEVISION 10 Bit 4:2:2 Component and 4fsc Composite Digital Signals").

FIG. 25(A) is a view showing data formats for one set information unit of the transmission system in accordance with the seventh embodiment of the present invention. (a) of FIG. 25(A) shows the entire data format for one set information unit.

In (a) of FIG. 25(A), the ancillary data space is an area for providing a signal other than a synchronizing signal and information signals, that is, not a video signal itself but a necessary information signal, in other words, an ancillary data signal. This ancillary data space is provided so as to have 268 words in word length (one word is 10 bits).

The active video line space is an area for information signals. The active video line space has 1440 words in word length (corresponding to one line of component digital video information).

Furthermore, EAV (End of Active Video) is one of synchronizing codes and is a synchronizing code provided immediately after the PAYLOAD (Active Area). SAV (Start of Active Video) is one of synchronizing codes, and a synchronizing code provided immediately before the PAYLOAD (Active Area). ANC Data Packet (Ancillary Data Packet) is optional data ancillarily entered in HANC (H (horizontal) ANC) between EAV and SAV. Generally, audio data is inserted in HANC to use it. The above is a general description of a data format stipulated by the SDI standard.

(b) of FIG. 25(A) is a detailed view of the present invention, showing the Active Video Line Space in the SDI standard. In (b) of FIG. 25(A), a constant information unit is defined as 174 words in word length. Eight constant information units are collected to form one Active Video Line Space. Furthermore, a remainder of 48 words (1440 - 174 × 8 = 48) can be used as an unassigned area to accommodate blank data, or it can be used as an added option to accommodate ancillary data.

(c) of FIG. 25(A) is a detailed view showing a constant information unit of the present invention; in (c) of FIG. 25(A), the Data Packet Payload is an area wherein compressed information is provided, and has 162 words in word length. Reed Solomon is an area wherein ECC is provided, and has 4 words in word length. A Time Stamp is information for representing a time, and has 3 words in word length. Furthermore, SAD (Source Address) is a device address on the sending side and can be used for device routing, together with DAD (Destination Address). DAD is a device address on the receiving side and indicates what data (162 words in the case of DVCPRO) is in DT (Data Type) BLOCK.

PT (Packet Type) indicates the type of SDI data packet; for example, it indicates whether TIME STAMP is effective or not, and indicates the effective data length in WC (Word Count) SDI data packet payload.

In addition, although an error correction code is added to every block of video signal in the twelfth embodiment, apart from this, even when an error correction code is added to every plural units of video signals, that is, even when an error correction signal is added to every two blocks (two units) of information signals as shown in FIG'. 4(D) and FIG. 4(E), the same effect can be obtained.

In other words, in the transmission apparatus or the transmission method, it is characterized in that in a transmission system (SDI standard system) for sending and receiving information signals having M bytes (1440 words in the present embodiment) as one set information unit, a constant information unit for the transmission apparatus and transmission method in the descriptions of the first to sixth embodiments is set at N bytes (M > N, M and N are natural numbers), (174 words in the present embodiment).

On the other hand, the receiving apparatus or the receiving method is characterized in that in a transmission system (SDI standard system) for sending and receiving information signals having M bytes (1440 words in the present embodiment) as one set information unit, a constant information unit for the receiving apparatus and receiving method in the descriptions of the first to sixth embodiments is set at N bytes (M > N, M and N are natural numbers). (174 words in the present embodiment)

With the above configurations, even in an existing transmission apparatus or receiving apparatus having been set to have a sufficient data area for information signals, such as a device using the existing SDI standard for example, plural information signals can be included in one set information unit even when existing installations are used as they are. Therefore, signals can be transmitted efficiently.

FIG. 25(B) is a view showing a case wherein another data format of one set information unit for the transmission system of the seventh embodiment described above is used in the twelfth embodiment.

Herein, (a) of FIG. 25(B) shows a data format stipulated by the SDI standard, and identical to (a) of FIG. 25(A).

Next, an embodiment wherein the present invention is applied to the SDI standard is shown below. (b) of FIG. 25(B) is a detailed view of the Active Video Line Space in the SDI standard. In (b) of FIG. 25(B), a constant information unit is set at 171 words; eight constant information units are collected to form one Active Video Line Space. Furthermore, a remainder of 72 words can be used as an unassigned area to accommodate blank data, or it can be used as an added option to accommodate ancillary data.

(c) of FIG. 25(B) is a detailed view of a constant information unit in accordance with the present embodiment. In (c) of FIG. 25(B), DIF Block Data is an area to accommodate compressed information, and DIF Block is identification information for identifying the content of the compressed information; each is provided with two areas.

TYPE is an area of information indicating the type of compression or the format of stream; TT (Transmission Type) is an area of information indicating a transmission speed or a video frame number; ST (Signal Type) is an area of information indicating the type of signal; Reserved Data is an information area reserved for future purposes, for Time Stamp addition for example; and ECC is an area to accommodate a 4-byte Reed Solomon code.

Furthermore, although an error correction code is added to every block of video signal in the present embodiment, the same effect can be obtained even when, as other example, an error correction code is added to every plural units of video signals, for example, every two blocks (two units) of information signals as shown in FIG. 4(D) and FIG. 4(E). In other words, the transmission apparatus or the transmission method shown in the upper half of FIG. 23 in accordance with the twelfth embodiment is characterized in that in a transmission system (SDI standard system) for sending and receiving information signals having M bytes (1440 words in the present embodiment) as one set information unit, a constant information unit for the transmission apparatus and transmission method in the descriptions of the first to sixth embodiments is set to N bytes (M > N, M and N are natural numbers; 174 words in the present embodiment).

On the other hand, the receiving apparatus or the receiving method shown in the lower half of FIG. 23 in accordance with the twelfth embodiment is characterized in that in a transmission system (SDI standard system) for sending and receiving information signals having M bytes (1440 words in the present embodiment) as one set information unit, a constant information unit for the receiving apparatus and receiving method in the descriptions of the first to sixth embodiments is set to N bytes (M > N, M and N are natural numbers; 174 words in the present embodiment).

With the above configurations, even in an existing transmission apparatus or receiving apparatus having been set to have a sufficient data area for information signals, such as a device using the existing SDI standard for example, plural information signals can be included in one set information unit even when existing installations are used as they are, and signals can be transmitted efficiently.

Incidentally, the present embodiment shows the case which applies that of the second embodiment to the SDI standard. Apart from this, the same effect can be obtained by applying other embodiments (the first to eleventh embodiments) to the SDI standard.

### [Thirteenth embodiment]

The thirteenth embodiment indicates that it is ideal that a Reed Solomon code of four words is used as ECC in the twelfth embodiment.

The following deals with the extent of the length of an error correction code to be added to maintain sufficient error correction capability without significantly reducing transmission efficiency when a digital signal is transmitted via a coaxial cable.

First, a coaxial cable of a length wherein the attenuation amount of a digital signal to be transmitted is not more than 20 dB to 30 dB at a half frequency of the clock (a half frequency of the frequency of the carrier wave) is used as a transmission line.

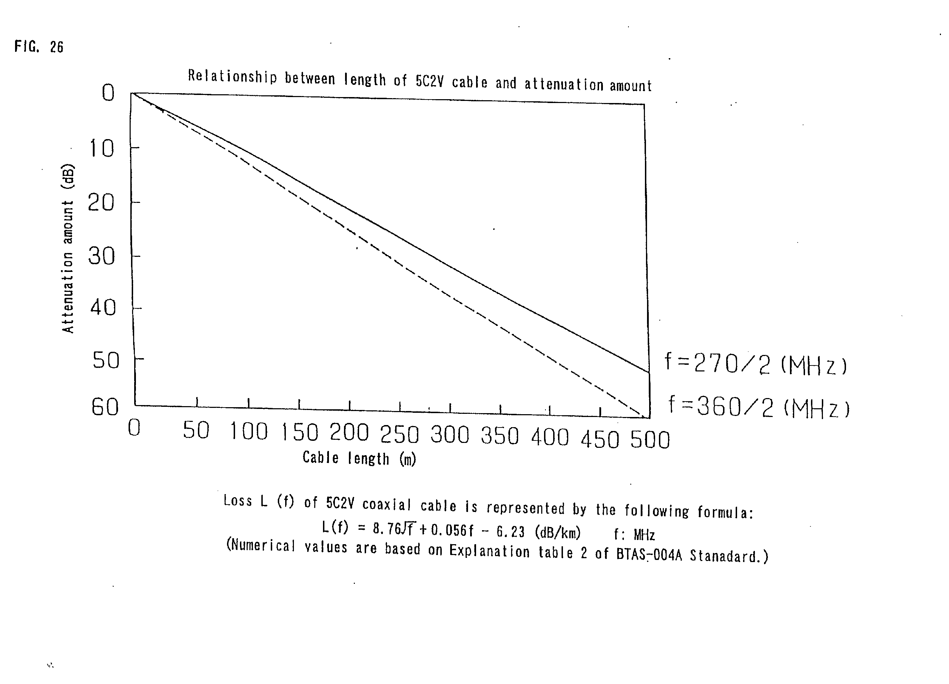

In other words, FIG. 26 shows the relationship between the length of the 5C2V coaxial cable generally used at broadcasting stations and studios and its attenuation amount. In the present embodiment, the transmission clock frequency of a signal is 270 MHz; therefore, the transmission distance (cable length) corresponding to a signal attenuation amount of 20 dB to 30 dB at half of the frequency is 200 to 280 m at a transmission clock frequency of 270 MHz, and 170 to 250 m at a transmission clock frequency of 360 MHz. In other words, the transmission distance (cable length) corresponding to a range not exceeding a signal attenuation amount of 30 dB at the half frequency is not more than 280 m (about not more than 300 m) at 270 MHz or not more than 250 m at 360 MHz. Experiments were conducted by using 5C2V coaxial cables having lengths of 200 m and 150 m in the error rate measurements in accordance with the present embodiment. Furthermore, the clock frequency was 270 MHz.

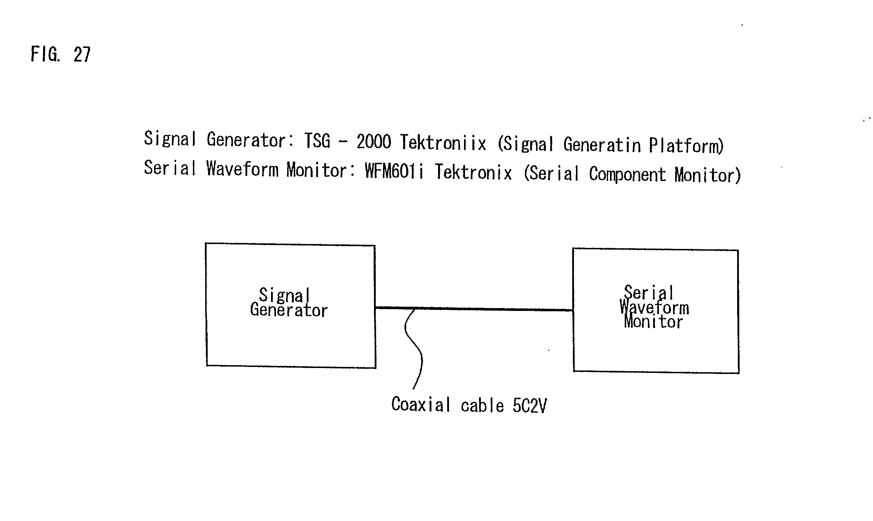

By using the above-mentioned transmission lines, signals in the six measurement conditions shown in Table 1 below were transmitted from the transmission apparatus schematically shown on the left of FIG. 27 and received by the receiving apparatus schematically shown on the right of the figure, and error rates were measured.

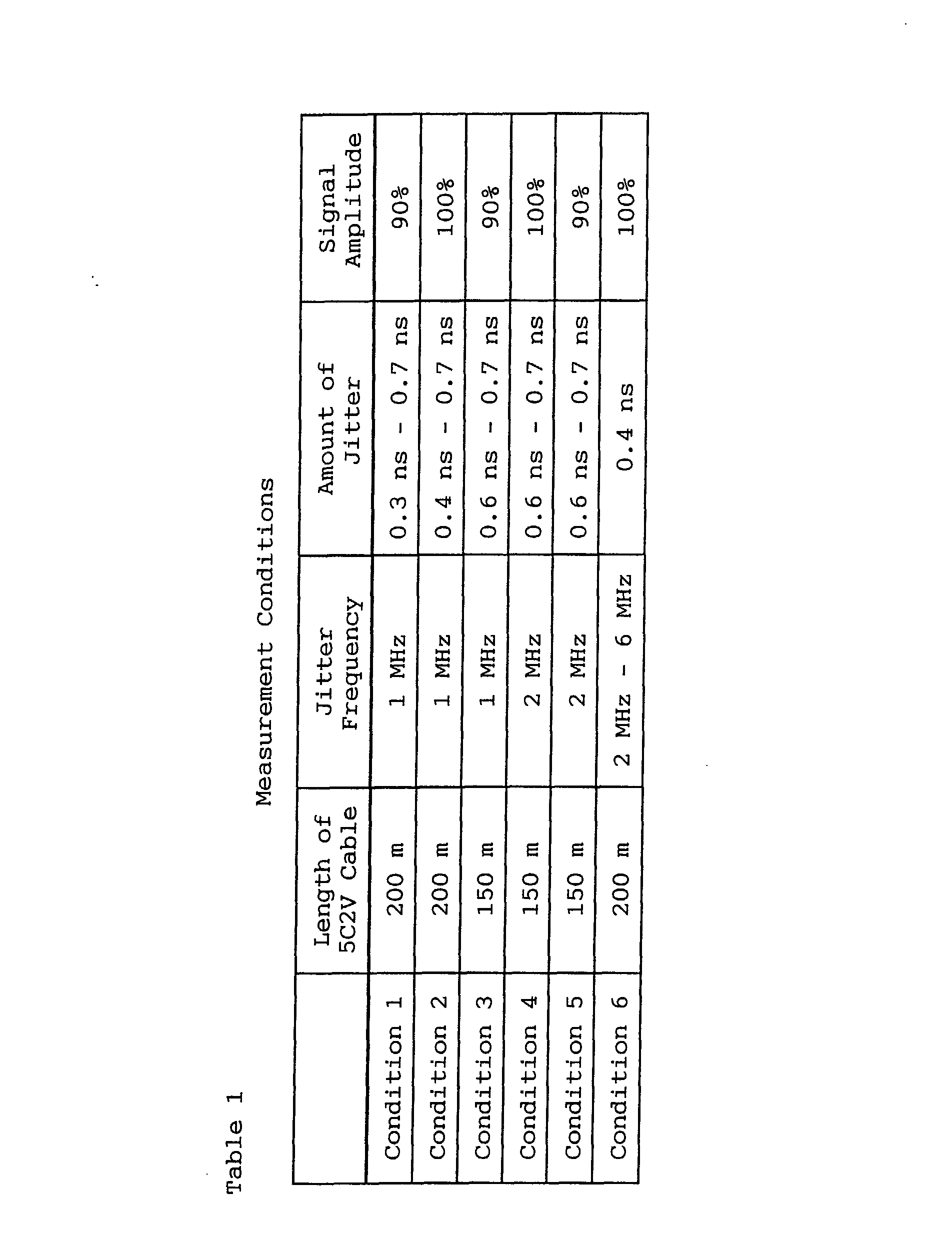

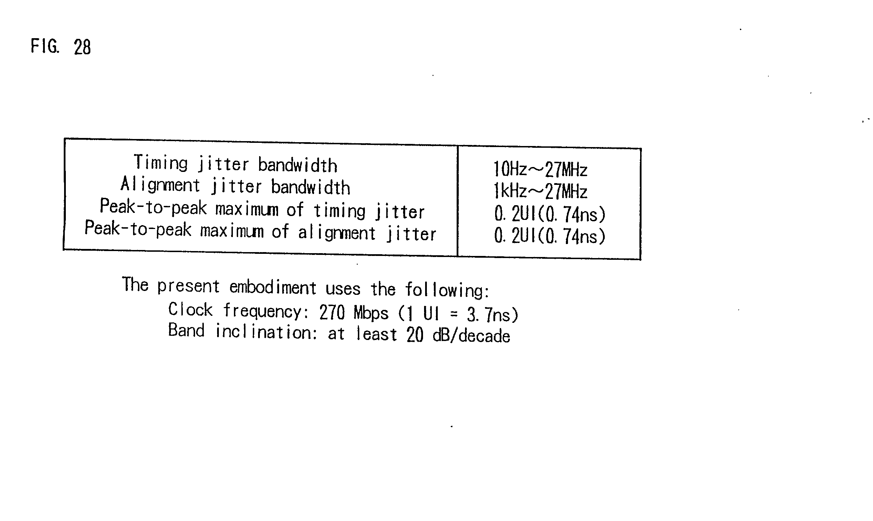

At this time, a color bar signal was used as a signal, the frequency of jitter added to the transmission apparatus was 1 to 6 MHz, the amount of jitter was 0.7 ns or less, and the amplitude of the signal was 90% or 100%. In other words, the jitter in the range shown in FIG. 28 was used. FIG. 28 shows a part of transmission conditions stipulated in SMPTE 259M.

Herein, the jitter is a time fluctuation with respect to the ideal position (timing) for digital signal transmission, and timing jitter is a position (timing) fluctuation during digital signal transmission occurring at frequencies higher than a specific frequency (generally 10 Hz or less). Furthermore, an alignment jitter is a position (timing) fluctuation with respect to a clock extracted (reproduced) -from the transmitting signal of a digital signal, a Unit Interval (hereinafter is referred to as UI) designates one clock cycle time and corresponds to a nominal shortest time during transmission of a serial signal. The transmission method for transmitting these signals via the wire transmission lines used in the present experiments by the inventors is within the range stipulated in the SMPTE 259M standard or the SMPTE 292M standard.

Error detection in field units was conducted by using an error measuring instrument, and the number of errors was counted up. Furthermore, error rates and error generation intervals were calculated from measurement times and the number of errors. Moreover, since error detection was conducted in field units, even when the number of errors in field units was 1 bit or more, it was treated that one error occurred in one field. Accordingly, since it is assumed that error spread due to descramble may occur and plural errors may generate in one field, the actual error rate may become worse than the error rate measurement results shown below.

(Table 2) to (Table 7) show the results of the experiments conducted by the inventors in accordance with the above-mentioned conditions.

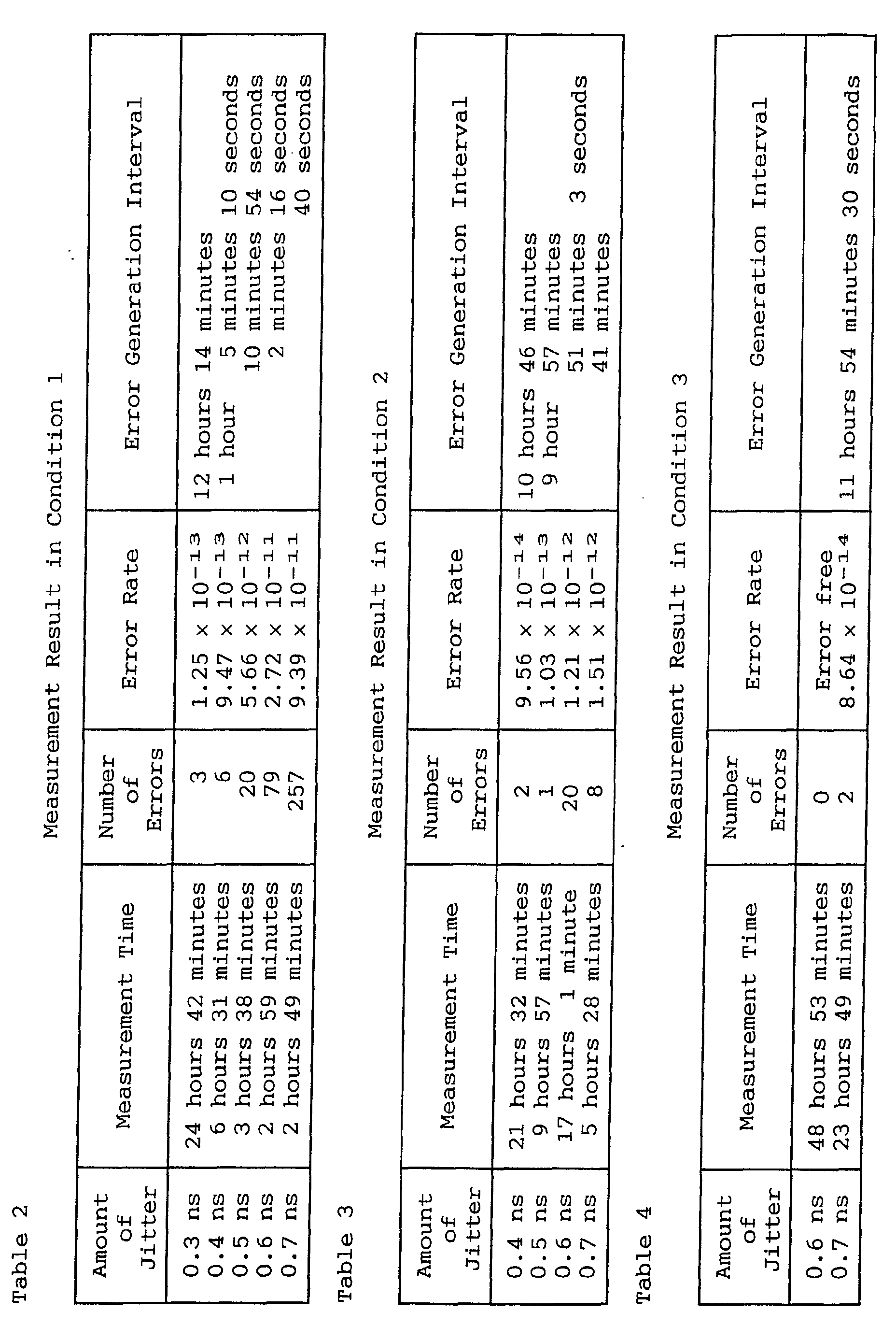

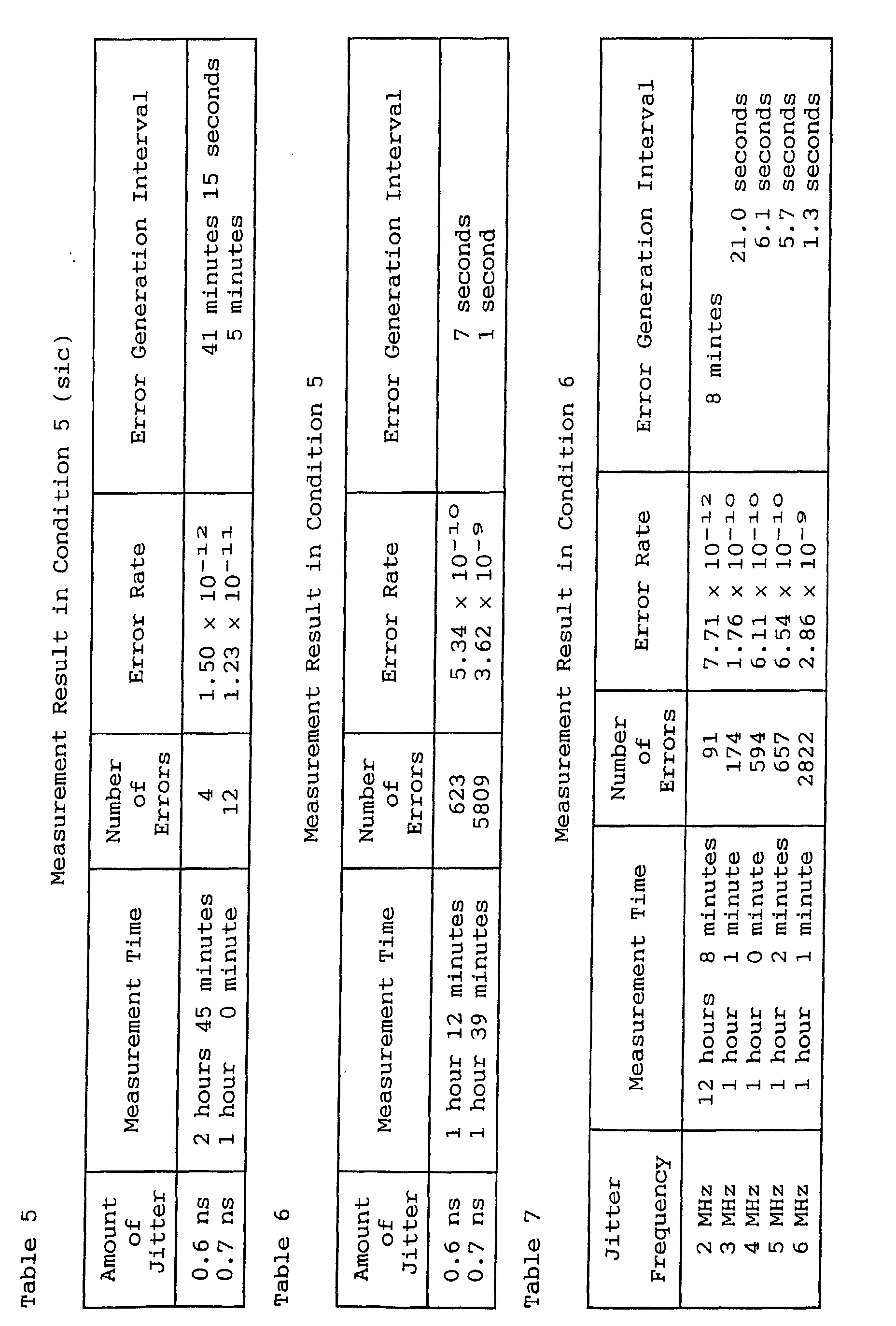

Herein, the error rate is calculated by using the formula: Error rate = number of errors / (measurement time × 270 Mbps).

Even in the above-mentioned conditions, in a strict transmission environment, the error rate may become about 1 × 10⁻⁸. Since this degree of error rate can hardly be detected by the naked eye when a conventional noncompressed digital video signal is transmitted, no problem occurs actually.

However, in the case that compressed signals stipulated in the MPEG (Moving Picture Experts Group) or DVC (Digital Video Cassette) are transmitted, such a 1-bit error as shown in FIG. 5 causes error spread in area units (area layer), in slice units (slice layer) or GOP (Group of Picture) units (layer) of the DCT, resulting in significant picture quality deterioration.

The effect of quality deterioration differs depending on a compression algorithm or a bit error generation position; in any case, problems occur actually unless some measures are taken for errors.

For example, when a compressed signal is transmitted at a transmission speed of 27 Mbps (bit per second) under the condition of a clock frequency of 270 MHz, the average error generation interval is about 1 hour at a bit error rate of "1 × 10⁻¹¹"; the average error generation interval is about 6 minutes at a bit error rate of "1 × 10⁻¹⁰"; the average error generation interval is about 37 seconds at a bit error rate of "1 × 10⁻⁹"; and the average error generation interval is about 3.7 seconds at a bit error rate of "1 × 10⁻⁸"; therefore, practical use becomes impossible even if transmission parameters have the above-mentioned conditions.

Herein, there is a method of resending a packet which caused an error as an error countermeasure; however, this causes a delay in the transmission time due to resending; furthermore, in a one-way transmission system (SMPTE 259M for example), it is difficult to realize a resending mechanism.

On the other hand, in the method of adding an error correction code, since the rate of information signals included in a signal to be transmitted decreases, transmission efficiency drops. If the code length of the error correction code is shortened to decrease information to be added, error correction capability drops. Therefore, this causes a problem relating to the extent of the length of an error correction code to be added to maintain sufficient error correction capability without significantly reducing transmission efficiency.

The present embodiment is intended to solve this kind of problem, and the following descriptions will be given to explain in detail the extent of the length of an error correction code to be added, together with reasons for it.

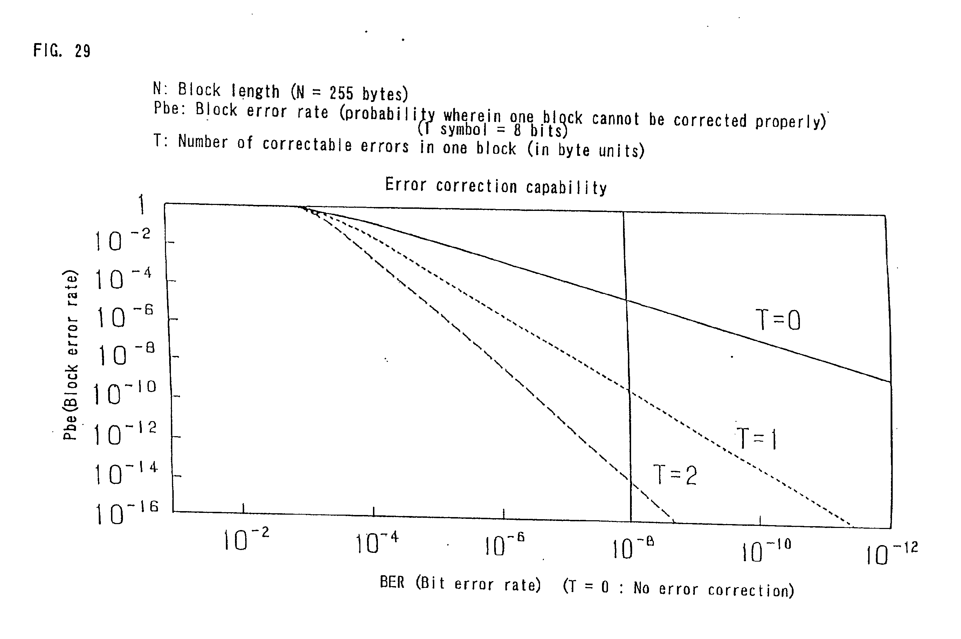

FIG. 29 is a view showing the error correction capability of the Reed Solomon code. Herein, BER (Bit Error Rate) on the abscissa of FIG. 29 represents a bit error rate, that is, a bit error generation rate on a transmission line; and Pbe (Block error rate) on the ordinate of FIG. 29 represents a block error rate, that is, the rate of generation of blocks which cannot be corrected by error correction.

In the example shown in FIG. 29, the block length N = 255 bytes (1 byte = 8 bits); this is the maximum block length when an eight-bit Reed Solomon code is added. In addition, FIG. 29 is also a view drawn in consideration of error spread due to scrambled NRZI code. In other words, this method carries out randomizing so that 1 and 0 of a digital signal are generated on average on a transmission line. In this method, when an error occurs, the error spreads to six bits in the following 11 bits. Therefore, if a one-bit error occurs, the error spreads to two words (1 word is 10 bits in this case) at all times. For this reason, the error correction capability of the Reed Solomon code must be T = 2 or more, and the error correction code must have four bytes at the minimum.

Incidentally, the error correction code itself is included in a block. When the error correction code is made constant, the longer the block length, the lower the correction capability; therefore, it is assumed that FIG. 29 shows correction capability in the case where the correction capability is lowest.

Herein, T represents the number of symbols (bytes) correctable in one block. For example, when a four-byte Reed Solomon (error correction) code is added to a block, symbol (byte) errors of up to two symbols (bytes) in one block can be corrected (T = 2); when a two-byte Reed Solomon (error correction) code is added, symbol (byte) errors of up to one symbol (byte) in one block can be corrected (T = 1). Furthermore, T = 0 indicates that no error correction code is added.

Next, referring to (Table 2) to (Table 7) and FIG. 9, the extent of the length of an error correction code to be added will be described in detail below together with reasons for it.

On the basis of the error rate measurement results shown in (Table 2) to (Table 7), even when the transmission parameters conform the above-mentioned conditions, that is, the conditions stipulated in the SMPTE 259M standard, the bit error rate may sometimes become about 1 × 10⁻⁸ under a strict condition. Therefore, by using FIG. 29, an examination is carried out to determine whether sufficient error correction capability can be maintained or not when a Reed Solomon (error correction) code having 2n bytes (that is, T = n; n is a natural number not less than 1) is added.
[1] In the case that a Reed Solomon code having 2 bytes (T = 1) is added:
   When it is assumed that the bit error rate is 1 × 10⁻⁸, by adding a Reed Solomon code of 2 bytes (T = 1) and by carrying out error correction by using this, the block error rate is improved up to about 1 × 10⁻⁹. This value corresponds to an error generation interval wherein one block error occurs every 26 hours when it is assumed that a compressed signal is transmitted at a transmission speed of 27 Mbps. Therefore, it is difficult to carry out sufficient error correction by using a Reed Solomon code of 2n bytes (T = 1).
   Furthermore, since error spread due to the scramble NRZI code is also considered in the present embodiment, the error correction capability of the Reed Solomon code must be T = 2 or more (that is, the error correction code must have four bytes at minimum) as mentioned above; therefore, the Reed Solomon (error correction) code of 2n bytes (T = 1) is meaningless in the present embodiment.
[2] In the case that a Reed Solomon code of 4 bytes (T = 2) is added:
   When it is assumed that the bit error rate is 1 × 10⁻⁸, by adding a Reed Solomon code of 4 bytes (T = 2) and by carrying out error correction by using this, the block error rate is improved up to about 1 × 10⁻¹³. This value corresponds to an error generation interval wherein one block error occurs every about 10 years when it is assumed that a compressed signal is transmitted at a transmission speed of 27 Mbps. Therefore, it is possible to carry out sufficient error correction by using a Reed Solomon code of 4 bytes (T = 2).

As mentioned above, by using a Reed Solomon code as an error correction code, and by setting its length at four words (T = 2), both conditions, that is, decreased information to be added and sufficient error correction capability, can be satisfied.

Furthermore, when a Reed Solomon code and a parity bit added to every byte of an information signal are used concurrently, the position of a symbol (byte) at which an error occurred is found. As a result, in the receiving apparatus or the receiving method, by detecting an error position by using the parity bit, and then by carrying out error correction by using the Reed Solomon code, the error correction capability can be as follows:
When four error bytes are detected in one block by parity error detection, the four-byte errors can be corrected.
When three error bytes are detected in one block by parity error detection, the three-byte errors can be corrected.
When two error bytes are detected in one block by parity error detection, the two-byte errors and another unlocatable one byte error can be corrected.
When one error byte is detected in one block by parity error detection, the one-byte error and another unlocated byte error can be corrected.
When no error byte is detected in one block by parity error detection, two unlocated bytes error in one block can be corrected.

By adding a Reed Solomon (error correction) code of predetermined bytes as examined above, substantial error-free condition can be attained.

Furthermore, in accordance with the above-mentioned configuration, by adding a common error correction code, error-free environment can be guaranteed regardless of the compression system.

Moreover, by making error correction to a common packet format, total cost for mutual connection can be reduced. In other words, even if a compressing means is changed to a different type, the configurations of devices constituting this can be in common by using the common Reed Solomon (error correction) code, whereby the cost can be made lower.

### [Fourteenth embodiment]

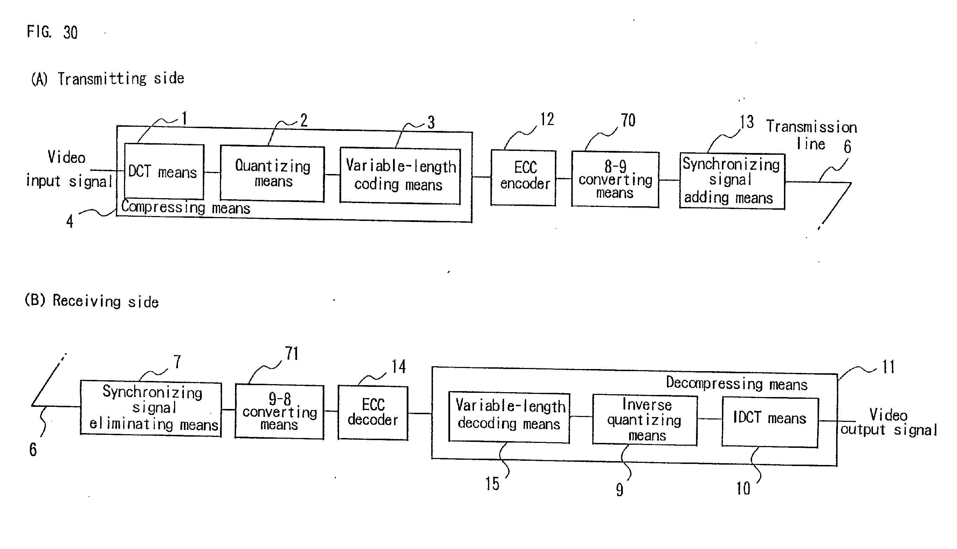

FIG. 30 is a view showing a transmission system, a transmission method, a transmission apparatus, a transmission method, a receiving apparatus and a receiving method in accordance with a fourteenth embodiment of the present invention. Those components corresponding to the components having already been described in the explanation of the preceding embodiment are designated by the same reference signs, and overlap explanations are omitted. In the fourteenth embodiment, a 9-8 converting means is provided on the receiving side of the second embodiment shown in FIG. 3; and an 8-9 converting means is provided on the sending side thereof in the same way.

Herein, in the present embodiment, a block which is a constant information unit comprises N rows × J columns (N = 8 and J = 170 in the present embodiment; (8 × 170) bits, that is, 170 bytes). Furthermore, a line which is a predetermined unit can be formed of an information signal having not more than a constant amount of information; each word constituting it has a first area having N rows (N-bit rows; N is a natural number not less than 1; N = 8 in the present embodiment) wherein video signals, i. e., actual information signals, are located, and a second area having M rows (M-bit rows; M is a natural number not less than 1; M = 2 in the present embodiment) wherein a parity signal, i. e., a redundant signal, is located (however, N + M = 10 bits). In the case where the transmission speed between the transmission apparatus and receiving apparatus is 270 Mbps, 1440 words; in the case where the speed is 360 Mbps, 1920 words (1 word = 10 bits). Furthermore, the maximum information amount capable of forming a line used as a predetermined unit, in other words, a constant information amount is (N rows × I columns) bits, N = 8 in the present embodiment, and I = 1440 (when the transmission speed is 270 Mbps) or 1920 (when the transmission speed is 360 Mbps).

In FIG. 30, a block diagram showing the configuration of the present embodiment, in the case where the output signal of an ECC encoder 12 is input for each block (N rows × J columns; 8 × 170 in the present embodiment) used as a constant information unit, and the information amount of the input information signal exceeds a constant information amount [in other words, N rows × I columns; 8 × 1440 (when the transmission speed is 270 Mbps) or 8 × 1920 (when the transmission speed is 360 Mbps) in the present embodiment], an 8-9 converting means 70 used as an X-Y converting means can locate at least a part of the output signal (N rows × J columns) of the ECC encoder 12 in the second area. The output signal of the 8-9 converting means 70 is output to a synchronizing signal adding means 13. The above-mentioned constant information amount is the maximum information amount formed by the first area having N rows (N-bit rows) wherein an actual information signal in each word constituting a line used as a predetermined unit is located.

On the other hand, when the ECC encoder 12 is not used, in the case where the output signal (N rows × J columns) of a compressing means 4 is input and the information amount of the input information signal exceeds a constant information amount, the sending side comprises the 8-9 converting means used as an X-Y converting means which can locate at least a part of the video signals of the output signal of the compressing means 4 in the second area, and is configured so that the output signal of this 8-9 converting means is output to the synchronizing signal adding means 13. The above-mentioned constant information amount is the maximum information amount formed by the first area of N rows (N-bit rows) wherein an actual information signal in each word constituting a line used as a predetermined unit is located.

A 9-8 converting means 71 can relocate the video signals of the output signal of a synchronizing signal eliminating means 7, having been located across the second area, in the first area. In other words, the 9-8 converting means 71 is a Y-X converting means configured so that restoration to a block used as a constant information unit of N rows × J columns (8 × 170 in the present embodiment) can be carried out. The output signal of this 9-8 converting means 71 is output to an ECC decoder 14.

On the other hand, when the ECC encoder 14 is not used, the receiving side may be configured to output the output signal of the 9-8 converting means 71 to a decompressing means 11 so that the video signals of the output signal of the synchronizing signal eliminating means 7, having been located in the second area, can be relocated in the first area only. However, the above-mentioned 9-8 converting means 71 is a Y-X converting means configured so that restoration to a block used as a constant information unit of N rows × J columns (8 × 170 in the present embodiment) can be carried out.

In other words, in the transmission apparatus and the transmission method, in the above-mentioned first embodiment or second embodiment, a block used as a constant information unit comprises N rows (N-bit rows) (N = 8 in the present embodiment; 8-bit rows) × J columns. Furthermore, a line used as a predetermined unit can comprise an information signal having a constant information amount or less. Each word constituting it has a first area wherein video signals, i. e., actual information signals, are located, and a second area wherein a parity signal, i. e., a redundant signal, or the like is located. The first area comprises N rows, i. e., N bits (N is a natural number not less than 1), and the second area comprises M rows (M is a natural number not less than 1). When the information amount of an input information signal exceeds a constant information amount, at least a part of video signals used as actual information signals can be located in the second area. In addition, the above-mentioned constant information amount is the maximum information amount formed by the first area of N bits wherein an actual information signal in each word constituting a line used as a predetermined unit is located.

On the other hand, in the receiving apparatus and receiving method, in the above-mentioned first embodiment or second embodiment, a block used as a constant information unit comprises N rows (N-bit rows) (N = 8 in the present embodiment) × J columns. Furthermore, a line used as a predetermined unit can be formed by an information signal having a constant information amount or less. Each word constituting it has a first area wherein video signals, i. e., actual information signals, are located, and a second area wherein a parity signal, i. e., a redundant signal, or the like is located. The first area comprises N rows (N-bit rows) (N is a natural number not less than 1), and the second area comprises M rows (M is a natural number not less than 1). Video signals used as actual information signals located across the second area can be relocated in the first area only, in other words, restoration to a block used as a constant information unit of N rows × J columns of N-bit rows and 8-bit rows in the present embodiment can be carried out.

The transmission apparatus, transmission method, receiving apparatus, receiving method and transmission line constitute a transmission system and a transmission method.

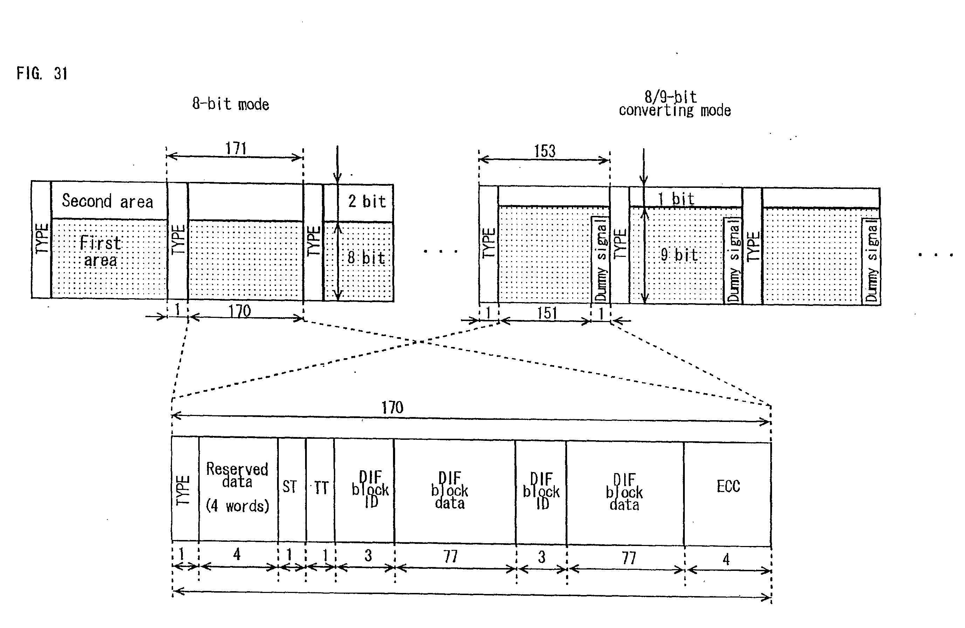

The operations of the above-mentioned transmission system will be described below referring to FIG. 31.

FIG. 31 is a view showing data formats in a block which is a constant information unit of the transmission system in accordance with the fourteenth embodiment of the present invention.

In the transmission apparatus or the transmission method of FIG. 30, a digital video input signal is input to the compressing means 4 and the amount of the information is compressed. The output signal of the compressing means 4 is inputted to the ECC encoder 12; in the ECC encoder 12, an error correction code is added to each information signal. The output signal of the ECC encoder 12 is input to the 8-9 converting means 70 used as an X-Y converting means; when the information amount of the input information signal exceeds a constant information amount at this time, as shown in FIG. 31, in each block of the output signal of the ECC encoder 12, at least a part of video signals (refer to FIG. 31(A)) presenting in the first area only (corresponding to areas of B0 to B7) is located in the second area (corresponding to B8 or B8 and B9) wherein a parity signal is present (refer to FIG. 31(B)). At this time, the parity signal being present in the second area is discarded. Furthermore, in the case where the first area becomes vacant when location is made in the area wherein the above-mentioned parity signal is present, a dummy signal is inserted. The signal thus created is output to the synchronizing signal adding means 13. The above-mentioned constant information amount is the maximum information amount formed by the first area of N rows (N-bit rows) wherein an actual information signal in each word constituting a line used as a predetermined unit is located.

If the information amount of the input information signal does not exceed a constant information amount capable of forming the first area of N rows (N-bit rows) wherein an actual information signal in each word constituting a line used as a predetermined unit is located, the output signal of the ECC encoder 12 is output to the synchronizing signal adding means 13 without modification.

On the other hand, in the receiving apparatus or receiving method shown in FIG. 30, after a synchronizing signal in the received signal is eliminated by the synchronizing signal eliminating means 7, if video signals are located across the second area, the output signal of the synchronizing signal eliminating means 7 can be relocated in the first area in the 9-8 converting means 71. In other words, restoration is possible to a block which is a constant information unit of N-bit rows, 8-bit rows in the present embodiment, N rows × J columns. That is, inverse conversion corresponding to the rule for the 8-9 conversion is also carried out on the sending side to restore the same condition as that obtained before the 8-9 conversion. The output signal of the 9-8 converting means 71 is subjected to signal error correction by the ECC decoder on the basis of the error correction code added to every block. Hereafter, the output signal of the ECC decoder 14 is decompressed by the decompressing means 11 and becomes a digital video output signal.

By using this configuration even if there are many input information signals, and sending and receiving is impossible in predetermined units, processing is possible to some extent.

Herein, TYPE in FIG. 31 represents a type of compressed data; for example, DVCPRO is 221h.
Furthermore, the type for MPEG is assigned to MPEG. Next, REV stands for Reserved and represents an area reserved so as to be used for new bit definition in the future in accordance with the standard and so as not to be used by the user on his own way. Next, ST stands for Signal Type and represents a signal type. This is used to identify various signal types categorized as the same DVCPRO; DVCPRO differs depending on field frequencies of 50 Hz/60 Hz (59.94 Hz), the sample quantities of brightness signals and color signals, and the like.

TT is an abbreviation for Transmission Type and represents a transmission type and represents a signal type. This is used to identify various transmission types, such as four-time-speed transmission and eight-time-speed transmission as well as one-time-speed transmission of ordinary reproduction, and it is also used to identify frames.

Furthermore, the present embodiment is made by providing the X-Y converting means 70 and the Y-X converting means 71 in the first embodiment or the second embodiment; however, the same effects can be obtained by providing these in other embodiments.

Furthermore, in the present embodiment, the X-Y converting means 70 and the Y-X converting means 71 are configured to be switched between the execution or nonexecution of X-Y conversion and Y-X conversion; however, they may be configured to execute X-Y conversion and Y-X conversion at all times.

Although preferred embodiments of the present invention have been described in considerable detail, the currently disclosed contents of the preferred embodiments may be modified in the details of the configurations thereof, and changes in combination and sequence of components may be made without departing from the claimed scope and spirit of the invention.

### INDUSTRIAL FIELD OF UTILIZATION

With the detailed configuration in each embodiment, a plurality of information signals can be included in one set information unit in accordance with the present invention. As a result, signal transmission can be carried out efficiently.

### It follows a list of further embodiments of the invention:

### Embodiment 1.

A transmission apparatus comprising a compressing means which compresses the information amount of an input information signal and performs output for every constant information unit, and a synchronizing signal adding means which collects plural units of the output signals of said compressing means and adds one synchronizing signal thereto,
wherein it is configured so as to transmit the output signal from said synchronizing signal adding means.

### Embodiment 2.

A transmission apparatus comprising plural compressing means, each of which compresses the information amount of an input information signal and performs output for every constant information unit, a multiplexing means (multiplexer) which selects each output signal of said plural compressing means for every constant information unit and performs output time-sequentially, and a synchronizing signal adding means which collects plural units of the output signals of said multiplexing means and adds one synchronizing signal thereto,
wherein it is configured so as to transmit the output signal from said synchronizing signal adding means.

### Embodiment 3.

A transmission apparatus comprising a compressing means which compresses the information amount of an input information signal and performs output for every constant information unit, a noncompression block which outputs an input information signal for every constant information unit without compression, a multiplexing means which selects each output signal of said compressing means and said noncompression block for every constant information unit and performs output time-sequentially, and a synchronizing signal adding means which collects plural units of the output signals of said multiplexing means and adds one synchronizing signal thereto,
wherein it is configured so as to transmit the output signal from said synchronizing signal adding means.

### Embodiment 4.

A transmission apparatus comprising a compressing means which compresses the information amount of an input information signal and performs output for every constant information unit, a noncompression block which outputs an input information signal for every constant set information unit without compression, an identification information adding means which collects and outputs plural units of the output signals of said compressing means when the output signal of said compressing means is input thereto, or outputs said single set information unit when the output signal of said noncompression block is input thereto, and adds an identification code for identifying whether the information amount of the signal has been compressed or not, and a synchronizing signal adding means which adds one synchronizing signal to the output signal of said identification information adding means,
wherein it is configured so as to transmit the output signal from said synchronizing signal adding means.

### Embodiment 5.

A transmission apparatus with the features of one of embodiments 1 to 4, further provided with a Time Stamp adding means which recognizes said every constant information unit of a Time Stamp representing the time of day when the output signal of said compressing means is output and adds said Time Stamp to every constant information unit of the output signal of said compressing means.

### Embodiment 6.

A transmission apparatus with the features of one of embodiments 1 to 5, wherein in the case where said constant information unit has N rows (N is a natural number not less than 1), and one or more of said constant information units are collected to form a predetermined unit, and furthermore in the case where said predetermined unit has a first area of N rows wherein actual information signals are located and a second area of M rows (M is a natural number not less than 1) wherein a redundant signal is located, and said predetermined unit can be formed of information signals having not more than a constant amount of information, an X-Y converting means is further provided which is configured so as to be able to locate at least a part of actual information signals of the output signal of said compressing means in said second area in accordance with the information amount of said input information signals.

### Embodiment 7.

A transmission apparatus with the features of one of embodiments 1 to 5, wherein in the case where said constant information unit has N rows (N is a natural number not less than 1), and one or more of said constant information units are collected to form a predetermined unit, and furthermore in the case where said predetermined unit has a first area of N rows (N is a natural number not less than 1) wherein actual information signals are located and a second area of M rows (M is a natural number not less than 1) wherein a parity signal is located, and said predetermined unit can be formed of information signals having not more than a constant amount of information, and additionally in the case where the information amount of said input information signals exceeds a constant information amount corresponding to said predetermined unit and capable of forming said first area, an X-Y converting means is further provided which is configured so as to be able to locate at least a part of actual information signals of the output signal of said compressing means in said second area.

### Embodiment 8.

A transmission apparatus comprising a compressing means which compresses the information amount of an input information signal and performs output for every constant information unit, an ECC encoder which collects n (n is a natural number not less than 1) units of the output signals of said compressing means and adds an error correction signal thereto,
wherein the output signal of said synchronizing signal adding means is transmitted.

### Embodiment 9.

A transmission apparatus comprising plural compressing means, each of which compresses the information amount of an input information signal and performs output for every constant information unit, a multiplexing means which selects each output signal of said plural compressing means for every constant information unit and performs output time-sequentially, an ECC encoder which collects n (n is a natural number not less than 1) units of the output signals of said multiplexing means and adds an error correction signal thereto, and a synchronizing signal adding means which collects plural units of the output signals of said ECC encoder and adds one synchronizing signal thereto,
wherein it is configured so as to transmit the output signal from said synchronizing signal adding means.

### Embodiment 10.

A transmission apparatus comprising a compressing means which compresses the information amount of an input information signal and performs output for every constant information unit, a noncompression block which outputs an input information signal for every

constant information unit without compression, a multiplexing means which selects each output signal of said compressing means and said noncompression block for every constant information unit and performs output time-sequentially, an ECC encoder which collects n (n is a natural number not less than 1) units of the output signals of said multiplexing means and adds an error correction signal thereto, and a synchronizing signal adding means which collects plural units of the output signals of said ECC encoder and adds one synchronizing signal thereto,
wherein it is configured so as to transmit the output signal from said synchronizing signal adding means.

### Embodiment 11.

A transmission apparatus comprising a compressing means which compresses the information amount of an input information signal and performs output for every constant information unit, an ECC encoder which collects n (n is a natural number not less than 1) units of the output signals of said compressing means and adds an error correction signal thereto, a noncompression block which outputs an input information signal for every constant information unit without compression, an identification information adding means which collects and outputs plural units of the output signals of said ECC encoder when the output signal of said ECC encoder is input thereto, or outputs said single set information unit when the output signal of said noncompression block is input thereto, and adds an identification code for identifying whether the information amount of the signal has been compressed or not, and a synchronizing signal adding means which adds one synchronizing signal to the output signal of said identification information adding means,
wherein it is configured so as to transmit the output signal from said synchronizing signal adding means.

### Embodiment 12.

A transmission apparatus with the features of one of embodiments 8 to 11, provided with a Time Stamp adding means which recognizes said every constant information unit of a Time Stamp representing the time of day when the input signal of said ECC encoder is input thereto and adds said Time Stamp to every constant information unit of the input signal of said ECC encoder.

### Embodiment 13.

A transmission apparatus with the features of one of embodiments 8 to 11, provided with a Time Stamp adding means which recognizes said every constant information unit of a Time Stamp representing the time of day when the output signal of said ECC encoder is output and adds said Time Stamp to every constant information unit of the output signal of said ECC encoder.

### Embodiment 14.

A transmission apparatus with the features of one of embodiments 8 to 13, wherein in the case where said constant information unit has N rows (N is a natural number not less than 1), and one or more said constant information units are collected to form a predetermined unit, and furthermore in the case where said predetermined unit has a first area of N rows wherein actual information signals are located and a second area of M rows (M is a natural number not less than 1) wherein a redundant signal is located, and said predetermined unit can be formed of information signals having not more than a constant amount of information, an X-Y converting means is further provided which is configured so as to be able to locate at least a part of actual information signals of the output signal of said ECC encoder in said second area in accordance with the information amount of said input information signals.

### Embodiment 15.

A transmission apparatus with the features of one of embodiments 8 to 13, wherein in the case where said constant information unit has N rows (N is a natural number not less than 1), and one or more said constant information units are collected to form a predetermined unit, and furthermore in the case where said predetermined unit has a first area of N rows (N is a natural number not less than 1) wherein actual information signals are located and a second area of M rows (M is a natural number not less than 1) wherein a parity signal is located, and said predetermined unit can be formed of information signals having not more than a constant amount of information, and additionally in the case where the information amount of said input information signals exceeds a constant information amount corresponding to said predetermined unit and capable of forming said first area, an X-Y converting means is further provided which is configured so as to be able to locate at least a part of actual information signals of the output signal of said compressing means in said second area.

### Embodiment 16.

A transmission apparatus with the features of one of embodiments 5 to 7 and embodiments 12 to 15, wherein in the case where a plurality of said constant information units of said information signals are collected to form a predetermined unit, said Time Stamp adding means comprises a predetermined unit counting means which counts a time from a predetermined reference position to a predetermined unit of said input information signals, and a predetermined unit internal counting means which counts a time from a fixed position of said predetermined unit of said information signals to a position to which said Time Stamp is added.

### Embodiment 17.

A transmission apparatus with the features of one of embodiments 5 to 7 and embodiments 12 to 15, wherein in the case where a plurality of said constant information units of said information signals are collected to form a predetermined unit having a constant time length, said Time Stamp adding means comprises a predetermined unit counting means which counts the number of said predetermined units of said input information signals, and a predetermined unit internal counting means which counts a time from a fixed position of said predetermined unit of said information signals to a position to which said Time Stamp is added.

### Embodiment 18.

A transmission apparatus with the features of one of embodiments 5 to 7 and embodiments 12 to 15, wherein in the case where a plurality of said constant information units of said information signals are collected to form a predetermined unit having a constant time length, said Time Stamp adding means comprises a predetermined unit internal counting means which counts a time from a fixed position of said predetermined unit of said information signals to a position to which said Time Stamp is added.

### Embodiment 19.

A transmission apparatus with the features of one of embodiments 5 to 7 and embodiments 12 to 15, wherein in the case where a plurality of said constant information units of said information signals are collected to form a predetermined unit, and said predetermined unit has an identification code for identifying each of said predetermined units, said Time Stamp adding means comprises a predetermined unit internal counting means which counts a time from a fixed position of said predetermined unit of said information signals to a position to which said Time Stamp is added.

### Embodiment 20.

A transmission apparatus for transmitting one synchronizing signal and a collection of plural constant information units of information signals are transmitted as a set information unit.

### Embodiment 21.

A transmission apparatus with the features of embodiment 20, wherein said information signal is a compressed signal.

### Embodiment 22.

A transmission apparatus with the features of embodiment 20 or 21, wherein there are plural types of information signals.

### Embodiment 23.

A transmission apparatus with the features of one of embodiments 20 to 22, wherein said information signal comprises a constant information unit of compressed information signals wherein the amount of information is compressed, and a constant information unit of noncompressed information signals wherein the amount of information is noncompressed.

### Embodiment 24.

A transmission apparatus comprising a transmission apparatus with the features of one of embodiments 20 to 23, other transmission apparatus for transmitting one synchronizing signal and one constant information unit of noncompressed information signals as a set information unit, and a means for adding a signal for identifying whether an output signal is output from which transmission apparatus.

### Embodiment 25.

A transmission apparatus with the features of one of embodiments 20 to 24, wherein an error correction signal is added to every n (n is a natural number not less than 1) constant information units of said information signals.

### Embodiment 26.

A transmission apparatus with the features of one of embodiments 20 to 25, wherein a Time Stamp is added to every constant information unit of said information signals.

### Embodiment 27.

A transmission apparatus with the features of embodiment 26, wherein in the case where a plurality of said constant information units of said information signals are collected to form a predetermined unit, said Time Stamp comprises a predetermined unit Time Stamp representing a time from a predetermined reference to a predetermined unit of said input information signals, and a predetermined unit internal Time Stamp representing a time from a fixed position of said predetermined unit of said information signals to a position to which said Time Stamp is added.

### Embodiment 28.

A transmission apparatus with the features of embodiment 26, wherein in the case where a plurality of said constant information units of said information signals are collected to form a predetermined unit having a constant time length, said Time Stamp comprises a predetermined unit Time Stamp representing the number of said predetermined units of said input information signals, and a predetermined unit internal Time Stamp representing a time from a fixed position of said predetermined unit of said information signals to a position to which said Time Stamp is added.

### Embodiment 29.

A transmission apparatus with the features of embodiment 26, wherein in the case where a plurality of said constant information units of said information signals are collected to form a predetermined unit having a constant time length, said information signal (sic) comprises a predetermined unit internal counting means which counts a time from a fixed position of said predetermined unit of said input information signals to a position to which said Time Stamp is added.

### Embodiment 30.

A transmission apparatus with the features of embodiment 26, wherein in the case where a plurality of said constant information units of said information signals are collected to form a predetermined unit, and said predetermined unit has an identification code for identifying each of said predetermined units, said information signal comprises a predetermined unit internal Time Stamp representing a time from a fixed position of said predetermined unit of said input information signals to a position to which said Time Stamp is added.

### Embodiment 31.

A transmission apparatus with the features of one of embodiments 20 to 30, wherein in the case where said constant information unit has N rows (N is a natural number not less than 1), and one or more of said constant information units are collected to form a predetermined unit, and furthermore in the case where said predetermined unit has a first area of N rows wherein actual information signals are located and a second area of M rows (M is a natural number not less than 1) wherein a redundant signal is located, and said predetermined unit can be formed of information signals having not more than a constant amount of information, said apparatus is configured so that at least a part of said actual information signals is locatable in said second area in accordance with the information amount of said input information signals.

### Embodiment 32.

A transmission apparatus with the features of one of embodiments 20 to 30, wherein in the case where said constant information unit has N rows (N is a natural number not less than 1), and one or more said constant information units are collected to form a predetermined unit, and furthermore in the case where said predetermined unit has a first area of N rows (N is a natural number not less than 1) wherein actual information signals are located and a second area of M rows (M is a natural number not less than 1) wherein a parity signal is located, and said predetermined unit can be formed of information signals having not more than a constant amount of information, and additionally in the case where the information amount of said input information signals exceeds a constant information amount corresponding to said predetermined unit and capable of forming said first area, at least a part of said actual information signals is configured so as to be locatable in said second area.

### Embodiment 33.

A transmission apparatus with the features of one of embodiments 1 to 32, wherein signals to be transmitted are transmitted to a wire transmission line.

### Embodiment 34.

A transmission apparatus with the features of embodiment 33, wherein a transmission method for transmitting signals to said wire transmission line is a method stipulated in the SMPTE 259M or SMPTE 292M standard.

### Embodiment 35.

A transmission apparatus in the features of embodiment 33 or 34, wherein said error correction code is a Reed Solomon code of 4 bytes in the case where a coaxial cable used as said wire transmission line has a length wherein the attenuation amount of an information signal to be transmitted does not exceed the range of 20 dB to 30 dB at half of the carrier wave frequency of said information signal.

### Embodiment 36.

A transmission apparatus in the features of embodiment 33 or 34, wherein said wire transmission line is a 5C2V coaxial cable having a length of 300 m or less, the carrier wave frequency of said information signal to be transmitted to said coaxial cable is 270 MHz, and said error correction code is a Reed Solomon code of 4 bytes.

### Embodiment 37.

A transmission apparatus in the features of embodiment 33 or 34, wherein said wire transmission line is a 5C2V coaxial cable having a length of 250 m or less, the carrier wave frequency of said information signal to be transmitted to said coaxial cable is 360 MHz, and said error correction code is a Reed Solomon code of 4 bytes.

### Embodiment 38.

A transmission apparatus with the features of embodiment 33 or 34, wherein a transmission method for transmitting signals to said wire transmission line is a method stipulated in the SMPTE 259M or SMPTE 292M standard, and said error correction code is a Reed Solomon code of 4 bytes.

### Embodiment 39.

A transmission apparatus with the features of one of embodiments 33 to 38, wherein said error correction code comprises a Reed Solomon code and a parity bit added to every byte of said information signal.

### Embodiment 40.

A transmission apparatus with the features of one of embodiments 1 to 39, wherein in a transmission system for transmitting and receiving information signals of M bytes as one set information unit, a constant information unit is transmitted as N bytes (M > N, M and N are natural numbers).

### Embodiment 41.

A transmission method for transmitting one synchronizing signal and a collection of plural constant information units of information signals as a set information unit.

### Embodiment 42.

A transmission method with the features of embodiment 41, wherein said information signal is a compressed signal.

### Embodiment 43.

A transmission method with the features of embodiment 41 or 42, wherein there are plural types of information signals.

### Embodiment 44.

A transmission method with the features of one of embodiments 41 to 43, wherein said information signal comprises a constant information unit of compressed information signals wherein the amount of information is compressed, and a constant information unit of noncompressed information signals wherein the amount of information is noncompressed.

### Embodiment 45.

A transmission method comprising a transmission method with the features of one of embodiments 41 to 44, another transmission step for transmitting one synchronizing signal and one constant information unit of noncompressed information signals as a set information unit, and a step for adding a signal for identifying whether an output signal is output by the former transmission method or the latter transmission method.

### Embodiment 46.

A transmission method with the features of one of embodiments 41 to 45, wherein an error correction signal is added to every n (n is a natural number not less than 1) constant information units of said information signals.

### Embodiment 47.

A transmission method with the features of one of embodiments 41 to 46, wherein a Time Stamp is added to every constant information unit of said input information signals.

### Embodiment 48.

A transmission method with the features of embodiment 47, wherein in the case where a plurality of said constant information units of said information signals are collected to form a predetermined unit, said Time Stamp comprises a predetermined unit Time Stamp representing a time from a predetermined reference to a predetermined unit of said input information signals, and a predetermined unit Time Stamp representing a time from a fixed position of said predetermined unit of said information signals to a position to which said Time Stamp is added.

### Embodiment 49.

A transmission method with the features of embodiment 47, wherein in the case where a plurality of said constant information units of said information signals are collected to form a predetermined unit having a constant time length, said Time Stamp comprises a predetermined unit Time Stamp representing the number of said predetermined units of said input information signals, and a predetermined unit Time Stamp representing a time from a fixed position of said predetermined unit of said information signals to a position to which said Time Stamp is added.

### Embodiment 50.

A transmission method with the features of embodiment 47, wherein in the case where a plurality of said constant information units of said information signals are collected to form a predetermined unit having a constant time length, said Time Stamp comprises a predetermined unit internal Time Stamp representing a time from a fixed position of said predetermined unit of said input information signals to a position to which said Time Stamp is added.

### Embodiment 51.

A transmission method with the features of embodiment 47, wherein in the case where a plurality of said constant information units of said information signals are collected to form a predetermined unit, and said predetermined unit has an identification code for identifying each of said predetermined units, it comprises a predetermined unit internal Time Stamp representing a time from a fixed position of said predetermined unit of said input information signals to a position to which said Time Stamp is added.

### Embodiment 52.

A transmission method with the features of one of embodiments 41 to 51, wherein in the case where said constant information unit has N rows (N is a natural number not less than 1), and one or more of said constant information units are collected to form a predetermined unit, and furthermore in the case where said predetermined unit has a first area of N rows wherein actual information signals are located and a second area of M rows (M is a natural number not less than 1) wherein a redundant signal is located, and said predetermined unit can be formed of information signals having not more than a constant amount of information, at least a part of said actual information signals is locatable in said second area in accordance with the information amount of said input information signals.

### Embodiment 53.

A transmission method with the features of one of embodiments 41 to 51, wherein in the case where said constant information unit has N rows (N is a natural number not less than 1), and one or more of said constant information units are collected to form a predetermined unit, and furthermore in the case where said predetermined unit has a first area of N rows (N is a natural number not less than 1) wherein actual information signals are located and a second area of M rows (M is a natural number not less than 1) wherein a parity signal is located, and said predetermined unit can be formed of information signals having not more than a constant amount of information, and additionally in the case where the information amount of said input information signals exceeds a constant information amount corresponding to said predetermined unit and capable of forming said first area, at least a part of said actual information signals is locatable in said second area.

### Embodiment 54.

A transmission method with the features of one of embodiments 41 to 53, wherein signals to be transmitted are transmitted to a wire transmission line.

### Embodiment 55.

A transmission method with the features of embodiment 54, wherein a transmission method for transmitting signals to said wire transmission line is a method stipulated in the SMPTE 259M or SMPTE 292M standard.

### Embodiment 56.

A transmission method with the features of embodiment 54 or 55, wherein said error correction code is a Reed Solomon code of 4 bytes in the case where a coaxial cable used as said wire transmission line has a length wherein the attenuation amount of an information signal to be transmitted does not exceed 20 dB to 30 dB at half of the carrier wave frequency of said information signal.

### Embodiment 57.

A transmission method with the features of embodiment 54 or 55, wherein said wire transmission line is a 5C2V coaxial cable having a length of 300 m or less, the carrier wave frequency of said information signal to be transmitted by said coaxial cable is 270 MHz, and said error correction code is a Reed Solomon code of 4 bytes.

### Embodiment 58.

A transmission method with the features of embodiment 54 or 55, wherein said wire transmission line is a 5C2V coaxial cable having a length of 250 m or less, the carrier wave frequency of said information signal to be transmitted by said coaxial cable is 360 MHz, and said error correction code is a Reed Solomon code of 4 bytes.

### Embodiment 59.

A transmission method with the features of embodiment 54 or 55, wherein a transmission method for transmitting signals to said wire transmission line is a method stipulated in the SMPTE 259M or SMPTE 292M standard, and said error correction code is a Reed Solomon code of 4 bytes.

### Embodiment 60.

A transmission method with the features of one of embodiments 54 to 59, wherein said error correction code comprises a Reed Solomon code and a parity bit added to every byte of said information signal.

### Embodiment 61.

A transmission method with the features of one of embodiments 54 to 60, wherein in a transmission system for transmitting and receiving information signals of M bytes as one set information unit, a constant information unit is transmitted as N bytes (M > N, M and N are natural numbers).

### Embodiment 62.

A receiving apparatus comprising a synchronizing signal eliminating means which receives one synchronizing signal and plural units of compressed information signals as one set information unit and eliminates said synchronizing signal from the received signal, and a decompressing means which decompresses compressed information signals of the output signal of said synchronizing signal eliminating means for every unit.

### Embodiment 63.

A receiving apparatus comprising a synchronizing signal eliminating means which receives one synchronizing signal and plural units of compressed information signals as one set information unit and eliminates said synchronizing signal from the received signal, a distributing means which distributes the output signal of said synchronizing signal eliminating means in accordance with a multiplexed rule, and a decompressing means which decompresses information-compressed information signals of the output signal of said distributing means for every unit.

### Embodiment 64.

A receiving apparatus comprising a synchronizing signal eliminating means which receives one synchronizing signal and plural units of compressed information signals as one set information unit and eliminates said synchronizing signal from the received signal, a distributing means which distributes the output signal of said synchronizing signal eliminating means in accordance with a multiplexed rule, a decompressing means which decompresses information-compressed information signals of the output signal of said distributing means for every unit, and a nonexpansion block which outputs information-noncompressed information signals of the output signal of said distributing means.

### Embodiment 65.

A receiving apparatus with the features of one of embodiments 62 to 64, provided with a Time Stamp reproducing means which recognizes every constant information unit of information representing a time included in the output signal of said synchronizing signal eliminating means and delays every constant information unit of the output signal of said synchronizing signal eliminating means on the basis of said Time Stamp.

### Embodiment 66.

A receiving apparatus comprising a synchronizing signal eliminating means which receives one synchronizing signal and plural units of compressed information signals as one set information unit and eliminates said synchronizing signal from the received signal, an ECC decoder which carries out signal error correction for every unit of the output signal of said synchronizing signal eliminating means to which an error correction signal has been added on the basis of the error correction signal, and a decompressing means which decompresses compressed information signals of the output signal of said ECC decoder for every unit.

### Embodiment 67.

A receiving apparatus comprising a synchronizing signal eliminating means which receives one synchronizing signal and plural units of compressed information signals as one set information unit and eliminates said synchronizing signal from the received signal, an ECC decoder which carries out signal error correction for every unit of the output signal of said synchronizing signal eliminating means to which an error correction signal has been added on the basis of the error correction signal, a distributing means which distributes the output signal of said ECC decoder in accordance with a multiplexed rule, and a decompressing means which decompresses information-compressed information signals of the output signal of said distributing means for every unit.

### Embodiment 68.

A receiving apparatus comprising a synchronizing signal eliminating means which receives one synchronizing signal and plural units of compressed information signals as one set information unit and eliminates said synchronizing signal from the received signal, an ECC decoder which carries out signal error correction for every unit of the output signal of said synchronizing signal eliminating means to which an error correction signal has been added on the basis of the error correction signal, a distributing means which distributes the output signal of said ECC decoder in accordance with a multiplexed rule, a decompressing means which decompresses information-compressed information signals of the output signal of said distributing means for every unit, and a nonexpansion block which outputs information-noncompressed information signals of the output signal of said distributing means.

### Embodiment 69.

A receiving apparatus with the features of one of embodiments 66 to 68, provided with a Time Stamp reproducing means which recognizes every constant information unit of information representing a time included in the output signal of said synchronizing signal eliminating means and delays every constant information unit of the output signal of said synchronizing signal eliminating means on the basis of said Time Stamp.

### Embodiment 70.

A receiving apparatus with the features of one of embodiments 66 to 68, provided with a Time Stamp reproducing means which recognizes every constant information unit of information representing a time included in the output signal of said ECC decoder and delays every constant information unit of the output signal of said ECC decoder on the basis of said Time Stamp.

### Embodiment 71.

A receiving apparatus with the features of one of embodiments 62 to 70, wherein in the case where said constant information unit has N rows (N is a natural number not less than 1), and one or more said constant information units are collected to form a predetermined unit, and furthermore in the case where said predetermined unit has a first area of N rows wherein an actual information signal is located and a second area of M rows (M is a natural number not less than 1) wherein a redundant signal is located, and said predetermined unit can be formed of information signals having not more than a constant amount of information, an X-Y converting means is provided which can relocate actual information signals of the output signal of said synchronizing signal eliminating means, having been located in said second area, in said first area.

### Embodiment 72.

A receiving apparatus with the features of one embodiments 62 to 70, wherein in the case where said constant information unit has N rows (N is a natural number not less than 1), and one or more said constant information units are collected to form a predetermined unit, and furthermore in the case where said predetermined unit has a first area of N rows wherein an actual information signal is located and a second area of M rows (M is a natural number not less than 1) wherein a parity signal is located, and said predetermined unit can be formed of information signals having not more than a constant amount of information, an X-Y converting means is provided which can relocate actual information signals of the output signal of said synchronizing signal eliminating means, having been located in said second area, in said first area.

### Embodiment 73.

A receiving apparatus with the features of one of embodiments 65 and embodiments 69 to 72, wherein in the case where a plurality of said constant information units of said information signals are collected to form a predetermined unit, and in the case where said Time Stamp comprises a predetermined unit Time Stamp representing a time from a predetermined reference position to a predetermined unit of said input information signals, and a predetermined unit internal Time Stamp representing a time from a fixed position of said predetermined unit of said information signals to a position to which said Time Stamp is added, said Time Stamp reproducing means comprises a predetermined unit delaying means which delays said constant information unit by a time corresponding to the time from said predetermined reference to said predetermined unit represented by said predetermined unit Time Stamp, and a predetermined unit internal delaying means which delays said constant information unit by a time represented by said predetermined unit internal Time Stamp of said information signals.

### Embodiment 74.

A receiving apparatus with the features of one of embodiments 65 and embodiments 69 to 72, wherein in the case where a plurality of said constant information units of said information signals are collected to form a predetermined unit having a constant time length, and in the case where said Time Stamp comprises a predetermined unit Time Stamp representing the number of said predetermined units of said input information signals, and a predetermined unit internal Time Stamp representing a time from a fixed position of said predetermined unit of said information signals to a position to which said Time Stamp is added, said Time Stamp reproducing means comprises a predetermined unit delaying means which delays said constant information unit by a time corresponding to the number of said predetermined units represented by said predetermined unit Time Stamp, and a predetermined unit internal delaying means which delays said constant information unit by a time represented by said predetermined unit internal Time Stamp of said information signals.

### Embodiment 75.

A receiving apparatus with the features of one of embodiments 65 and embodiments 69 to 72, wherein in the case where a plurality of said constant information units of said information signals are collected to form a predetermined unit having a constant time length, and in the case where it comprises a predetermined unit internal Time Stamp representing a time from a fixed position of said predetermined unit of said information signals to a position to which said Time Stamp is added, said Time Stamp reproducing means comprises a predetermined unit internal delaying means which delays said constant information unit by a time corresponding to said predetermined unit internal Time Stamp of said information signals.

### Embodiment 76.

A receiving apparatus with the features of one of embodiments 65 and embodiments 69 to 72, wherein in the case where a plurality of said constant information units of said information signals are collected to form a predetermined unit, and said predetermined unit has an identification code for identifying each of said predetermined units, and in the case where said Time Stamp comprises a predetermined unit internal Time Stamp representing a time from a fixed position of said predetermined unit of said input information signals to a position to which said Time Stamp is added, said Time Stamp reproducing means comprises a predetermined unit internal delaying means which delays said constant information unit by a time corresponding to said predetermined unit Time Stamp of said information signals.

### Embodiment 77.

A receiving apparatus for receiving a collection of one synchronizing signal and plural constant information units of information signals are received as a set information unit.

### Embodiment 78.

A receiving apparatus with the features of embodiment 77, wherein said information signal is a compressed signal.

### Embodiment 79.

A receiving apparatus with the features of embodiment 77 or 78, wherein there are plural types of information signals to be received.

### Embodiment 80.

A receiving apparatus with the features of one of embodiments 77 to 79, wherein said information signal comprises a constant information unit of compressed information signals wherein the amount of information is compressed, and a constant information unit of noncompressed information signals wherein the amount of information is noncompressed.

### Embodiment 81.

A receiving apparatus comprising a receiving apparatus with the features of one of embodiments 77 to 80, and a second receiving apparatus for receiving one synchronizing signal and one constant information unit of noncompressed information signals as a set information unit, wherein identification is carried out to determine whether said set information unit includes one unit of information signals or plural units of information signals, thereby to select one of said receiving apparatuses on the basis of the result of said identification.

### Embodiment 82.

A receiving apparatus with the features of one of embodiments 77 to 81, being configured so that said predetermined units of information signals undergo signal error correction for every unit to which an error correction code has been added on the basis of said error correction signal.

### Embodiment 83.

A receiving apparatus with the features of one of embodiments 77 to 82, being configured so that every constant information unit of information signals is delayed and output on the basis of said Time Stamp added to every constant information unit of information signals.

### Embodiment 84.

A receiving apparatus with the features of embodiment 83, wherein in the case where a plurality of said constant information units of said information signals are collected to form a predetermined unit, and in the case where said Time Stamp comprises a predetermined unit Time Stamp representing a time from a predetermined reference position to a predetermined unit of said input information signals, and a predetermined unit internal Time Stamp representing a time from a fixed position of said predetermined unit of said information signals to a position to which said Time Stamp is added, said apparatus is configured so that said constant information unit is delayed by a time corresponding to the time from said predetermined reference position to the time represented by said predetermined Time Stamp for every constant information unit of information signals in accordance with said time stamp added to every constant information unit of information signals, and so that said constant information unit is delayed by a time represented by said predetermined unit internal Time Stamp of said information signals.

### Embodiment 85.

A receiving apparatus with the features of embodiment 83, wherein in the case where a plurality of said constant information units of said information signals are collected to form a predetermined unit having a constant time length, and in the case where said Time Stamp comprises a predetermined unit Time Stamp representing the number of said predetermined units of said input information signals, and a predetermined unit internal Time Stamp representing a time from a fixed position of said predetermined unit of said information signals to a position to which said Time Stamp is added, said apparatus is configured so that said constant information unit is delayed by a time corresponding to the number of predetermined units represented by said predetermined unit Time Stamp for every constant information unit of information signals in accordance with said time stamp added to every constant information unit of information signals, and so that said constant information unit is delayed by a time represented by said predetermined unit internal Time Stamp of said information signals.

### Embodiment 86.

A receiving apparatus with the features of embodiment 83, wherein in the case where a plurality of said constant information units of said information signals are collected to form a predetermined unit having a constant time length, and in the case where it comprises a predetermined unit internal Time Stamp representing a time from a fixed position of said predetermined unit of said information signals to a position to which said Time Stamp is added, said apparatus is configured so that said constant information unit is delayed by a time corresponding to said predetermined unit internal Time Stamp of said information signals for every constant information unit of information signals in accordance with said time stamp added to every constant information unit of information signals.

### Embodiment 87.

A receiving apparatus with the features of embodiment 83, wherein in the case where a plurality of said constant information units of said information signals are collected to form a predetermined unit having a constant time length, and said predetermined unit has an identification code for identifying each of said predetermined units, and in the case where it comprises a predetermined unit internal Time Stamp representing a time from a fixed position of said predetermined unit of said information signals to a position to which said Time Stamp is added, said apparatus is configured so that said constant information unit is delayed by a time corresponding to said predetermined unit internal Time Stamp of said information signals for every constant information unit of information signals in accordance with said time stamp added to every constant information unit of information signals. with the features of one of embodiments

### Embodiment 88.

A receiving apparatus with the features of one of embodiments 78 to 88, wherein in the case where said constant information unit has N rows (N is a natural number not less than 1), and one or more said constant information units are collected to form a predetermined unit, and furthermore in the case where said predetermined unit has a first area of N rows wherein an actual information signal is located and a second area of M rows (M is a natural number not less than 1) wherein a redundant signal is located, and said predetermined unit can be formed of information signals having not more than a constant amount of information, said apparatus is configured so that actual information signals located in said second area can be relocated in said first area.

### Embodiment 89.

A receiving apparatus with the features of one of embodiments 77 to 89, wherein in the case where said constant information unit has N rows (N is a natural number not less than 1), and one or more of said constant information units are collected to form a predetermined unit, and furthermore in the case where said predetermined unit has a first area of N rows wherein an actual information signal is located and a second area of M rows (M is a natural number not less than 1) wherein a parity signal is located, and said predetermined unit can be formed of information signals having not more than a constant amount of information, said apparatus is configured so that actual information signals located in said second area can be relocated in said first area.

### Embodiment 90.

A receiving apparatus with the features of one of embodiments 62 to 89, wherein signals to be received are transmitted from a wire transmission line.

### Embodiment 91.

A receiving apparatus with the features of embodiment 90, wherein a transmission method for transmitting signals to said wire transmission line is a method stipulated in the SMPTE 259M or SMPTE 292M standard.

### Embodiment 92.

A receiving apparatus with the features of embodiment 90 or 91, wherein said wire transmission line is a coaxial cable, said coaxial cable has a length wherein a signal attenuation amount does not exceed 20 dB to 30 dB at half of the carrier wave frequency of said information signal, and said error correction code is a Reed Solomon code of 4 bytes.

### Embodiment 93.

A receiving apparatus with the features of embodiment 90 or 91, wherein said wire transmission line is a 5C2V coaxial cable having a length of 300 m or less, the carrier wave frequency of said information signal to be received via said coaxial cable is 270 MHz, and said error correction code is a Reed Solomon code of 4 bytes.

### Embodiment 94.

A receiving apparatus with the features of embodiment 90 or 91, wherein said wire transmission line is a 5C2V coaxial cable having a length of 250 m or less, the carrier wave frequency of said information signal to be received via said coaxial cable is 360 MHz, and said error correction code is a Reed Solomon code of 4 bytes.

### Embodiment 95.

A receiving apparatus with the features of embodiment 90 or 91, wherein a transmission method for transmitting signals to said wire transmission line is a method stipulated in the SMPTE 259M or SMPTE 292M standard, and said error correction code is a Reed Solomon code of 4 bytes.

### Embodiment 96.

A receiving apparatus with the features of one of embodiments 90 to 95, wherein said error correction code comprises a Reed Solomon code and a parity bit added to every byte of said information signal, and after an error in said information signal is detected by using said parity bit, the error in said information signal is corrected by using said Reed Solomon code.

### Embodiment 97.

A receiving apparatus with the features of one of embodiments 62 to 96, wherein in a transmission system for transmitting and receiving information signals of M bytes as one set information unit, a constant information unit is transmitted as N bytes (M > N, M and N are natural numbers).

### Embodiment 98.

A receiving method for receiving one synchronizing signal and plural constant information units of information signals collected as a set information unit.

### Embodiment 99.

A receiving method with the features of embodiment 98, wherein said information signal is a compressed signal.

### Embodiment 100.

A receiving method with the features of embodiment 98 or 99, wherein there are plural types of information signals.

### Embodiment 101.

A receiving method with the features of one of embodiments 98 to 100, wherein said information signal comprises a constant information unit of compressed information signals wherein the amount of information is compressed, and a constant information unit of noncompressed information signals wherein the amount of information is noncompressed.

### Embodiment 102.

A receiving method comprising a receiving method with the features of one of embodiments 98 to 101, further comprising another reception step for receiving one synchronizing signal and one constant information unit of noncompressed information signals as a set information unit, wherein identification is carried out to determine whether said set information unit includes one unit of information signals or plural units of information signals, thereby to select one of said receiving methods on the basis of the result of said identification.

### Embodiment 103.

A receiving method with the features of one of embodiments 98 to 102, wherein said predetermined units of information signals undergo signal error correction for every unit to which an error correction code has been added on the basis of said error correction signal.

### Embodiment 104.

A receiving method with the features of one of embodiments 98 to 103, wherein every constant information unit of information signals is delayed and output on the basis of said Time Stamp added to every constant information unit of information signals.

### Embodiment 105.

A receiving method with the features of embodiment 104, wherein in the case where a plurality of said constant information units of said information signals are collected to form a predetermined unit, and in the case where said Time Stamp comprises a predetermined unit Time Stamp representing a time from a predetermined reference to a predetermined unit of said input information signals, and a predetermined unit internal Time Stamp representing a time from a fixed position of said predetermined unit of said information signals to a position to which said Time Stamp is added, said constant information unit is delayed by a time corresponding to the time from said predetermined reference to the time corresponding to said predetermined Time Stamp for every constant information unit of information signals in accordance with said time stamp added to every constant information unit of information signals, and said constant information unit is delayed by a time represented by said predetermined unit internal Time Stamp of said information signals.

### Embodiment 106.

A receiving method with the features of embodiment 104, wherein in the case where a plurality of said constant information units of said information signals are collected to form a predetermined unit having a constant time length, and in the case where said Time Stamp comprises a predetermined unit Time Stamp representing the number of said predetermined units of said input information signals, and a predetermined unit internal Time Stamp representing a time from a fixed position of said predetermined unit of said information signals to a position to which said Time Stamp is added, said constant information unit is delayed by a time corresponding to the number of predetermined units represented by said predetermined unit Time Stamp for every constant information unit of information signals in accordance with said time stamp added to every constant information unit of information signals, and said constant information unit is delayed by a time represented by said predetermined unit internal Time Stamp of said information signals.

### Embodiment 107.

A receiving method with the features of embodiment 104, wherein in the case where a plurality of said constant information units of said information signals are collected to form a predetermined unit having a constant time length, and in the case where said Time Stamp comprises a predetermined unit internal Time Stamp representing a time from a fixed position of said predetermined unit of said information signals to a position to which said Time Stamp is added, said constant information unit is delayed by a time corresponding to said predetermined unit internal Time Stamp of said information signals for every constant information unit of information signals in accordance with said time stamp added to every constant information unit of information signals.

### Embodiment 108.

A receiving method with the features of embodiment 104, wherein in the case where a plurality of said constant information units of said information signals are collected to form a predetermined unit having a constant time length, and said predetermined unit has an identification code for identifying each of said predetermined units, and in the case where it comprises a predetermined unit internal Time Stamp representing a time from a fixed position of said predetermined unit of said information signals to a position to which said Time Stamp is added, said constant information unit is delayed by a time corresponding to said predetermined unit internal Time Stamp of said information signals for every constant information unit of information signals in accordance with said time stamp added to every constant information unit of information signals.

### Embodiment 109.

A receiving method with the features of one of embodiments 98 to 108, wherein in the case where said constant information unit has N rows (N is a natural number not less than 1), and one or more said constant information units are collected to form a predetermined unit, and furthermore in the case where said predetermined unit has a first area of N rows wherein an actual information signal is located and a second area of M rows (M is a natural number not less than 1) wherein a redundant signal is located, and said predetermined unit can be formed of information signals having not more than a constant amount of information, actual information signals located in said second area can be relocated in said first area.

### Embodiment 110.

A receiving method with the features of one of embodiments 98 to 108, wherein in the case where said constant information unit has N rows (N is a natural number not less than 1), and one or more of said constant information units are collected to form a predetermined unit, and furthermore in the case where said predetermined unit has a first area of N rows wherein an actual information signal is located and a second area of M rows (M is a natural number not less than 1) wherein a parity signal is located, and said predetermined unit can be formed of information signals having not more than a constant amount of information, actual information signals located in said second area can be relocated in said first area.

### Embodiment 111.

A receiving method with the features of one of embodiments 98 to 110, wherein signals to be received are transmitted from a wire transmission line.

### Embodiment 112.

A receiving method with the features of embodiment 111, wherein a transmission method for transmitting signals to said wire transmission line is a method stipulated in the SMPTE 259M or SMPTE 292M standard.

### Embodiment 113.

A receiving method with the features of embodiment 111 or 112, wherein said wire transmission line is a coaxial cable, said coaxial cable has a length wherein a signal attenuation amount does not exceed 20 dB to 30 dB at half of the carrier wave frequency of said information signal, and said error correction code is a Reed Solomon code of 4 bytes.

### 114.

A receiving method with the features of embodiment 111 or 112, wherein said wire transmission line is a 5C2V coaxial cable having a length of 300 m or less, the carrier wave frequency of said information signal to be received via said coaxial cable is 270 MHz, and said error correction code is a Reed Solomon code of 4 bytes.

### Embodiment 115.

A receiving method with the features of embodiment 111 or 112, wherein said wire transmission line is a 5C2V coaxial cable having a length of 250 m or less, the carrier wave frequency of said information signal to be received via said coaxial cable is 360 MHz, and said error correction code is a Reed Solomon code of 4 bytes.

### Embodiment 116.

A receiving method with the features of embodiment 111 or 112, wherein a transmission method for transmitting signals to said wire transmission line is stipulated in the SMPTE 259M or SMPTE 292M standard, and said error correction code is a Reed Solomon code of 4 bytes.

### Embodiment 117.

A receiving method with the features of one of embodiments 111 to 116, wherein said error correction code comprises a Reed Solomon code and a parity bit added to every byte of said information signal, and after an error in said information signal is detected by using said parity bit, the error in said information signal is corrected by using said Reed Solomon code.

### Embodiment 118.

A receiving method with the features of one of embodiments 98 to 117, wherein in a transmission system for transmitting and receiving information signals of M bytes as one set information unit, a constant information unit is transmitted as N bytes (M > N, M and N are natural numbers).

### Embodiment 119.

A transmission system for transmitting signals between said transmission apparatus with the features of one of embodiments 1 to 40 and said receiving apparatus with the features of one of embodiments 62 to 97 via a transmission line.

### Embodiment 120.

A transmission system with the features of embodiment 119, wherein said transmission line is a coaxial cable.

### Embodiment 121.

A transmission system with the features of embodiment 120, wherein said coaxial cable has a length wherein a signal attenuation amount does not exceed 20 dB to 30 dB at half of the carrier wave frequency of said information signal, and said error correction code is a Reed Solomon code of 4 bytes.

### Embodiment 122.

A transmission system with the features of embodiment 120, wherein said coaxial cable is a 5C2V coaxial cable having a length of 300 m or less, the carrier wave frequency of said information signal to be received via said coaxial cable is 270 MHz, and said error correction code is a Reed Solomon code of 4 bytes.

### Embodiment 123.

A transmission system with the features of embodiment 120, wherein said coaxial cable is a 5C2V coaxial cable having a length of 250 m or less, the carrier wave frequency of said information signal to be received via said coaxial cable is 360 MHz, and said error correction code is a Reed Solomon code of 4 bytes.

### Embodiment 124.

A transmission system with the features of embodiment 120, wherein a transmission method for transmitting signals to said wire transmission line is stipulated in the SMPTE 259M or SMPTE 292M standard, and said error correction code is a Reed Solomon code of 4 bytes.

### Embodiment 125.

A transmission method for transmitting signals from a transmission side to a reception side via said transmission line by using a transmission method with the features of one of embodiments 41 to 61 and by using a receiving method with the features of one of embodiments 98 to 118.

### Embodiment 126.

A transmission system with the features of embodiment 125, wherein said transmission line is a coaxial cable.

### Embodiment 127.

A transmission method with the features of embodiment 126, wherein said coaxial cable has a length wherein a signal attenuation amount does not exceed 20 dB to 30 dB at half of the carrier wave frequency of said information signal, and said error correction code is a Reed Solomon code of 4 bytes.

### Embodiment 128.

A transmission method with the features of embodiment 126, wherein said coaxial cable is a 5C2V coaxial cable having a length of 300 m or less, the carrier wave frequency of said information signal to be received via said coaxial cable is 270 MHz, and said error correction code is a Reed Solomon code of 4 bytes.

### Embodiment 129.

A transmission method with the features of embodiments 126, wherein said coaxial cable is a 5C2V coaxial cable having a length of 250 m or less, the carrier wave frequency of said information signal to be received via said coaxial cable is 360 MHz, and said error correction code is a Reed Solomon code of 4 bytes. with the features of embodime

### Embodiment 130.

A transmission method with the features of embodiments 126, wherein a transmission method for transmitting signals to said wire transmission line is stipulated in the SMPTE 259M or SMPTE 292M standard, and said error correction code is a Reed Solomon code of 4 bytes.

## Claims

1. A transmission apparatus comprising:
- a compressing means (4) for compressing the information amount of an input information signal and outputting data in constant information units, wherein each of said constant information units has N ≥1 rows,
- an X-Y converting means (70) capable of collecting one or more of said constant information units to form a unit of predetermined size, wherein said unit of predetermined size has a first area of N rows in which actual information signals are located, and a second area of M ≥ 1 rows for locating redundant signals, wherein said X-Y converting means (70) being capable of locating at least a part of said actual information signal of the output signal of said compressing means (4) into said second area, if the information amount of said input information signal exceeds a predetermined information amount,
- a synchronizing signal adding means (13) for adding one synchronizing signal to the unit of predetermined size, and
- a transmitting means (6) for transmitting the output signal from said synchronizing signal adding means (13).
